# EUROPEAN PATENT APPLICATION

(11) **EP 1 480 104 A2**
(43) Date of publication of application: **24.11.2004**
(21) Application number: 04252990.9
(22) Date of filing: 21.05.2004
(51) Int. Cl.: G06F 1/00, H04N 1/00

(54) **Information processing apparatus entry information management method, certification function control method, a computer program and a computer readable storage medium**

(30) Priority: 22.05.2003 JP 2003145408; 29.05.2003 JP 2003152325; 10.05.2004 JP 2004140134; 10.05.2004 JP 2004140135
(71) Applicant: Ricoh Company, Ltd., Tokyo 143-8555 (JP)
(72) Inventor: Minato, Junichi, Yokohama-shi Kanagawa (JP)
(74) Representative: Leeming, John Gerard

(57) **Abstract**

An information processing apparatus (1010, 3001), an entry information management method and a certification function control method are disclosed for realizing compatibility between improvement and convenience of security functions. The information processing apparatus includes a restriction part restricting an operation available to a user based on a status of the user and a setting part setting the status. The information processing apparatus can manage one or more entry information elements (1001) and impose a restriction on user's manipulation on an entry information element. In addition, the information processing apparatus can allow a user to cancel use restriction on a program (3041, 3042, 3043, 3044, 3045) and the user to use the program.

## Description

The present invention generally relates to an information processing apparatus, an entry information management method and a certification function control method. More particularly, the present invention relates to an information processing apparatus and an entry information management method in which manipulations of a user on entry information can be restricted, and an information processing apparatus and a certification function control method in which one or more certification functions can be provided to one or more programs.

In recent years, an image processing apparatus, which is an embodiment of an information processing apparatus, accommodating individual device functions, such as a printer, a copier, a facsimile and a scanner, in a single housing (hereinafter called a multifunctional product) has been recognized. This multifunctional product includes a display part, a print part and an image formation part in a single housing together with four software items corresponding to the printer, the copier, the facsimile and the scanner. By switching the software items, the multifunctional product can work as any of the printer, the copier, the facsimile and the scanner. Japanese Laid-Open Patent Application No. 2002-084383 discloses an embodiment of the above-mentioned multifunctional product.

In such a multifunctional product, user information on users allowed to use the multifunctional product is managed as entry information. The entry information may include, for example, names, e-mail address, FAX numbers, passwords, user names, use restriction information and charge data.

The entry information managed in a multifunctional product is set to allow all users to view all information items of the entry information other than some information items such as passwords. On the other hand, the entry information managed in a multifunctional product is normally set to allow only a user administrator to edit information items of the entry information. Alternatively, the entry information managed in a multifunctional product may be set to allow all users to edit information items of the entry information. Japanese Laid-Open Patent Application No. 2000-015898 discloses an embodiment of a user information management method.

In conventional multifunctional products, entry information on all users is managed as address books, and access authority to the entry information (for example, permission of viewing or editing the entry information) is set for each address book. Consequently, the conventional multifunctional products do not allow the access authority to the entry information to be set in detail. It is noted that a user administrator is allowed to set the access authority to the entry information.

In recent years, multifunctional products are required to have advanced security functions. Thus, it is undesirable to allow to set access authority to entry information for a whole address book from the viewpoint of compatibility between robust security functions and friendly manipulation to the entry information. Also, conventional multifunctional products allow only user administrators to set access authority to the entry information. That can be considered to be problematic from the viewpoint of improving friendly manipulation of the entry information.

In addition, when a conventional multifunctional product operates as a printer, a copier, a facsimile or a scanner, the multifunctional product uses an authentication function to authenticate whether a user has authority to use the printer, the copier, the facsimile or the scanner, and uses a charge function to charge a fee. Japanese Laid-Open Patent Application No. 2002-288737 discloses an image processing system that a user can use when a card is set in a card reader thereof.

In such a conventional multifunctional product, it is necessary to set the authentication function and the charge function for the whole multifunctional product. For this reason, the conventional multifunctional product has difficult compatibility between good security and easy manipulation of the authentication and charge functions of the multifunctional product.

In general, a newer type or a newer version of multifunctional product is provided with more secure authentication and charge functions. In order to use new authentication and charge functions in a conventional multifunctional product, however, it is necessary to modify programs thereof. Thus, there is a problem in that such new authentication and charge functions cannot be easily added.

It is a general object of the present invention to provide an information processing apparatus, an entry information management method and a certification function control method in which one or more of the above-mentioned problems are eliminated.

A first more specific object of the present invention is to provide an information processing apparatus and an entry information management method that achieve compatibility of improvement of security functions and convenience of entry information.

A second more specific object of the present invention is to provide an information processing apparatus and a certification function control method that can realize secure and convenient certification functions and add a new certification function easily.

In order to achieve the above-mentioned objects, there is provided according to one aspect of the present invention an information processing apparatus, including: a restriction part restricting an operation available to a user on the information processing apparatus based on a status of the user; and a setting part setting the status of the user.

In an embodiment of the invention, the information processing apparatus may manage one or more entry information elements and impose a restriction on user's manipulation on an entry information element, the setting part may includes a first registration function registering manipulation authority to allow a manipulation on an entry information element and setting authority to allow setting of the manipulation authority in association with the entry information element and one or more users, and the restriction part may include a first restriction function restricting a manipulation of the users on the entry information element in accordance with the manipulation authority.

In an embodiment of the invention, the information processing apparatus may allow a user to cancel use restriction on a program and the user to use the program, the setting part may include a setting function associating one or more programs having use restriction with one or more certification unit to cancel the use restriction of the programs, and the restriction part may include a use function, when a user cancels use restriction of a program by using a certification unit associated with the program, allowing the user to use the program.

Additionally, there is provided according to another aspect of the invention a method of managing entry information for an information processing apparatus that manages one or more entry information elements and restricts a manipulation of one or more users on the entry information elements, the method including steps of: registering manipulation authority to allow a manipulation on an entry information element and setting authority to allow setting of the manipulation authority in association with the entry information element and one or more users; and restricting a manipulation of the users on the entry information element in accordance with the manipulation authority.

Additionally, there is provided according to another aspect of the invention a method of controlling a certification function for an information processing apparatus that allows a user to cancel use restriction on a program and the user to use the program, the method including steps of: associating one or more programs having use restriction with one or more certification unit to cancel the use restriction of the programs; and allowing, when a user cancels use restriction of a program by using a certification unit associated with the program, the user to use the program.

According to one aspect of the invention, since permission or denial of user's manipulations on an entry information element can be set in detail, it is possible to realize compatibility between improvement of security functions and convenience of the entry information element.

According to another aspect of the invention, it is possible to realize compatibility between security and convenience of certification functions and add a new certification function easily.

Other objects, features and advantages of the present invention will become more apparent from the following detailed description when read in conjunction with the accompanying drawings.
FIG. 1 shows a first exemplary data structure of an entry information element of a multifunctional product according to a first embodiment of the present invention;
FIG. 2 shows a second exemplary data structure of an entry information element of a multifunctional product according to the first embodiment;
FIG. 3 shows a third exemplary data structure of an entry information element of a multifunctional product according to the first embodiment;
FIG. 4 shows a fourth exemplary data structure of an entry information element of a multifunctional product according to the first embodiment;
FIG. 5 shows a fifth exemplary data structure of an entry information element of a multifunctional product according to the first embodiment;
FIG. 6 shows a sixth exemplary data structure of an entry information element of a multifunctional product according to the first embodiment;
FIG. 7 shows an exemplary functional structure of a multifunctional product according to the first embodiment;
FIG. 8 shows an exemplary hardware configuration of a multifunctional product according to the first embodiment;
FIG. 9 shows exemplary screens successively displayed on an operation panel of a multifunctional product according to the first embodiment;
FIG. 10 shows exemplary subsequent screens successively displayed on the operation panel of the multifunctional product according to the first embodiment;
FIG. 11 shows exemplary subsequent screens successively displayed on the operation panel of the multifunctional product according to the first embodiment;
FIG. 12 shows exemplary subsequent screens successively displayed on the operation panel of the multifunctional product according to the first embodiment;
FIG. 13 shows exemplary subsequent screens successively displayed on the operation panel of the multifunctional product according to the first embodiment;
FIG. 14 shows exemplary subsequent screens successively displayed on the operation panel of the multifunctional product according to the first embodiment;
FIG. 15 shows exemplary subsequent screens successively displayed on the operation panel of the multifunctional product according to the first embodiment;
FIG. 16 is a diagram for explaining an exemplary procedure of creating an entry information element according to the first embodiment;
FIG. 17 is another diagram for explaining the exemplary procedure of creating the entry information element according to the first embodiment;
FIG. 18 is another diagram for explaining the exemplary procedure of creating the entry information element according to the first embodiment;
FIG. 19 is another diagram for explaining the exemplary procedure of creating the entry information element according to the first embodiment;
FIG. 20 shows other exemplary screens successively displayed on an operation panel of a multifunctional product according to the first embodiment;
FIG. 21 shows exemplary subsequent screens successively displayed on the operation panel of the multifunctional product according to the first embodiment;
FIG. 22 shows exemplary subsequent screens successively displayed on the operation panel of the multifunctional product according to the first embodiment;
FIG. 23 is a diagram for explaining another exemplary procedure of creating an entry information element according to the first embodiment;
FIG. 24 is another diagram for explaining the exemplary procedure of creating the entry information element according to the first embodiment;
FIG. 25 shows exemplary screens for authenticating a user administrator and a user successively displayed on an operation panel in a case where certification of a user administrator and a user is performed;
FIG. 26 shows exemplary subsequent screens successively displayed on the operation panel in the case of FIG. 25;
FIG. 27 shows exemplary screens successively displayed on an operation panel in a case where certification of a user administrator is performed and certification of a user is not performed;
FIG. 28 shows exemplary subsequent screens successively displayed on the operation panel in the case of FIG. 27;
FIG. 29 shows exemplary screens successively displayed on an operation panel in a case where certification of a user is performed and certification of a user administrator is not performed;
FIG. 30 shows exemplary subsequent screens successively displayed on the operation panel in the case of FIG. 29;
FIG. 31A shows an exemplary entry information element in a case where a user has viewing authority or editing authority;
FIG. 31B shows an exemplary entry information element in a case where a user does not have viewing authority or editing authority;
FIG. 32 is a diagram for explaining a procedure of displaying an address book according to the first embodiment;
FIG. 33 is a sequence diagram of an exemplary procedure of creating an entry information element according to the first embodiment;
FIG. 34 shows a seventh exemplary data structure of an entry information element of a multifunctional product according to the first embodiment;
FIG. 35 shows a table representing an exemplary policy to define manipulations corresponding to various kinds of authority according to the first embodiment;
FIG. 36 shows a table representing an exemplary policy allowed to set owner authority to a user according to a variation of the first embodiment;
FIG. 37 shows an eighth exemplary data structure of an entry information element of a multifunctional product according to the first embodiment;
FIG. 38 shows an exemplary screen to set viewing authority, editing authority, deleting authority and full control authority according to the first embodiment;
FIG. 39 shows exemplary screens successively displayed on an operation panel of a multifunctional product according to the variation of the first embodiment;
FIG. 40 shows exemplary subsequent screens successively displayed on the operation panel of the multifunctional product according to the variation of the first embodiment;
FIG. 41 shows exemplary subsequent screens successively displayed on the operation panel of the multifunctional product according to the variation of the first embodiment;
FIG. 42 shows exemplary subsequent screens successively displayed on the operation panel of the multifunctional product according to the variation of the first embodiment;
FIG. 43 shows exemplary subsequent screens successively displayed on the operation panel of the multifunctional product according to the variation of the first embodiment;
FIG. 44 shows an exemplary screen for registering/changing certification protection information according to the variation of the first embodiment;
FIG. 45 shows exemplary access rules to an entry information element according to the variation of the first embodiment;
FIGS. 46A and 46B show exemplary manipulation authority on the personal data or the management data depending on validity of a user administrator according to the variation of the first embodiment;
FIG. 47 shows an exemplary functional structure of a multifunctional product according to a second embodiment of the present invention;
FIG. 48 shows an exemplary hardware configuration of a multifunctional product according to the second embodiment;
FIG. 49 is a diagram for explaining an exemplary certification function control method according to the second embodiment;
FIG. 50 shows an exemplary certification and charge setting table according to the second embodiment;
FIG. 51 shows an exemplary data structure of an entry information element of a multifunctional product according to the second embodiment;
FIG. 52 shows an exemplary user certification management screen according to the second embodiment;
FIG. 53 show exemplary screens successively displayed in an operation panel of a multifunctional product according to the second embodiment;
FIG. 54 show exemplary subsequent screens successively displayed in the operation panel of the multifunctional product according to the second embodiment;
FIG. 55 shows an exemplary certification screen corresponding to a case where management via user codes is set as certification means and charge means of a copier application according to the second embodiment;
FIG. 56 shows an exemplary certification screen corresponding to a case where management via a coin rack is set as certification means and charge means of the copier application according to the second embodiment;
FIG. 57 shows an exemplary certification screen corresponding to a case where management using a plurality of means is set as certification means and charge means of the copier application according to the second embodiment;
FIG. 58 shows an exemplary certification screen corresponding to a case where management using a plurality of means is set as certification means and charge means of the copier application according to the second embodiment;
FIG. 59 is a sequence diagram of an exemplary operation of a certification module and a charge module according to the second embodiment;
FIG. 60 is a sequence diagram of a first exemplary use restriction cancel operation of a multifunctional product according to the second embodiment;
FIG. 61 is a sequence diagram of a second exemplary use restriction cancel operation of a multifunctional product according to the second embodiment;
FIG. 62 is a sequence diagram of a third exemplary use restriction cancel operation of a multifunctional product according to the second embodiment;
FIG. 63 is a sequence diagram of a fourth exemplary use restriction cancel operation of a multifunctional product according to the second embodiment;
FIG. 64 is a sequence diagram of a first exemplary charge operation of a multifunctional product according to the second embodiment;
FIG. 65 is a sequence diagram of a second exemplary charge operation of a multifunctional product according to the second embodiment;
FIG. 66 is a sequence diagram of a third exemplary charge operation of a multifunctional product according to the second embodiment;
FIG. 67 is a sequence diagram of a fourth exemplary charge operation of a multifunctional product according to the second embodiment;
FIG. 68 is a sequence diagram of a fifth exemplary charge operation of a multifunctional product according to the second embodiment;
FIG. 69 is a sequence diagram of an exemplary use restriction cancel operation for a case where use restriction is not cancelled;
FIG. 70 shows an exemplary use restriction screen displayed on an operation panel of a multifunctional product according to the second embodiment;
FIG. 71 is a sequence diagram of another exemplary use restriction cancel operation for the case where use restriction is not cancelled;
FIG. 72 is a sequence diagram of another exemplary use restriction cancel operation through remote manipulation according to the second embodiment;
FIG. 73 is a sequence diagram of an exemplary use restriction cancel operation through remote manipulation wherein measures against DoS attack are devised;
FIG. 74 is a sequence diagram of another exemplary use restriction canceling operation through remote manipulation according to the second embodiment; and
FIG. 75 is a sequence diagram of an exemplary logout operation of a multifunctional product according to the second embodiment.

In the following, preferred embodiments of the present invention will be described with reference to the accompanying drawings. In these embodiments, a multifunctional product is described as an embodiment of an information processing apparatus according to the present invention. However, the present invention is not limited to the embodiments, and may be embodied as any information processing apparatus capable of restricting user's manipulations on entry information.

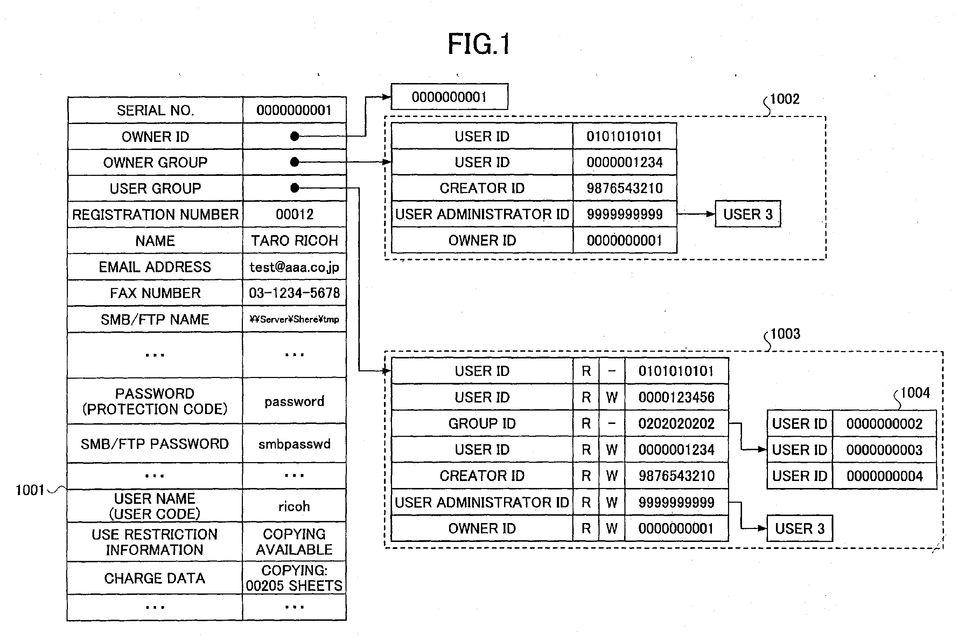

A description is given, with reference to FIG. 1 through FIG. 46, of a multifunctional product according to a first embodiment of the present invention.

First, some data structures of entry information of a multifunctional product that restricts user's manipulations on the entry information are described to facilitate understanding of the present invention.

FIG. 1 shows a first exemplary data structure of an entry information element of a multifunctional product according to the first embodiment.

Referring to FIG. 1, an entry information element 1001 represents information on a single user for a multifunctional product. Specifically, the entry information element 1001 includes information items such as a serial number, an owner ID, an owner group 1002, a user group 1003, a registration number, a name, an email address, a FAX number, an SMB/FTP (Server Message Block/File Transfer Protocol) name, a password, an SMB/FTP password, a user name, use restriction information and charge data.

The owner group 1002 includes one or more users having setting authority. The term "setting authority" indicates permission or denial of setting various types of manipulations such as addition of a user to the user group 1003, deletion of a user from the user group 1003, viewing of a user on the entry information element 1001 and editing of a user on the entry information element 1001. Here, a user having the setting authority can add and delete a user to/from the owner group 1002. In the user group 1003, one or more users having manipulation authority are registered. The term "manipulation authority" indicates permission or denial of viewing, editing and other manipulations on the entry information element 1001.

In the user group 1003 in FIG. 1, viewing authority over a viewing manipulation is represented as "R", and editing authority over an editing manipulation is represented as "W". Here, the user group 1003 may include not only a user but also a group 1004 representing a collection of one or more users.

An "owner ID" of the owner group 1002 and the user group 1003 is an identifier of the user represented by the entry information element 1001. A "user administrator ID" is an identifier of a user that manages the entry information element 1001. A "creator ID" is an identifier of a user that has created the entry information element 1001. A "user ID" is an identifier of a user.

The use restriction information of the entry information element 1001 includes permission or denial, for example, of monochrome copying, two-color copying, full-color copying, monochrome printing, single-color printing, two-color printing, full-color printing, FAX transmission, scanner reading, document box printing, network accessing and other operations.

In the entry information element 1001 in FIG. 1, the owner group 1002 and the user group 3 are set for the whole entry information element 1001. In other words, manipulation authority and setting authority are determined as access rules for the whole entry information element 1001.

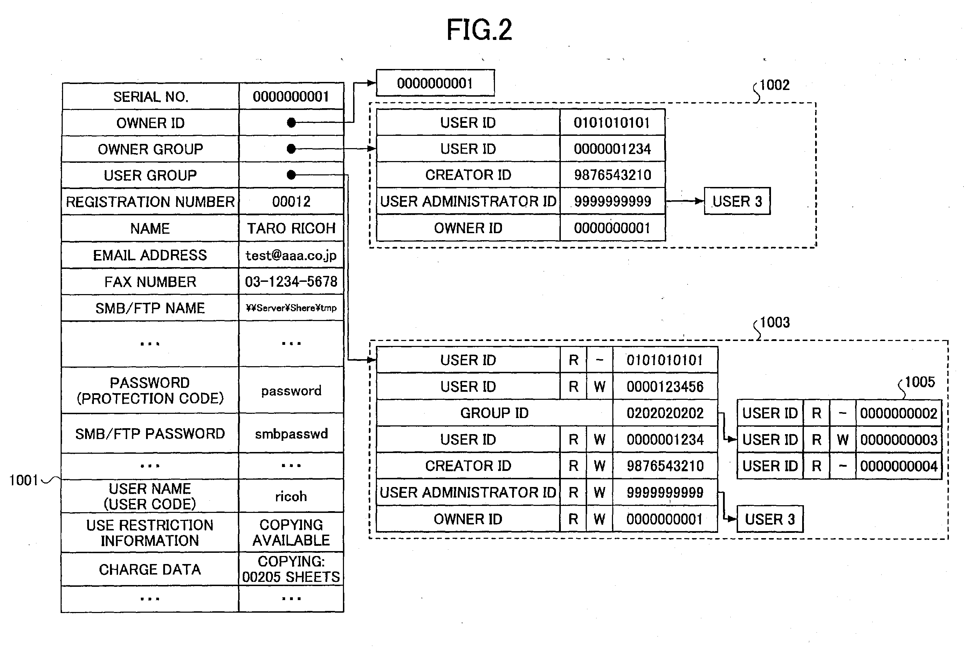

FIG. 2 shows a second exemplary data structure of an entry information element of a multifunctional product according to the first embodiment. In FIG. 2, the entry information element 1001 is the same as that in FIG. 1 except for a portion of the user group 1003, and the description of the same portion is omitted.

In the user group 1003 in FIG. 1, viewing authority and editing authority of the group 1004, which represents a collection of one or more users, are set for the whole group 1004. On the other hand, in the user group 1003 in FIG. 2, the viewing authority and the editing authority of a group 1005, which represents a collection of one or more users, are set for each user of the group 1005. In other words, according to the entry information element 1005 in FIG. 2, the viewing authority and the editing authority can be set for each user of the group 1005. Thus, according to in the second exemplary entry information element 1001, access rules can be defined in further detail, compared to the first exemplary entry information element 1001 in FIG. 1.

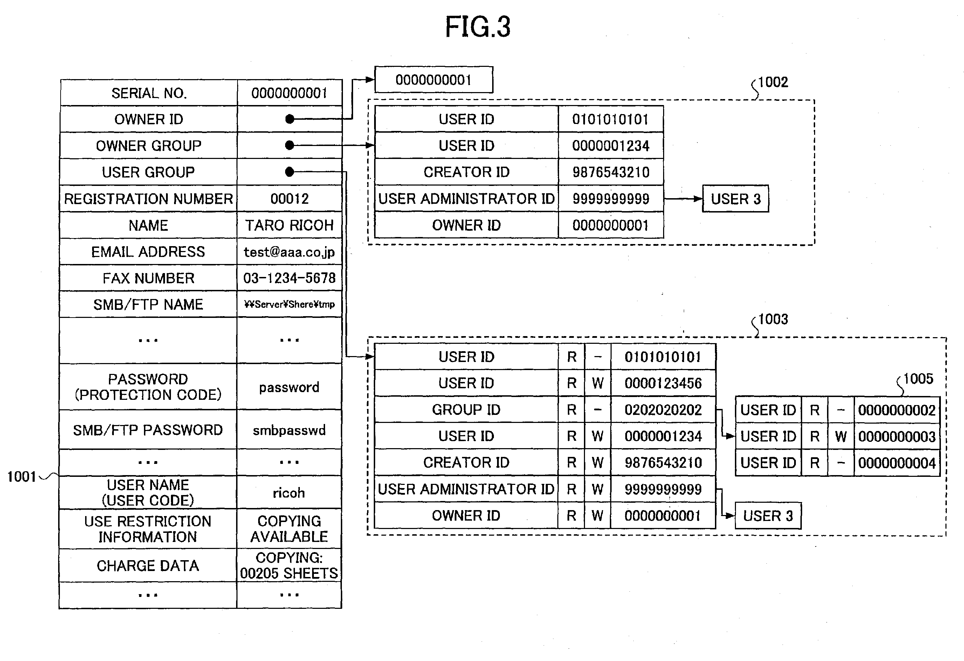

FIG. 3 shows a third exemplary data structure of an entry information element of a multifunctional product according to the first embodiment. In FIG. 3, the entry information element 1005 is the same as those in FIG. 1 and FIG. 2 except for a portion of the user group 1003, and the description of the same portion is omitted. In the user group 1003 in FIG. 1, the viewing authority and the editing authority is set for the whole group 1004 representing a collection of one or more users. Also, in the user group 1003 in FIG. 2, the viewing authority and the editing authority are set for each user of the group 1005.

On the other hand, in the user group 1003 in FIG. 3, the viewing authority and the editing authority are set for not only the whole group 1005 but also each user of the group 1005. In the user group 1003 in FIG. 3, since the viewing authority and the editing authority can be set for the whole group 1005, it is possible to roughly set access rules. Additionally, since the viewing authority and the editing authority can be set for each user of the group 1005, it is possible to set access rules in detail.

Thus, the entry information element 1001 in FIG. 3 makes it easy to set the user group 1003 by setting the viewing authority and the editing authority for the whole group 1005. In addition, the entry information element 1001 in FIG. 3 makes it possible to set access rules in detail by setting the viewing authority and the editing authority for each user of the group 1005. Here, when the entry information element 1001 in FIG. 3 is used, it is necessary to set access rules in the user group 1003 in advance for cases where the first viewing and editing authority set for the whole group 1005 is inconsistent with the second viewing and editing authority set for each user of the group 1005.

In these cases, the access rules may be defined to take OR between the first viewing and editing authority and the second viewing and editing authority. In another embodiment, the access rules may be defined to take AND between the first viewing and editing authority and the second viewing and editing authority. In another embodiment, the access rules may be defined in such a way that the first viewing and editing authority has priority over the second viewing and editing authority vice versa.

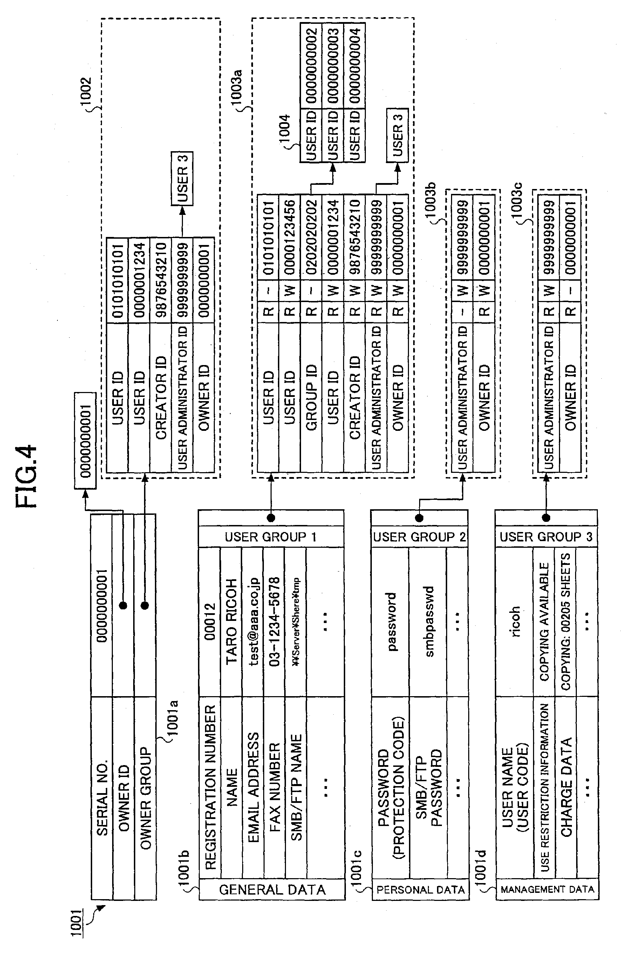

FIG. 4 shows a fourth exemplary data structure of an entry information element of a multifunctional product according to the first embodiment. In the following, the description of the same parts as those of FIG. 1 through FIG. 3 is omitted. Referring to FIG. 4, entry information portions 1001a through 1001d represent information on a single user for a multifunctional product. These entry information portions 1001a through 1001d are configured by classifying contents of the entry information element 1001 in FIG. 1 through FIG. 3.

Specifically, the entry information portion 1001a includes items such as a serial number, an owner ID and an owner group 1002. The entry information portion 1001b includes items such as a registration number, a name, an email address, a FAX number, an SMB/FTP name and a user group 1003a. The entry information portion 1001c includes items such as a password, an SMB/FTP password and a user group 1003b. The entry information portion 1001d includes items such as a user name, use restriction information, charge data and a user group 1003c.

The entry information portion 1001b is a group of items of the entry information element 1001 used by applications, and includes items, such as an email address and a FAX number, as general data. The entry information portion 1001c is configured from a group of items of the entry information 1001 that should be concealed from other users, and includes items, such as a password and an SMB/FTP password, as personal data. The entry information portion 1001d is configured from a group of items of the entry information element 1001 used by a user administrator, and includes items, such as a user name, use restriction information and charge data, as management data.

In the user group 1003a, a user having manipulation authority on the entry information portion 1001b is registered. The user registered in the user group 1003a is allowed to view and edit the entry information portion 1001b, depending on the granted manipulation authority on the entry information portion 1001b.

In the user group 1003b, a user having manipulation authority on the entry information portion 1001c is registered. The user registered in the user group 1003b is allowed to view and edit the entry information portion 1001c, depending on the granted manipulation authority on the entry information portion 1001c.

In the user group 1003c, a user having manipulation authority on the entry information portion 1001c is registered. The user registered in the user group 1003c is allowed to view and edit the entry information portion 1001d, depending on the granted manipulation authority on the entry information portion 1001d.

In the entry information element 1001 shown in FIG. 4, an owner group 1002 is set for the entry information portion 1001a. Also, in the entry information element 1001, user groups 1003a through 1003c are provided to the entry information portions 1001b through 1001d, respectively. In other words, access rules to restrict user's manipulation on the entry information element 1001 can be defined for each information item portion (for each of the entry information portions 1001a through 1001d in the illustration of FIG. 4) classified based on kinds of the individual items of the entry information element 1001.

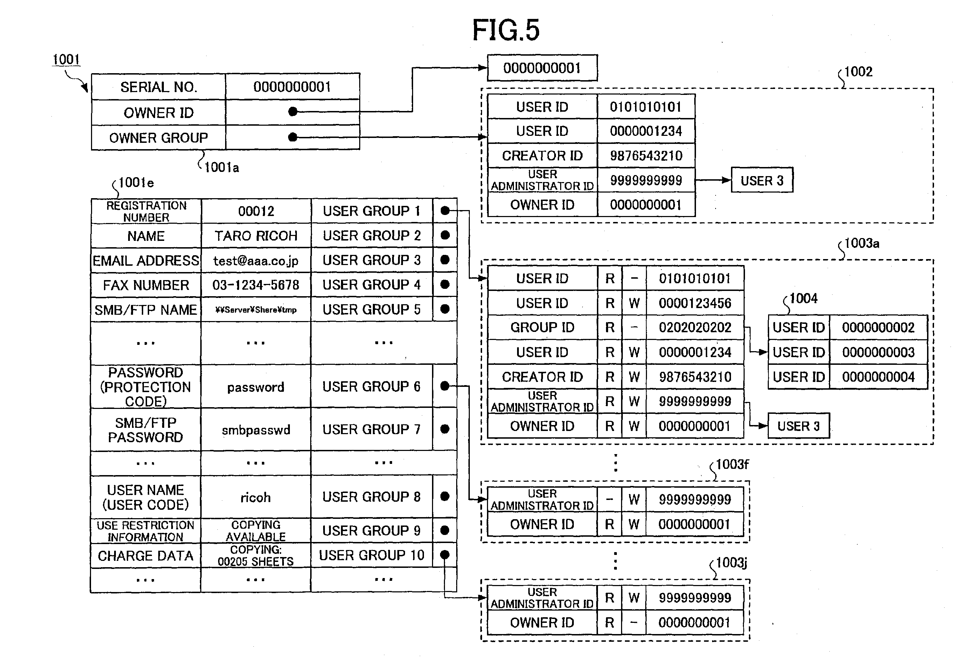

FIG. 5 shows a fifth exemplary data structure of an entry information element of a multifunctional product according to the first embodiment. In the following, the description of the same parts as those shown in FIG. 1 through FIG. 4 is omitted.

Referring to FIG. 5, entry information portions 1001a and 1001e represent information on a single user of a multifunctional product according to the first embodiment.

Specifically, the entry information portion 1001a includes items such as a serial number, an owner ID, and an owner group 1002. Also, the entry information portion 1001e includes items such as a registration number, a name, an email address, a FAX number, an SMB/FTP name, a password, an SMB/FTP password, a user name, use restriction information, charge data and respective user groups 1003a through 1003j.

In the user groups 1003a through 1003j, a user having manipulation authority on each item of the entry information portion 1001e is registered. For example, a user registered in the user group 1003a is allowed to view and edit the item "registration number" of the entry information portion 1001e corresponding to granted manipulation authority on the item "registration number".

In the entry information 1001 shown in FIG. 5, the owner group 1002 is set for the entry information portion 1001a. Also, the user groups 1003a through 1003j are set for each item of the entry information portion 1001e of the entry information element 1001 shown in FIG. 5. In other words, access rules to restrict user's manipulation on the entry information element 1001 can be set for each item of the entry information portion 1001e of the entry information element 1001.

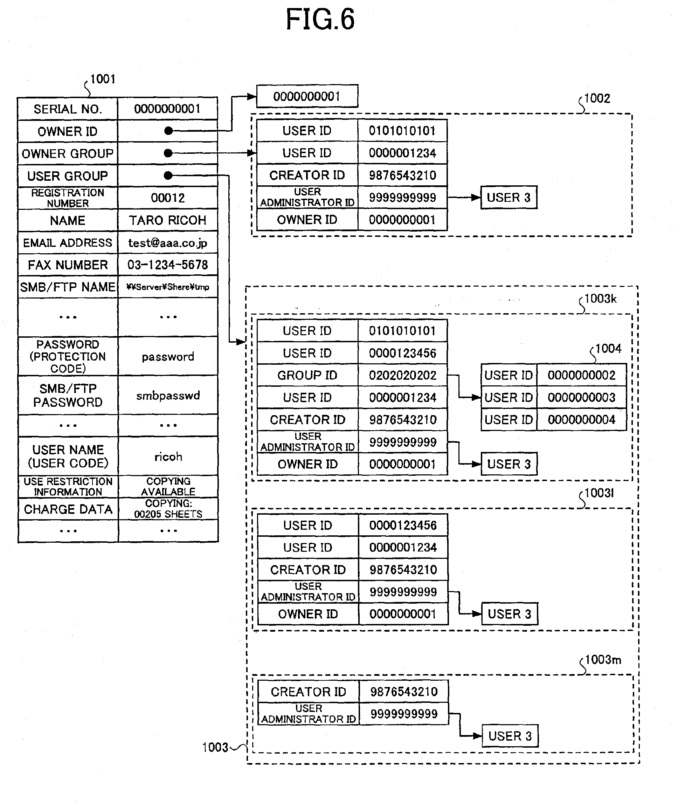

According to the user groups 1003 and 1003a through 1003j shown in FIG. 1 through FIG. 5, access rules are defined from the viewpoint of users. In another embodiment, however, the access rules may be defined from the viewpoint of functions. FIG. 6 shows a sixth exemplary data structure of an entry information element of a multifunctional product according to the first embodiment. The entry information element shown in FIG. 6 is the same as that shown in FIG. 1 except for a portion of the user group 1003, and the description of the same parts is omitted.

The user group 1003 includes a group 1003k of users having viewing authority on the entry information element 1001, a group 10031 of users having editing authority on the entry information element 1001, and a group 1003m of users having deleting authority on the entry information element 1001.

A user registered in the group 1003k is allowed to perform a viewing manipulation on the entry information element 1001. A user registered in the group 10031 is allowed to perform an editing manipulation on the entry information element 1. A user registered in the group 1003m is allowed to perform a deleting manipulation on the entry information element 1001.

In the entry information element 1001 shown in FIG. 6, an owner group 1002 and a user group 1003 are set for the whole entry information element 1001. Also, the user group 1003 shown in FIG. 6 is not set from the viewpoint of users. In other words, the groups 1003k through 1003m are set from the viewpoint of functions. Thus, if the groups 1003k through 1003m are defined, function-based access rules can be also reused for another entry information element 1001. As a result, it is possible to register the user group 1003 more efficiently. The same discussion with reference to FIG. 2 through FIG. 5 can be also applied to the entry information 1001 and the user group 1003 shown in FIG. 6.

According to the user groups 1003 and 1003a through 1003m shown in FIG. 1 through FIG. 6, manipulation authority on the entry information element 1001 and the entry information portions 1001a through 1001e can be set for each of the groups 1004 and 1005 composed of a single user or a collection of users. In another embodiment, however, the manipulation authority can be set for all users.

If the manipulation authority on the entry information element 1001 and the entry information portions 1001a through 1001e can be set for all the users, a smaller data capacity has only to be used to register all the users in the user groups 1003 and 1003a through 1003j. As a result, it is possible to save the memory capacity of the multifunctional product.

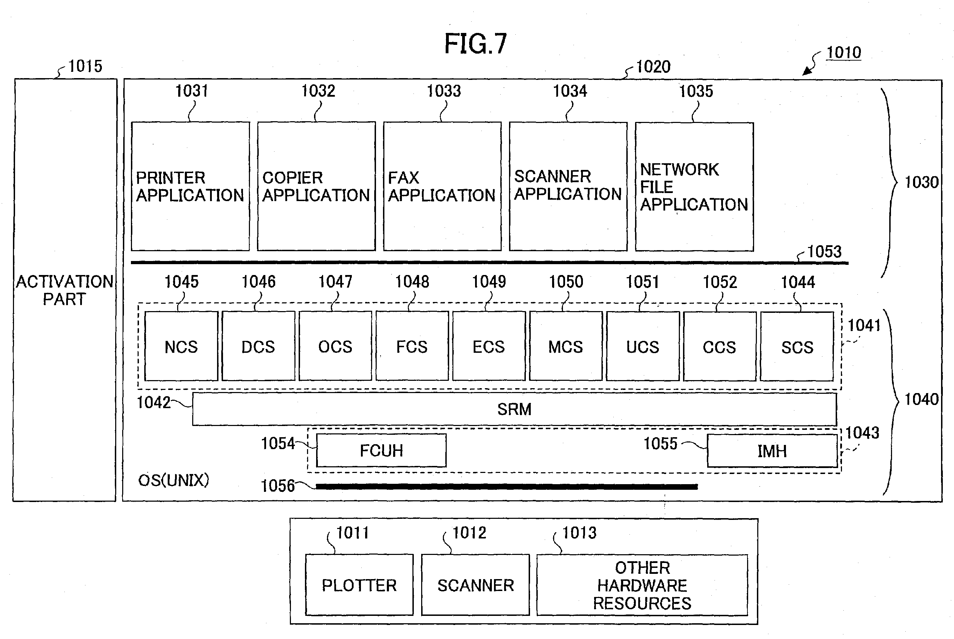

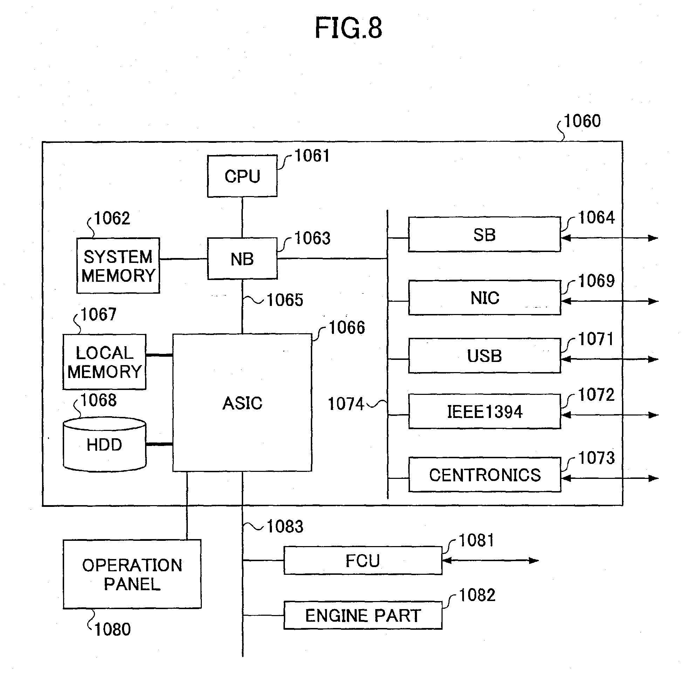

Exemplary structure and operation of a multifunctional product as an embodiment of an information processing apparatus to implement an entry information management method according to the present invention are described with reference to FIG. 7 and FIG. 8.

FIG. 7 shows an exemplary functional structure of a multifunctional product according to the first embodiment.

Referring to FIG. 7, a multifunctional product 1010 includes a plotter 1011, a scanner 1012, other hardware resources 1013 such as a facsimile, a software set 1020 and an activation part 1015.

The software set 1020 includes an application set 1030 that can be executed on an operating system (OS) such as UNIX (registered trademark) and a platform 1040.

The application set 1030 implements a printer function, a copier function, a facsimile function, a scanner function and others. The application set 1030 include a printer application 1031, a copier application 1032, a FAX application 1033, a scanner application 1034 and a network file application 1035. The platform 1040 includes a control service 1041 that interprets process requests from the application set 1030 and issues acquisition requests for hardware resources, a system resource manager (SRM) 1042 that manages the hardware resources and arbitrages the acquisition requests from the control service 1041, and a handler layer 1043 that, in response to the acquisition requests from SRM 1042, manages the hardware resources.

The control service 1041 includes one or more service modules such as a system control service (SCS) 1044, a network control service (NCS) 1045, a delivery control service (DCS) 1046, an operation panel control service (OCS) 1047, a FAX control service (FCS) 1048, an engine control service (ECS) 1049, a memory control service (MCS) 1050, a user information control service (UCS) 1051 and a certification control service (CCS) 1052.

Here, the platform 1040 is configured to have an application interface (API) 1053 that enables process requests to be received from the applications 1030 by using a predefined function. OS executes software items of the application set 1030 and the platform 1040 as processes in parallel. UCS 1051 stores user information in a storage device such as HDD (Hard Disk Drive), and manages the stored user information. For example, UCS 1051 stores an entry information element 1001 in a storage device such as HDD, and manages the stored entry information element 1001. CCS 1052 provides certification services to the application set 1030.

The handler layer 1043 includes a FAX control unit handler (FCUH) 1054 that manages a FAX control unit (FCU), and an image memory handler (IMH) 1055 that allocates processes to memory areas and manages the allocated memory areas. By using an engine I/F 1056 that enables process requests for the hardware resources to be transmitted by means of a predefined function, SRM 1042 and FCUH 1054 issue the process requests for the hardware resources.

In the platform 1040, the multifunctional product 1010 can collectively perform processes that individual applications require in common. For example, Japanese Laid-Open Patent Application No. 2002-084383 discloses the functional structure of the multifunctional product 1001 shown in FIG. 7 in detail. Next, an exemplary hardware configuration of the multifunctional product 1010 is described.

FIG. 8 shows an exemplary hardware configuration of a multifunctional product according to the first embodiment. Referring to FIG. 8, the multifunctional product 1010 includes a controller 1060, an operation panel 1080, FCU 1081 and an engine part 1082. The controller 1060 includes CPU (Central Processing Unit) 1061, a system memory 1062, a north bridge (NB) 1063, a south bridge (SB) 1064, ASIC (Application Specific Integrated Circuit) 1066, a local memory 1067, HDD 1068, a network interface card (NIC) 1069, a USB (Universal Serial Bus) device 1071, an IEEE1394 device 1072 and a centronics 1073. For example, Japanese Laid-Open Patent Application No. 2002-084383 discloses the hardware configuration of the multifunctional product 1010 shown in FIG. 8 in detail.

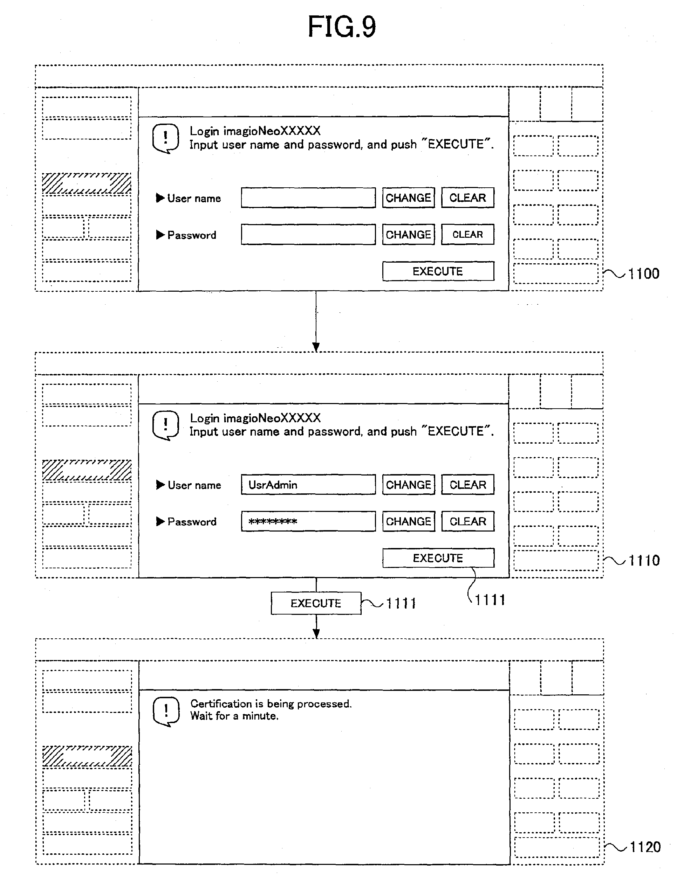

When the multifunctional product 1010 is powered ON, the activation part 1015 shown in FIG. 7 first starts the application set 1030 and the platform 1040 on OS. When the application set 1030 and the platform 1040 are activated, the multifunctional product 1010 displays a login screen 1100, as shown in FIG. 9, on the operation panel 1080.

FIG. 9 through FIG. 15 show a series of exemplary screens displayed on the operation panel 1080. An exemplary process for a user administrator to login the multifunctional product 1010 and register a new user in the multifunctional product 1010 is described with reference to FIG. 9 through FIG. 15. Referring to FIG. 9, after the user administrator inputs his/her user name and password in the login screen 1100, a screen 1110 is displayed. When the user administrator pushes an "EXECUTE" button 1111 on the screen 1110, the multifunctional product 1010 displays a screen 1120, which represents that certification is being processed, on the operation panel 1080.

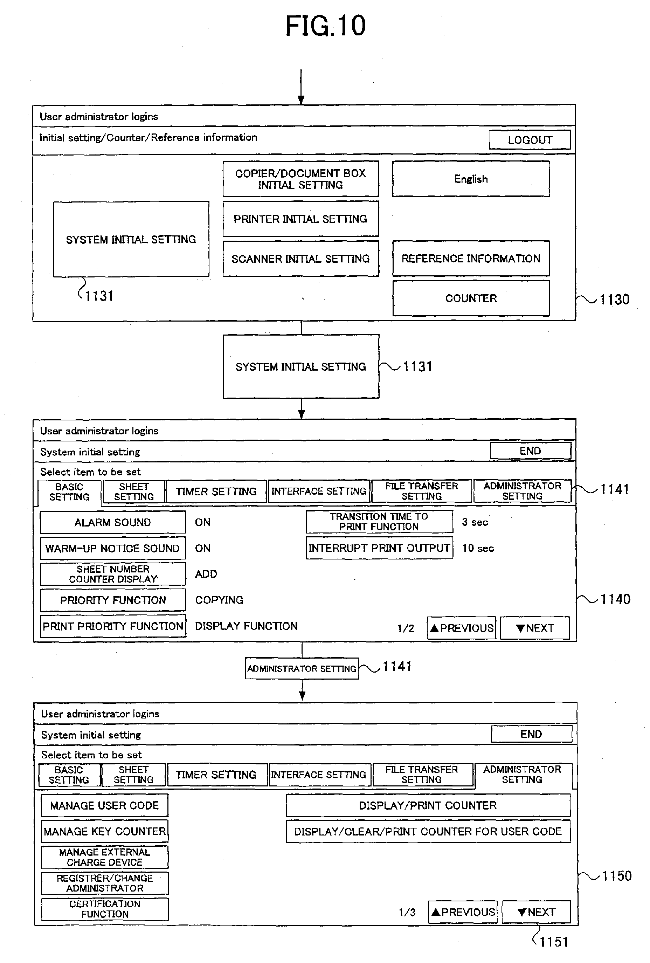

The multifunctional product 1010 uses CCS 1052 to authenticate the user name and password supplied via the screen 1110. Based upon the certification result, the multifunctional product 1010 determines that a user administrator has logged in, and then displays an initial setting screen 1130, as shown in FIG. 10, on the operation panel 1080. If the logging-in user is such a user administrator to be not charged, the multifunctional product 1010 displays the initial setting screen 1130 rather than a copying screen, for example. When the user administrator pushes an "SYSTEM INITIAL SETTING" button 1131 in the screen 1130, the multifunctional product 1010 displays a system initial setting screen 1140 on the operation panel 1080.

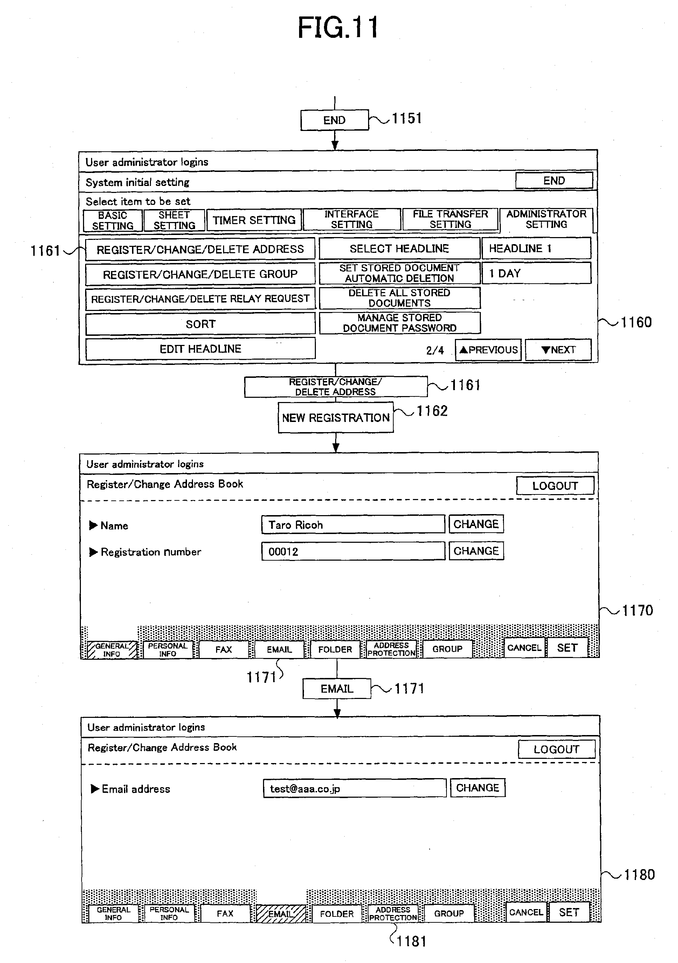

When the user administrator pushes an "ADMINISTRATOR SETTING" button 1141 in the screen 1140, the multifunctional product 1010 displays an administrator setting screen 1150 on the operation panel 1080. When the user administrator pushes a "NEXT" button 1151 in the screen 1150, the multifunctional product 1010 displays a screen 1160, as shown in FIG. 11, on the operation panel 1080. When the user administrator pushes a "REGISTER/CHANGE/DELETE ADDRESS" button 161 in the screen 1160, the multifunctional product 1010 displays a "NEW REGISTRATION" button 1162 on the operation panel 1080. When the user administrator pushes the "NEW REGISTRATION" button 1162, the multifunctional product 1010 displays a screen 1170 for registering/changing an address book on the operation panel 1080.

In the illustration, among some "REGISTER/CHANGE ADDRESS BOOK" screens, the multifunctional product 1010 displays the screen 1170 for registering/changing general information on the operation panel 1080. Name and registration number of a newly registered user supplied by the user administrator are shown in the screen 1170. The user administrator can use the screen 1170 to register the name and the registration number of the new user. When the user administrator pushes an "EMAIL" button 1171 in the screen 1170, the multifunctional product 1010 displays a screen 1180 for registering/changing email information on the operation panel 1080. An email address of the newly registered user is shown in the screen 1180. The user administrator can use the screen 1180 to register the email address of the newly registered user.

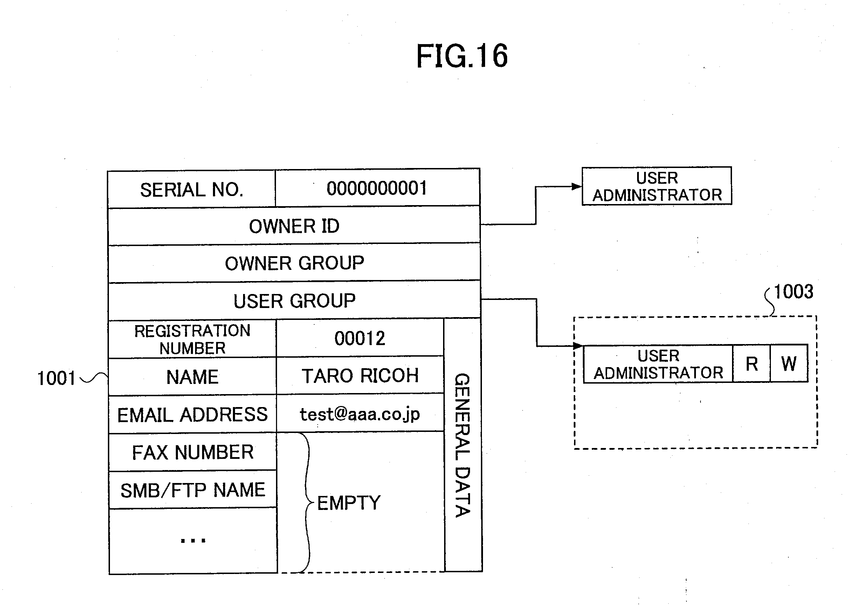

By using the screens 1170 and 1180, the user administrator can create an address book (entry information element) as illustrated in FIG. 16. FIG. 16 is a diagram for explaining an exemplary procedure of creating an entry information element. In the entry information element 1001 shown in FIG. 16, the name and the registration number supplied via the screen 1170, the email address supplied via the screen 1180, an owner ID representing the user administrator, and a user group 1003 are registered. Currently, no user is registered in the owner group of the entry information element 1001. Also, it is noted that the user administrator is registered in the user group 1003.

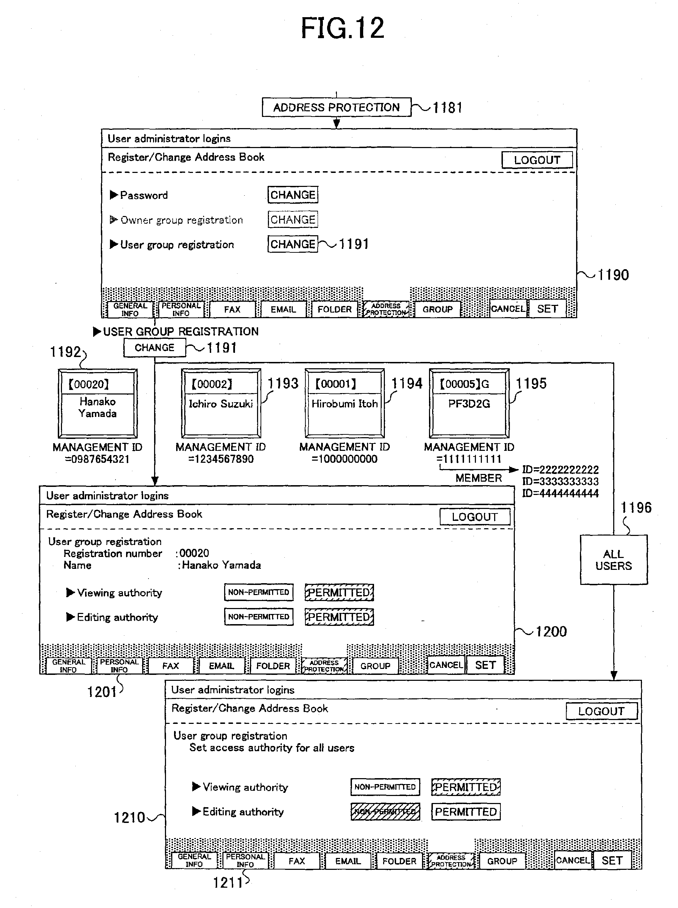

When the user administrator pushes an "ADDRESS PROTECTION" button 1181 in the screen 1180, the multifunctional product 1010 displays a screen 1190, as shown in FIG. 12, for registering/changing address protection information on the operation panel 1080. Since the user administrator is not currently registered in the owner group 1002, a "CHANGE" button for changing registered contents of the owner group 1002 is displayed in the screen 1190 in a (thinner-colored) status where the user administrator cannot select the "CHANGE" button.

When the user administrator pushes a "CHANGE" button 1191 for changing registered contents of the user group in the screen 1190, the multifunctional product 1010 displays a user group registration/change screen on the operation panel 1080. For example, buttons 192 through 194 representing individual users, a button 1195 representing a group composed of one or more users, and a button 1196 representing all users are displayed.

The user administrator can register a user, a group or all the users in the user group 1003 by pushing one of the buttons 1192 through 1196. Also, for each user, each group or all users registered in the user group 1003, the user administrator can use a screen 1200 or 1210 to set viewing authority or editing authority over the entry information element 1001 to be newly registered. The illustrated screen 1200 is for setting the viewing authority and the editing authority over the newly registered entry information element 1001 for each user or each group registered in the user group 1003. The illustrated screen 1210 is for setting the viewing authority and the editing authority over the newly registered entry information element 1001 for all users.

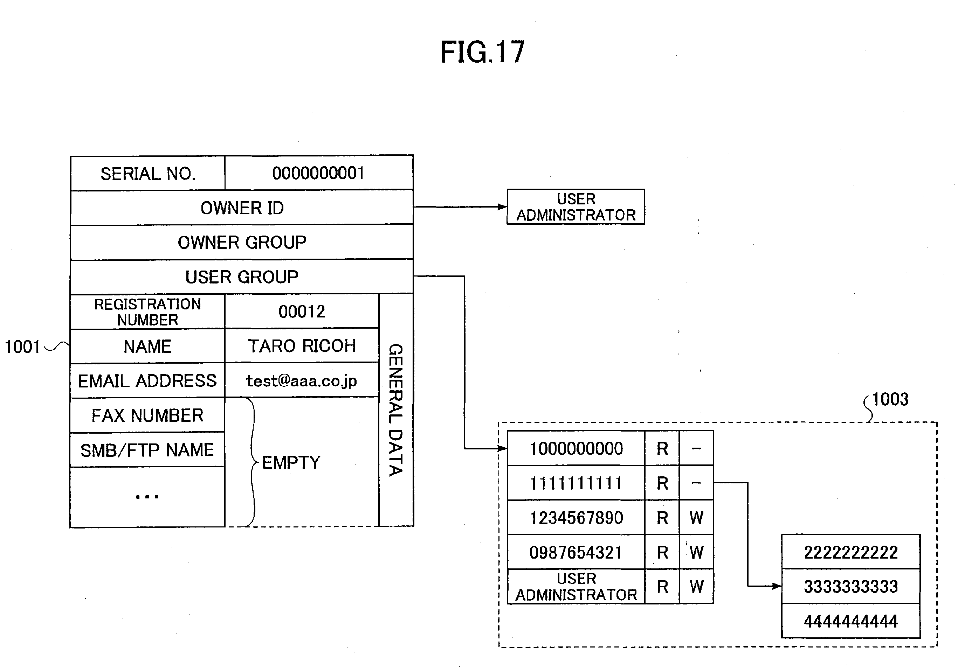

By using the screen 1200, the user administrator can create an entry information element 1001 as shown in FIG. 17 from the entry information 1001 as shown in FIG. 16. FIG. 17 is another diagram for explaining the procedure of creating an entry information element according to the first embodiment. In the entry information element 1001 shown in FIG. 17, the user administrator can register a user and a group in the user group 1003 by pushing the buttons 1192 through 1195 in FIG. 12, and additionally set the viewing authority and the editing authority over the entry information element 1001 for each of the registered users and groups.

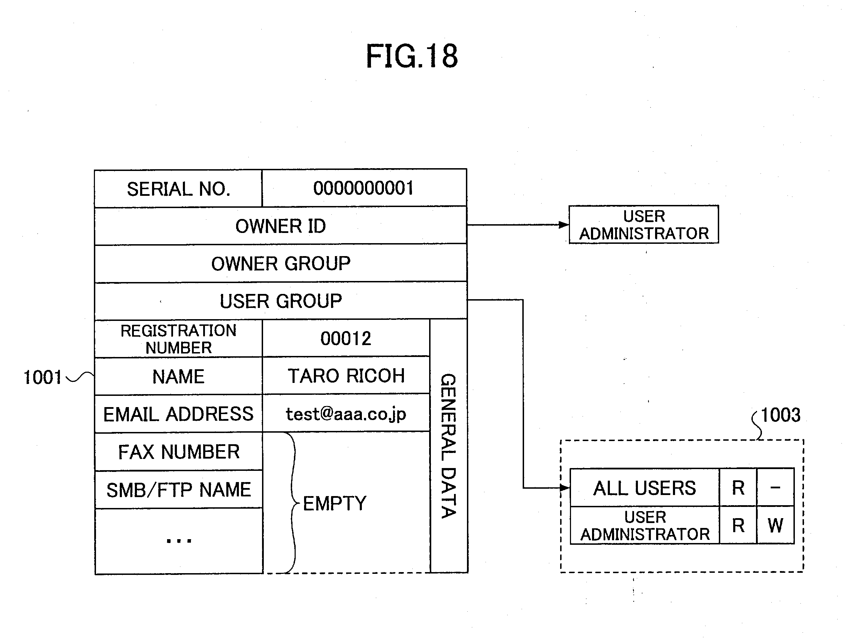

Also, by using the screen 1210, the user administrator can create an entry information element 1001 as shown in FIG. 18 from the entry information element 1001 as shown in FIG. 16. FIG. 18 is another diagram for explaining the procedure of creating an entry information element according to the first embodiment. In the entry information element 1001 shown in FIG. 18, the user administrator can register all users in the user group 1003 by pushing the button 1196, and set the viewing authority and the editing authority over the entry information element 1001 for all the users.

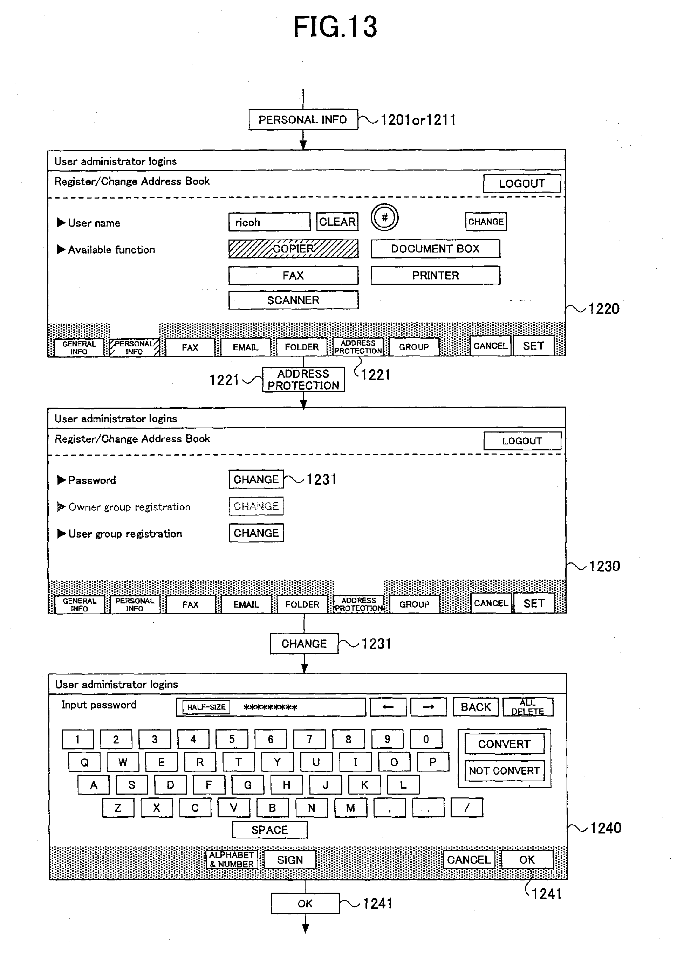

In this manner, the entry information element 1001, which is used as address information, has been registered. However, the following process is additionally required to register the entry information element 1001 on the single user. When the user administrator pushes a "PERSONAL INFO" button 1201 in the screen 1200 or a "PERSONAL INFO" button 1211 in the screen 1210, the multifunctional product 1010 displays a screen 1220, as shown in FIG. 13, for registering/changing personal information on the operation panel 1080. The illustrated screen 1220 is for inputting a user name of the user to be newly registered and a function available to the user. The user administrator can use the screen 1220 to register the user name and the available function of the user.

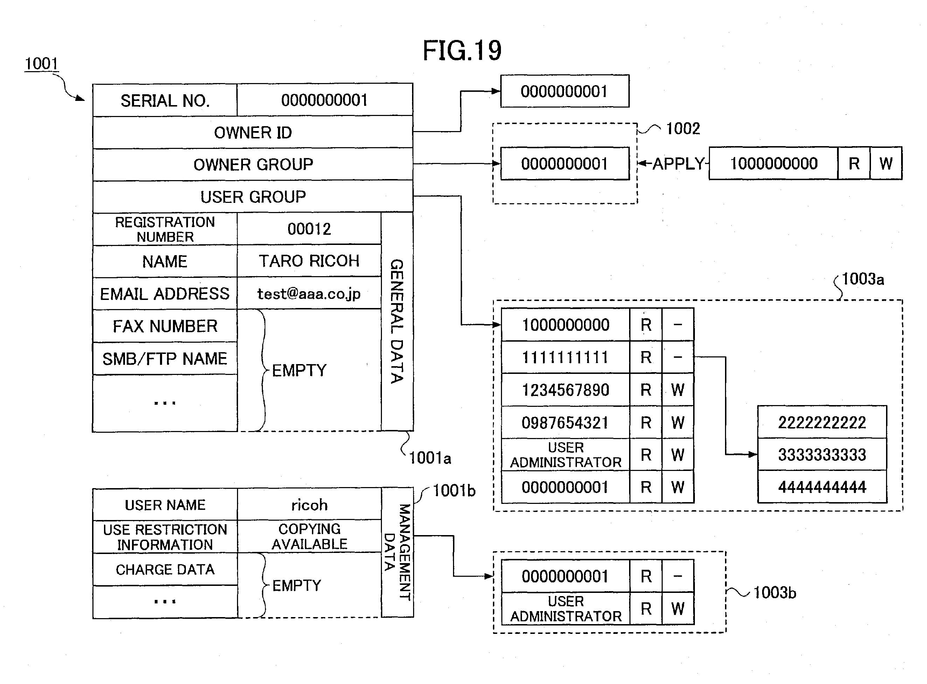

By using the screen 1220, the user administrator can create an entry information element 1001 as shown in FIG. 19 from the entry information element 1001 as shown in FIG. 17. FIG. 19 is a diagram for explaining the procedure of creating an entry information element according to the first embodiment. In the entry information element 1001 shown in FIG. 19, the user name and the available function supplied via the screen 1220 are set, and the available function is used as use restriction information.

Now, it is noted that the owner ID of the entry information element 1001 represents not the user administrator but the registered user being an owner of the entry information element 1001 (hereinafter which is simply referred to as an owner). In other words, the owner of the entry information element 1001 is switched from the user administrator to the registered user. Also, the owner is automatically set to the owner group 1002 and the user groups 1003a and 1003b.

Then, when the user administrator pushes the "ADDRESS PROTECTION" button 1221 in the screen 1220, the multifunctional product 1010 displays a screen 1230 for registering/changing address protection information on the operation panel 1080. When the user administrator pushes a "CHANGE" button 1231 for changing the password, the multifunctional product 1010 displays a screen 1240 for registering/changing the password on the operation panel 1080. The user administrator uses a software keyboard displayed on the screen 1240 to input a temporary password, such as "password", and then pushes an "OK" button 1241.

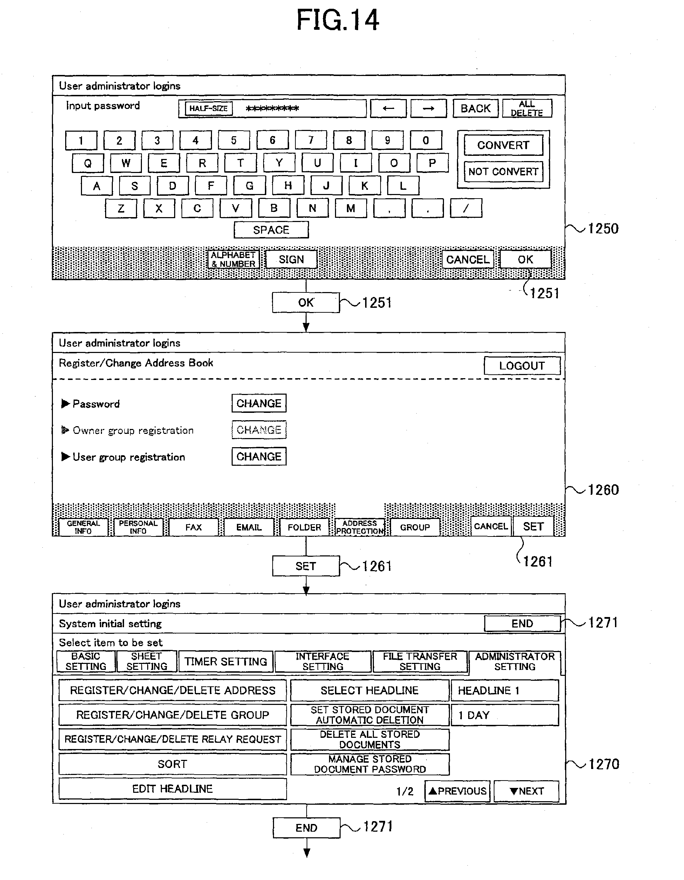

When the user administrator pushes the "OK" button 1241 in the screen 1240, the multifunctional product 1010 displays a screen 1250, as shown in FIG. 14, for inputting the same password one more time on the operation panel 1080. The user administrator uses the software keyboard in the screen 1250 to input the same password as that supplied via the screen 1240, and then pushes the "OK" button 1251. In this manner, if the password is input twice, it is possible to prevent password registration mistakes.

When the user administrator pushes the "OK" button 1251 in the screen 1250, the multifunctional product 1010 displays a screen 1260 for registering/changing address protection information on the operation panel 1080. When the user administrator pushes a "SET" button 1261 in the screen 1260, the multifunctional product 1010 registers the user information supplied via the screens 1170 through 1250 in the address book, and then displays a screen 1270 similar to the screen 1160 on the operation panel 1080.

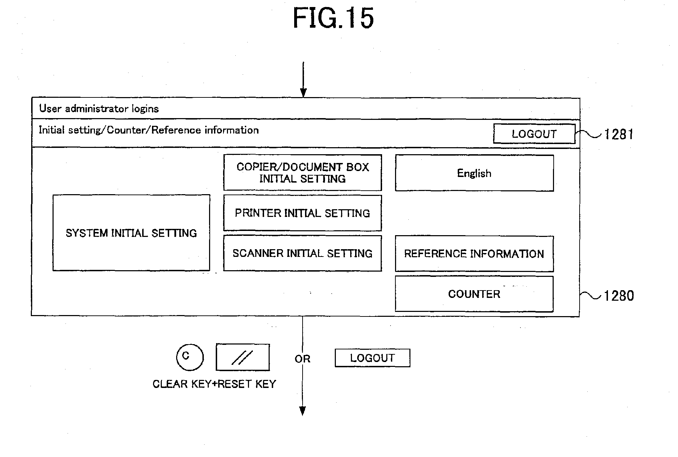

When the user administrator pushes an "END" button 1271 in the screen 1270, the multifunctional product 1010 displays an initial setting screen 1280, as shown in FIG. 15, on the operation panel 1080. When the user administrator pushes a "LOGOUT" button 1281 in the screen 1280, the multifunctional product 1010 performs a logout operation. Also, when a clear key or a reset key mounted in the multifunctional product 1010 is pushed, the multifunctional product 1010 performs the logout operation. Then, after the multifunctional product 1010 completes the logout operation, for example, the multifunctional product 1010 displays the login screen 1100 on the operation panel 1080 again.

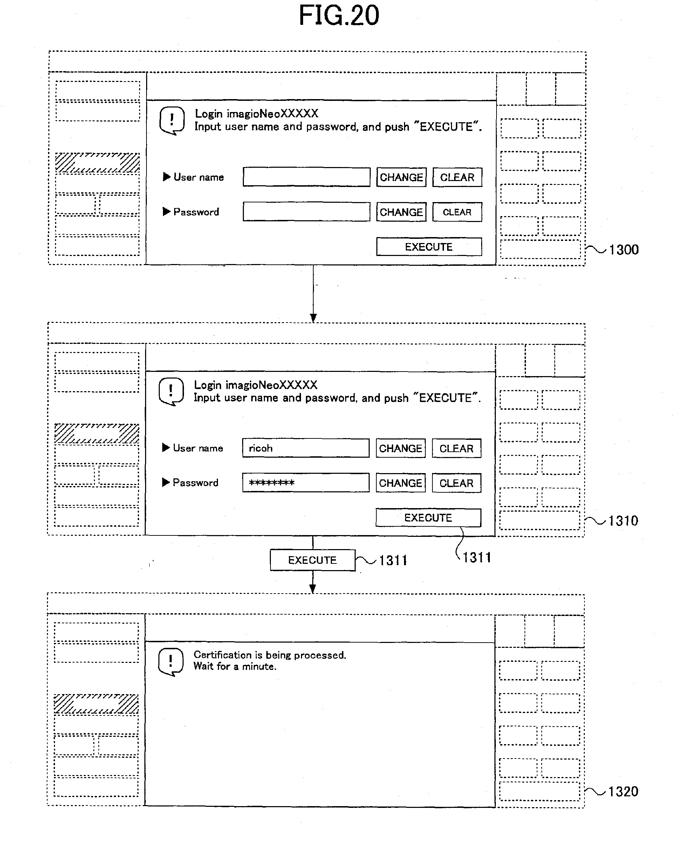

As the above manner, the user administrator can register the entry information element 1001. Then, a (common) user of the multifunctional product 10 performs the following operation on the entry information element 1001. FIG. 20 through FIG. 22 show a series of exemplary screens displayed on the operation panel 1080. Here, an operation for the owner of entry information element 1001 to login the multifunctional product 1010 and change the registered password is described. The multifunctional product 1010 displays a login screen 1300, as shown in FIG. 20, on the operation panel 1080. The user name and the password supplied by the owner via the screen 1300 are illustrated in a screen 1310. When the owner pushes an "EXECUTE" button 1311 in the screen 1310, the multifunctional product 1010 displays a screen 1320, indicating that certification is being processed, on the operation panel 1080.

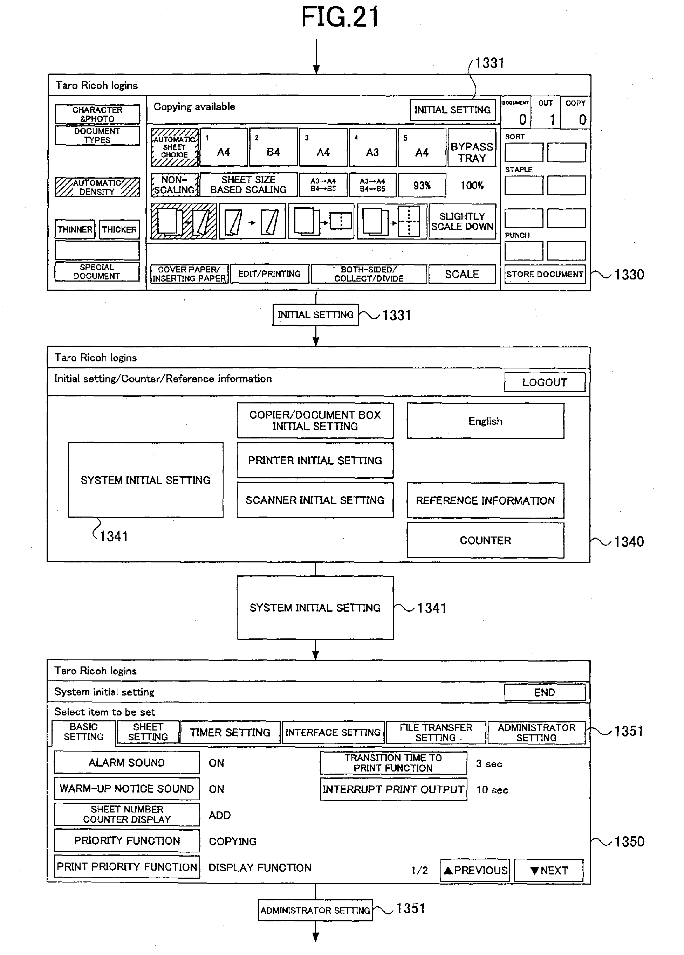

The multifunctional product 1010 uses CCS 1052 to authenticate the user name and the password supplied via the screen 1310. Based upon the certification result, the multifunctional product 1010 determines that the logging-in user is the owner of the entry information element 1001, and displays a function available to the user depending on use restriction information of the entry information element 1001 on the operation panel 1080. In the illustration, the multifunctional product 1010 displays a copying screen 1330, as shown in FIG. 21, on the operation panel 1080.

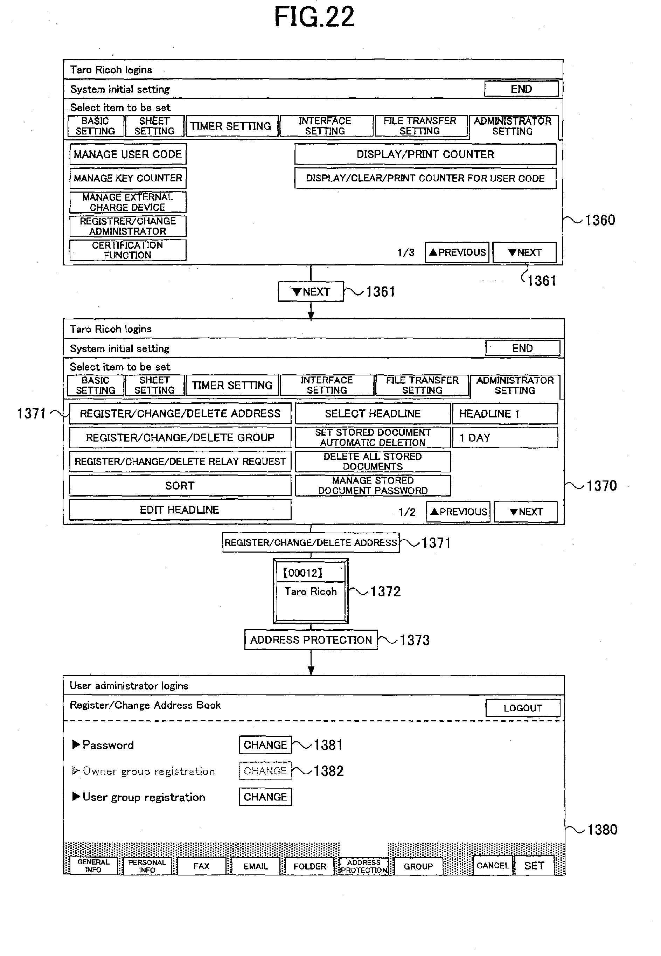

When the owner pushes an "INITIAL SETTING" button 1331 in the screen 1330, the multifunctional product 1010 displays an initial setting screen 1340 on the operation panel 1080. When the owner pushes a "SYSTEM INITIAL SETTING" button 1341 in the screen 1340, the multifunctional product 1010 displays a system initial setting screen 1350 on the operation panel 1080. When the owner pushes an "ADMINISTRATOR SETTING" button 1351 in the screen 1350, the multifunctional product 1010 displays an administrator setting screen 1360, as shown in FIG. 22, on the operation panel 1080.

When the owner pushes a "NEXT" button 1361 in the screen 1360, the multifunctional product 1010 displays a screen 1370 on the operation panel 1080. When the owner pushes a "REGISTER/CHANGE/DELETE ADDRESS BOOK" button 1371 in the screen 1370, the multifunctional product 1010 displays a button 1372 for selecting the entry information element 1001 on the owner on the operation panel 1080.

When the owner pushes the button 1372, the multifunctional product 1010 displays a default screen for registering/changing the address book on the operation panel 1080. Subsequently, when the owner pushes an "ADDRESS PROTECTION" button in the screen, the multifunctional product 1010 displays a screen 1380 for registering/changing address protection information on the operation panel 1080. Since the owner is registered in the owner group 1002, a "CHANGE" button 1382 for changing registered contents of the owner group 1002 is displayed in the screen 1380 in a status where the owner can push the "CHANGE" button 1382.

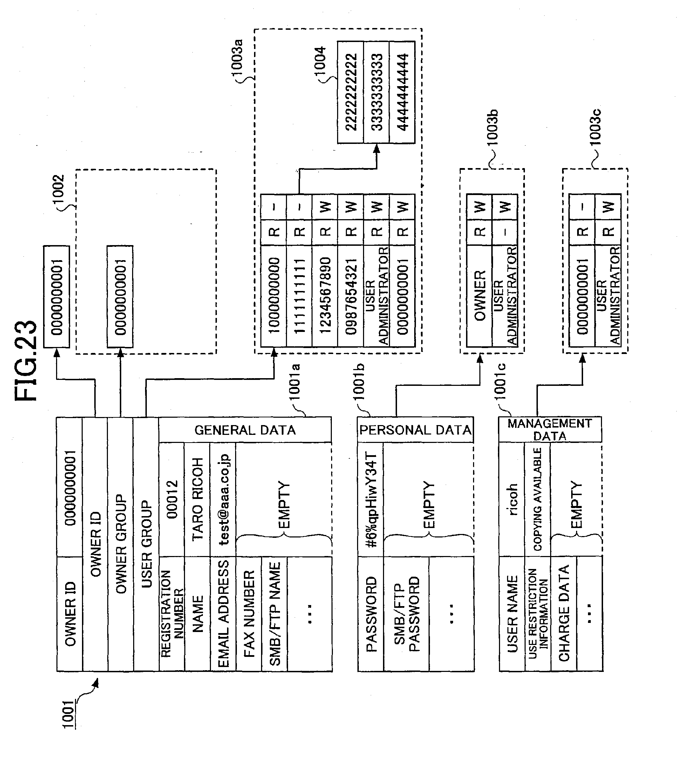

When the owner pushes a "CHANGE" button 1381 for changing the password in the screen 1380, the multifunctional product 1010 displays the screen 1240, as shown in FIG. 13, for registering/changing the password on the operation panel 1080. Here, the owner can register a new password as in the above-mentioned password registration executed by a user administrator. For example, when the owner sets "#6%qpHiwY34T" as the new password, the owner can create the entry information element 1001 as shown in FIG. 23. FIG. 23 is a diagram for explaining a procedure of creating an entry information element. Now, the input character string "#6%qpHiwY34T" is set as the password in the entry information portion 1001b shown in FIG. 23.

When the owner pushes a "CHANGE" button 1382 for changing owner group registration in the screen 1380, the multifunctional product 1010 displays a default screen for registering/changing the owner group 1002 on the operation panel 1080. Here, the owner can register/change the owner group 1002 as in the above-mentioned registration/change operation of the user group 1003 executed by a user administrator except for setting up of viewing authority and editing authority.

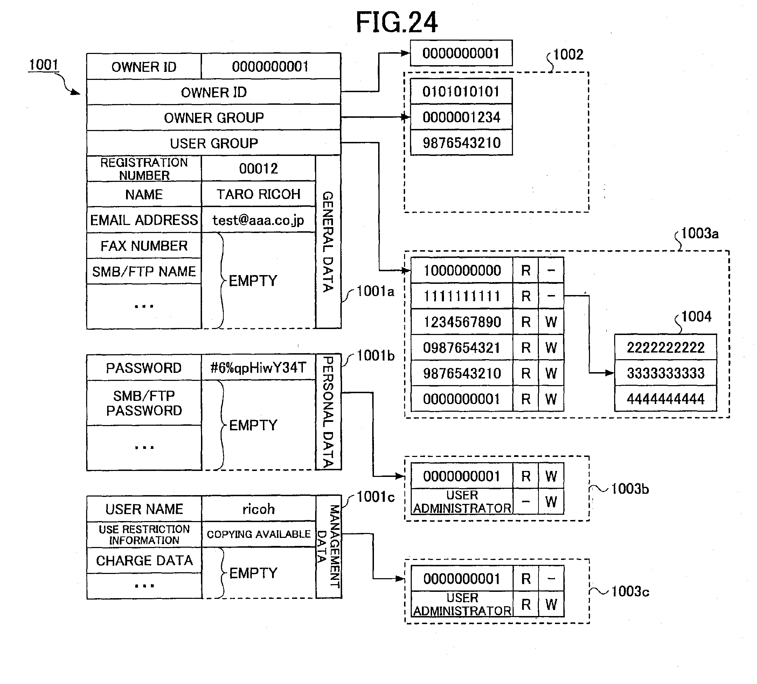

For example, when the owner registers users having IDs "1234567890" and "0987654321" in the owner group 1002, the owner can create the owner group 1002 as shown in FIG. 24. FIG. 24 is a diagram for explaining a procedure of creating an entry information element 1001. FIG. 24 shows that the users having the IDs "1234567890" and "0987654321" are registered in the owner group 1002.

In the above example, although the user administrator and the user (owner) are authenticated at start time of the above-mentioned operations, the authentication may be conducted at any necessary time. Alternatively, one of the user administrator and the user may not be authenticated.

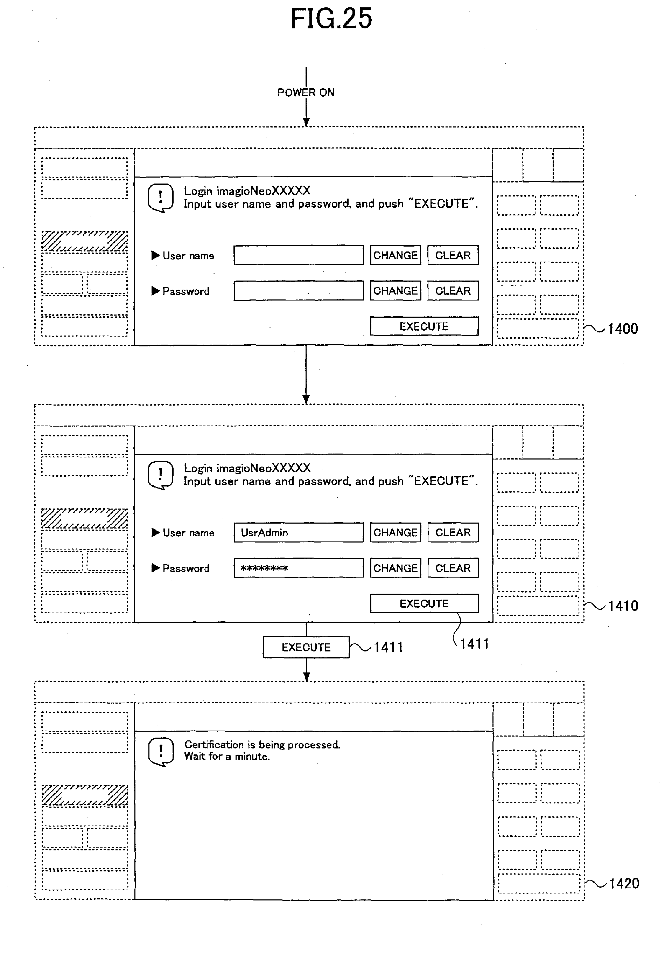

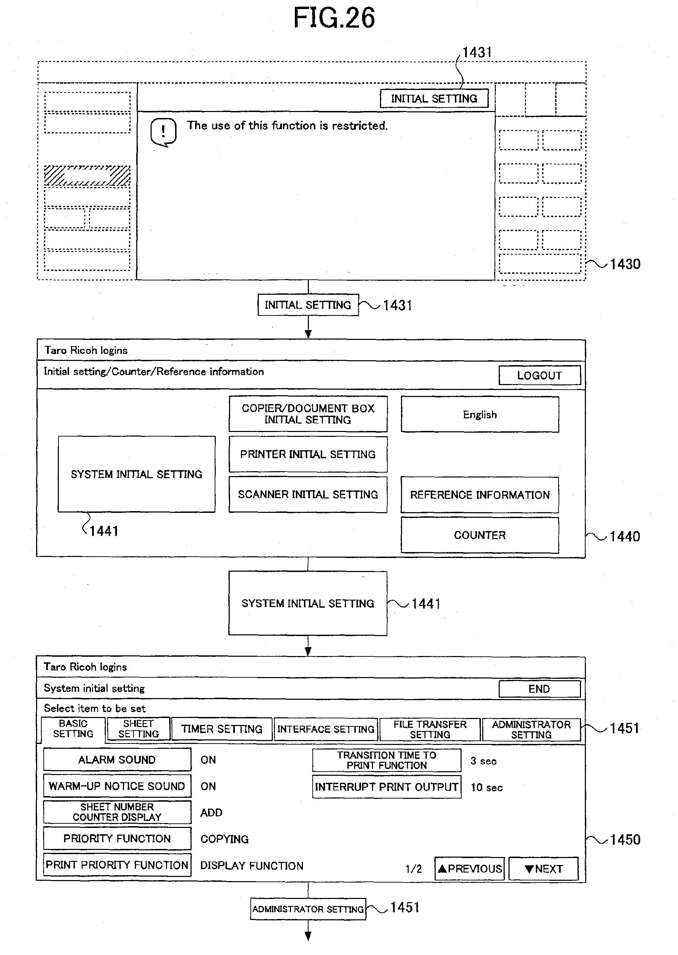

FIG. 25 and FIG. 26 show a series of exemplary screens displayed on the operation panel 1080 during a certification process of a user administrator or a user. The multifunctional product 1010 displays a login screen 1400 on the operation panel 1080. A screen 1410 shows that a user administrator has supplied a user name and a password via the screen 1400. When the user administrator pushes an "EXECUTE" button 1411 in the screen 1410, the multifunctional product 1010 displays a screen 1420, indicating that the certification is being processed, on the operation panel 1080.

The multifunctional product 1010 uses CCS 1052 to authenticate the user name and the password supplied via the screen 1410. Based upon the certification result, the multifunctional product 1010 determines that the logging-in user is the user administrator, and then displays a screen 1430, as shown in FIG. 26, indicating that the use of an application function is restricted, on the operation panel 1080. When the user administrator pushes an "INITIAL SETTING" button 1431 in the screen 1430, the multifunctional product 1010 displays an initial setting screen 1440 on the operation panel 1080.

Also, when the user administrator pushes a "SYSTEM INITIAL SETTING" button 1441 in the screen 1440, the multifunctional product 1010 displays a system initial setting screen 1450 on the operation panel 1080. When the user administrator pushes an "ADMINISTRATOR SETTING" button 1451 in the screen 1450, the multifunctional product 1010 displays an administrator setting screen (not illustrated) on the operation panel 1080. Since the user administrator logins the multifunctional product 1010 as a user administrator, the user administrator can continue setting up as a user administrator. On the other hand, if the user administrator does not login as a user administrator, the multifunctional product 1010 prompts the user administrator to login as a user administrator in response to depression of the "ADMINISTRATOR SETTING" button 1451 in the screen 1450.

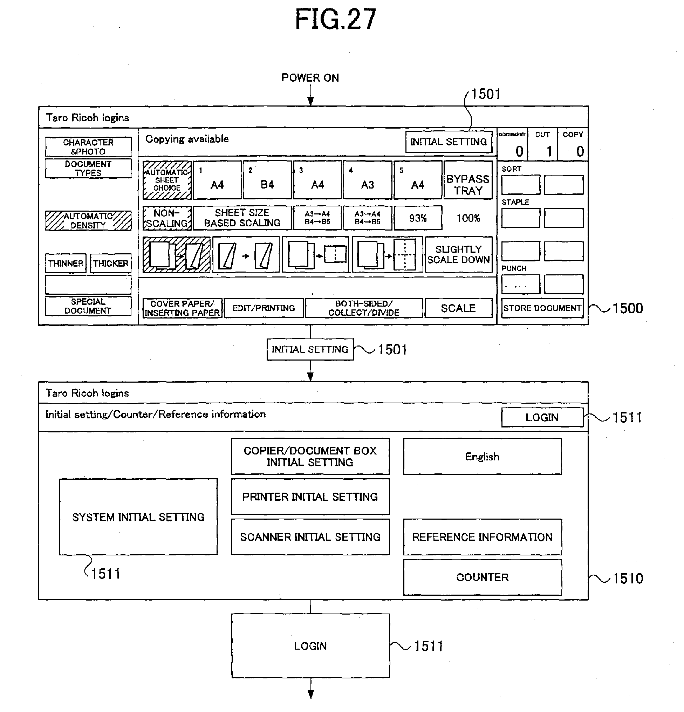

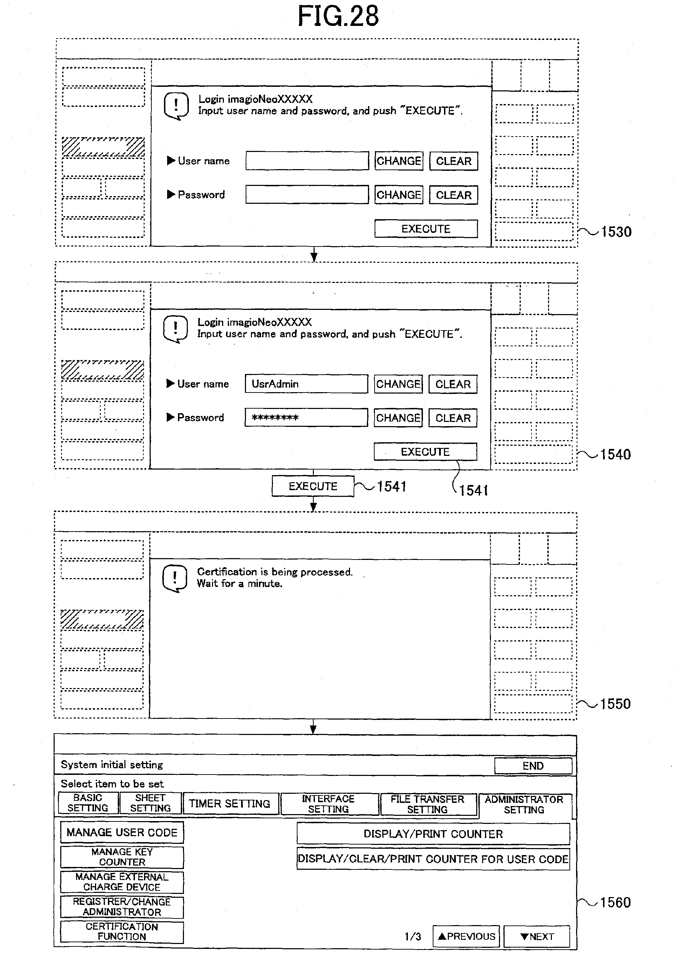

FIG. 27 and FIG. 28 show a series of exemplary screens displayed on the operation panel when a user administrator is authenticated and a user is not authenticated. After powered ON, the multifunctional product 1010 displays a copying screen 1500 on the operation panel 1080, depending on use restriction information of the entry information element 1001.

When the user pushes an "INITIAL SETTING" button 1501 in the screen 1500, the multifunctional product 1010 displays an initial setting screen 1510 on the operation panel 1080. When the user pushes a "LOGIN" button 1511 on the screen 1510, the multifunctional product 1010 displays a login screen 1530, as shown in FIG. 28, on the operation panel 1080. A screen 1540 shows that a user name and a password have been supplied by the user administrator via the screen 1530. When the user administrator pushes an "EXECUTE" button 1541 in the screen 1540, the multifunctional product 1010 displays a screen 1550, indicating that the certification is being processed, on the operation panel 1080.

The multifunctional product 1010 uses CCS 1052 to authenticate the user name and the password supplied via the screen 1540. Based upon the certification result, the multifunctional product 1010 determines that the logging-in user is a user administrator, and then displays an administrator setting screen 1560 on the operation panel 1080. When the user pushes an "INITIAL SYSTEM SETTING" button 1511 in the screen 1510, the multifunctional product 1010 may display a login screen 1530 on the operation panel 1080.

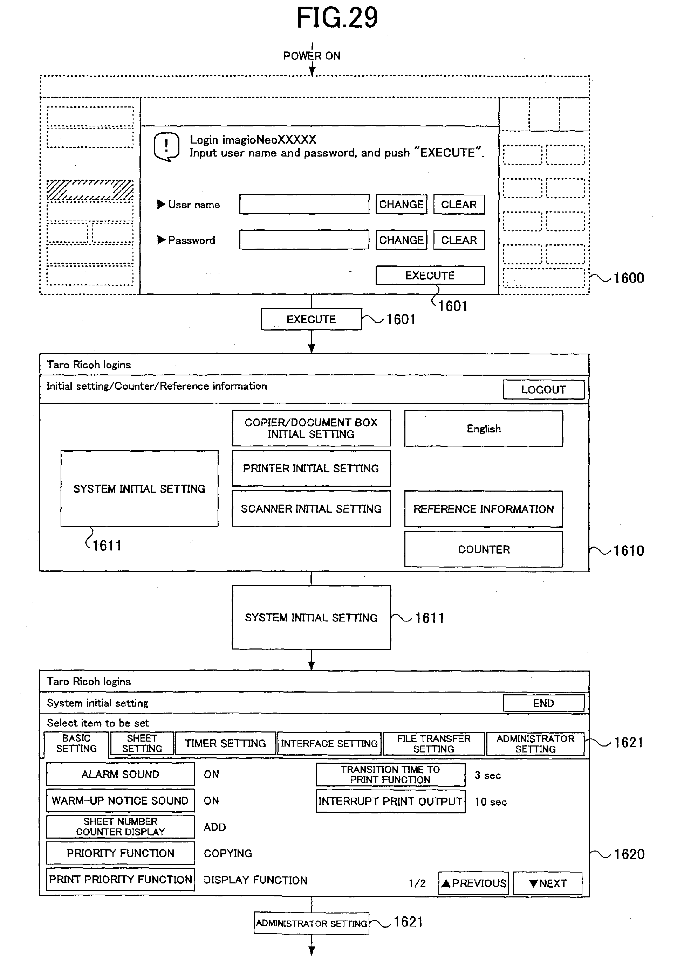

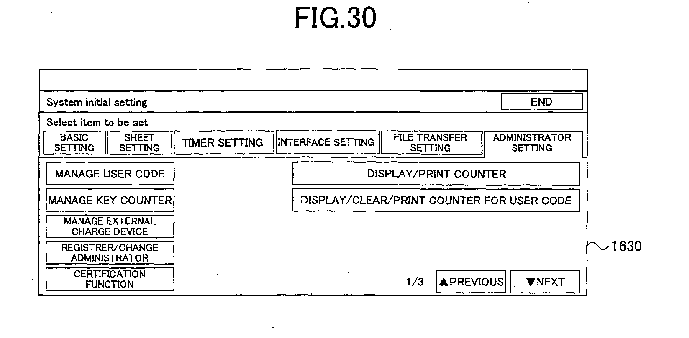

FIG. 29 and FIG. 30 show a series of exemplary screens displayed on the operation panel 1080 when the user is authenticated and the user administrator is not authenticated. The multifunctional product 1010 displays a login screen 1600 on the operation panel 1080. The user inputs a user name and a password in the screen 1600, and then pushes an "EXECUTE" button 1601 in the screen 1600. When the "EXECUTE" button 1601 is pushed, the multifunctional product 1010 uses CCS 1052 to authenticate the user name and the password supplied via the screen 1600.

Based upon the certification result, the multifunctional product 1010 determines that the logging-in user is a user, and then displays an initial setting screen 1610 on the operation panel 1080. When the user pushes a "SYSTEM INITIAL SETTING" button 1611 in the screen 1610, the multifunctional product 1010 displays a system initial setting screen 1620 on the operation panel 1080. When the user pushes an "ADMINISTRATOR SETTING" button 1621 in the screen 1620, the multifunctional product 1010 displays an administrator setting screen 1630, as shown in FIG. 30, on the operation panel 1080. Since the certification of a user administrator is not performed, the user can continue administrator setting.

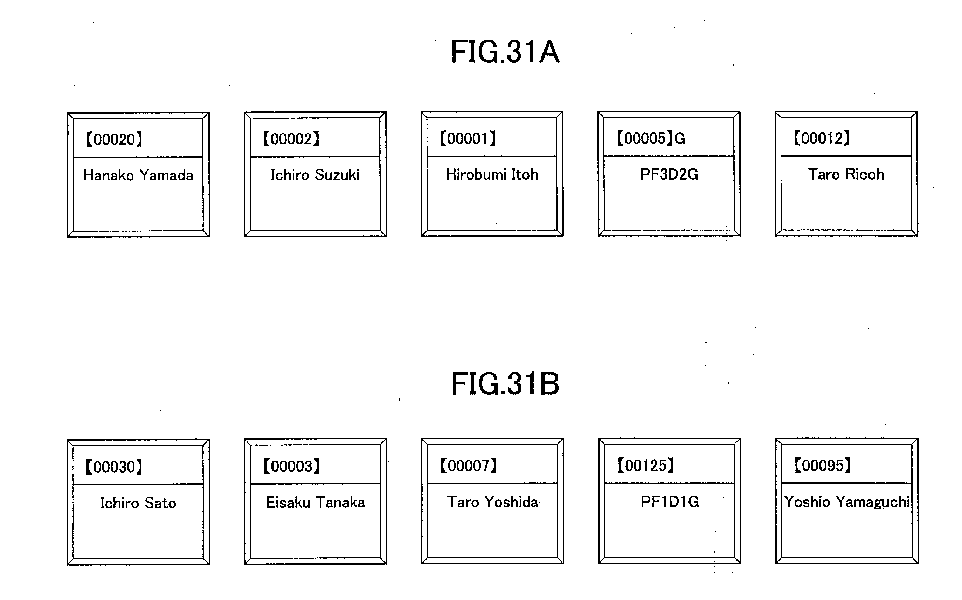

In the entry information element 1001 shown in FIG. 1 through FIG. 6, permission or denial of viewing manipulation and editing manipulation on the entry information element 1001 is set for each user or each group 1004 and 1005. Thus, an address book displayed on the operation panel 1080 can be restricted as follows. FIGS. 31A and 31B show an exemplary entry information element on a user having viewing authority or editing authority and an exemplary entry information element on a user that does not have either viewing authority or editing authority.

FIG. 31A shows an exemplary entry information element on the user "Taro Ricoh" of the registration number "00012" wherein the user has viewing authority or editing authority. FIG. 31B shows an exemplary entry information element on the user "Taro Ricoh" of the registration number "00012" wherein the user does not have the viewing authority or the editing authority.

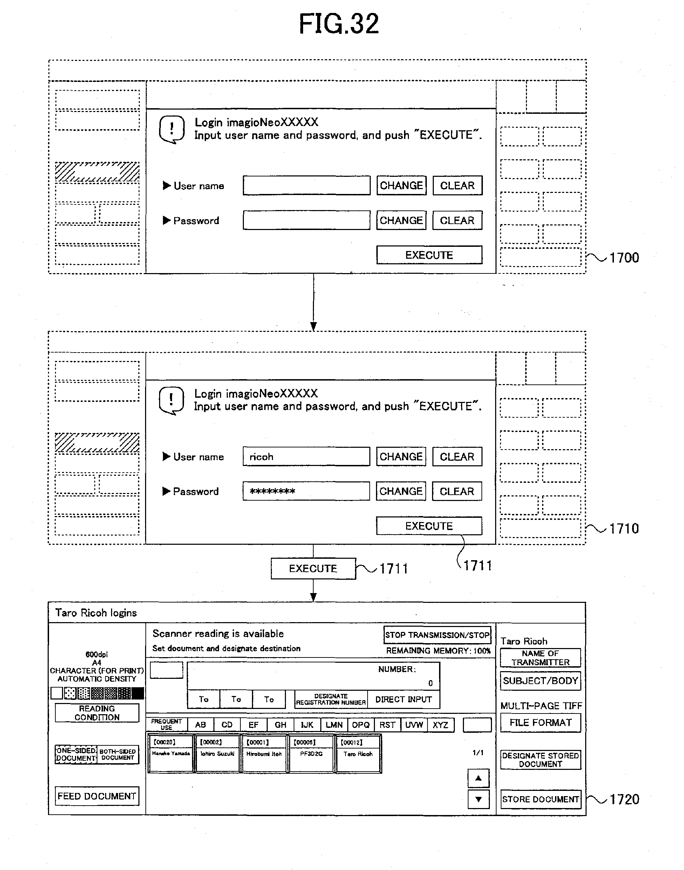

FIG. 32 is a diagram for explaining a procedure of displaying an address book according to the first embodiment. For example, the user "Taro Ricoh" of the registration number "00012" inputs a user name and a password in a login screen 1700 displayed on the operation panel 1080. A screen 1710 shows the user name and the password has been supplied by the user "Taro Ricoh" of the registration number "00012" via the screen 1700.

When an "EXECUTE" button 1711 in the screen 1710 is pushed, the multifunctional product 1010 selects an entry information element 1001 from an address book, shown in FIG. 31A, over which the user "Taro Ricoh" of the registration number "00012" has viewing authority or editing authority. The entry information element 1001 can be selected by selecting a user group including the user "Ricoh Taro" of the registration number "00012".

When an application that makes use of the entry information 1001 (for example, the scanner application 1034) is selected, the multifunctional product 1010 displays a screen 1720 including the entry information element 1001 in FIG. 31A as a destination on the operation panel 1080. In this manner, the multifunctional product 1010 can display only entry information items over which a logging-in user has viewing authority or editing authority on the operation panel 1080.

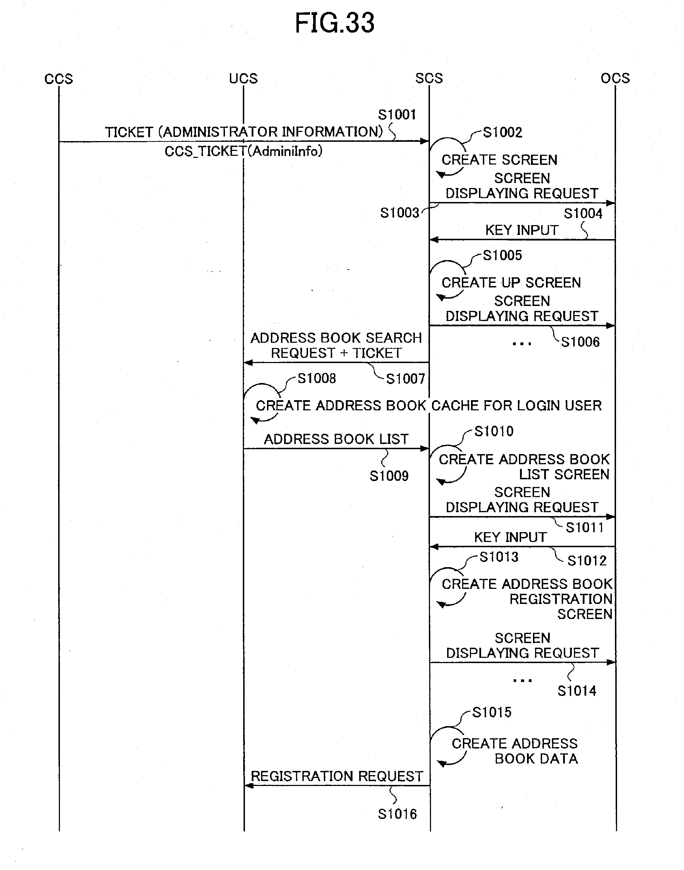

In the above, the procedure of creating the entry information element 1001 has been described with reference to exemplary screens displayed on the operation panel 1080. In the following, the procedure of creating the entry information element 1001 is described with reference to a sequence diagram shown in FIG. 33. The procedure of creating the entry information element 1001 is described with reference to the screens 1100 through 1280.

FIG. 33 is a sequence diagram of an exemplary procedure of creating an entry information element according to the first embodiment. It is supposed that the multifunctional product 1010 first has used the screens 1100 through 1120 to authenticate a user and determines that the logging-in user is a user administrator.

At step S1001, CCS 1052 of the multifunctional product 1010 supplies to SCS 1044 a ticket to prove that the logging-in user has been authenticated as a user administrator. At step S1002, SCS 1044 creates the screen 1130. At step S1003, SCS 1044 issues a screen displaying request to OCS 1047.

At step S1004, the user administrator performs a key input operation by pushing the "SYSTEM INITIAL SETTING" button 1131 in the screen 1130. OCS 1047 supplies contents of the key input operation to SCS 1044. At step S1005, SCS 1044 creates the screen 1140. At step S1006, SCS 1044 issues a screen displaying request to OCS 1047. In the following, the screens 1150 and 1160 are similarly displayed on the operation panel 1080.

At step S1007, SCS 1044 issues an address book search request together with the ticket to UCS 1051. At step S1008, UCS 1051 creates an address book cache for the logging-in user administrator. At step S1009, UCS 1051 supplies the created address book list to SCS 1044.

At step S1010, SCS 1044 creates an address book list screen. At step S1011, SCS 1044 issues a screen displaying request to OCS 1047. At step S1012, the user administrator performs a key input operation by pushing one or more entry buttons included in the address book list or the "NEW REGISTRATION" button 1162. Now, it is supposed that the "NEW REGISTRATION" button 1612 has been pushed. OCS 1047 supplies contents of the key input operation to SCS 1044.

At step S1013, SCS 1044 creates the screen 1170. At step S1014, SCS 1044 issues a screen displaying request to OCS 1047. In the following, the screens 1180 through 1260 are similarly displayed on the operation panel 1080. Then, when the "SET" button 1261 in the screen 1260 is pushed, SCS 1044 proceeds to step S1015, and generates address book data to register user information supplied via the screens 1170 through 1250 in the address book. At step S1016, SCS 1044 can create the entry information element 1001 by using the generated address book data to issue a registration request to UCS 1051.

Here, there is a case where even a user registered in the owner group 1002 is not allowed to delete a user registered in the user group 1003. For example, while such a user registered in a user group 1003 logins the multifunctional product 1010, the user cannot be deleted from the user group 1003. Also, for example, during login of a user registered in the user group 1003, edited contents of the entry information element 1001 on the user is not reflected until the user logins the multifunctional product 1010 at the next time.

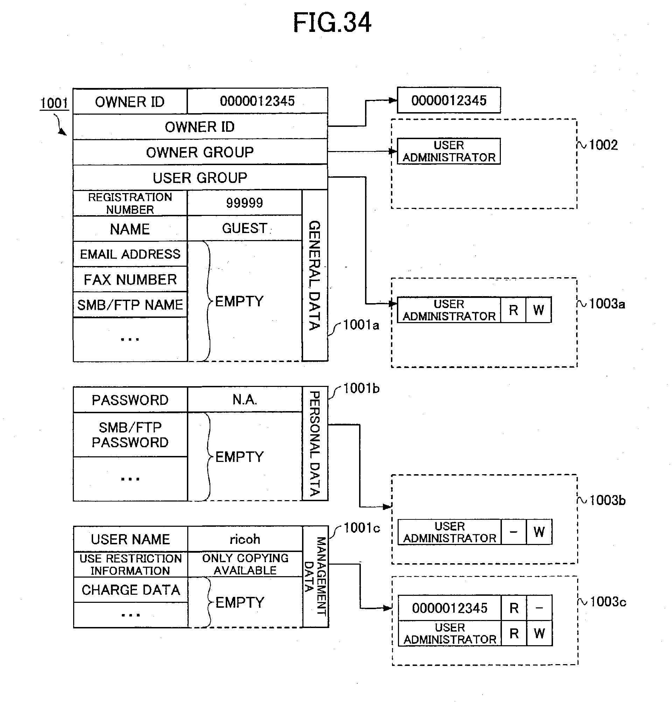

In addition, an entry information element 1001 on a user that temporarily makes use of a copier function (hereinafter which is referred to as a guest user) is configured as shown in FIG. 34. FIG. 34 shows a seventh exemplary data structure of an entry information element of a multifunctional product according to the first embodiment. Since a guest user is to simply use the multifunctional product 1010, it is unnecessary to set an email address and a FAX number for the guest user. Thus, the entry information element 1001 shown in FIG. 34 includes only an owner ID, an owner group 1002, user groups 1003a through 1003c, a registration number, a name, a user name and use restriction information.

Such a guest user is not registered in the owner group 1002. Also, since the guest user is not registered in the user group 1003a, the guest user is not allowed to view and edit entry information elements 1001 on other users. However, since the guest user is allowed to view the user group 1003c, the guest user can check the use restriction information.

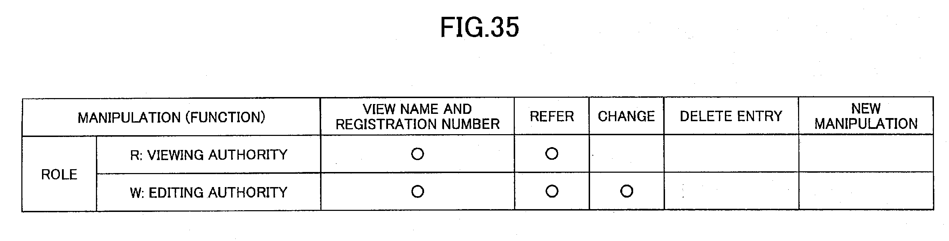

Here, manipulation corresponding to the above-mentioned viewing authority "R" and editing authority "W" may be fixed. Alternatively, the manipulation may be changeable as follows. FIG. 35 shows a table representing an exemplary policy to define manipulations corresponding to various kinds of authority. In FIG. 35, a policy corresponding to a case where viewing authority and editing authority are included in manipulation authority is illustrated.

For example, "view name and registration number" and "refer" operations are defined as manipulations corresponding to the viewing authority "R" in accordance with the policy shown in FIG. 35. Also, "view name and registration number", "refer", and "change" operations are defined as manipulations corresponding to the editing authority "W".

In the policy shown in FIG. 35, a user having the viewing authority "R" can perform the "view name and registration number" and "refer" operations. Also, a user having the editing authority "W" can perform the "view name and registration number", "refer" and "change" operations. If the policy shown in FIG. 35 is changed, it is possible to change manipulations corresponding to various kinds of authority.

A variation of a multifunctional product according to the first embodiment is described.

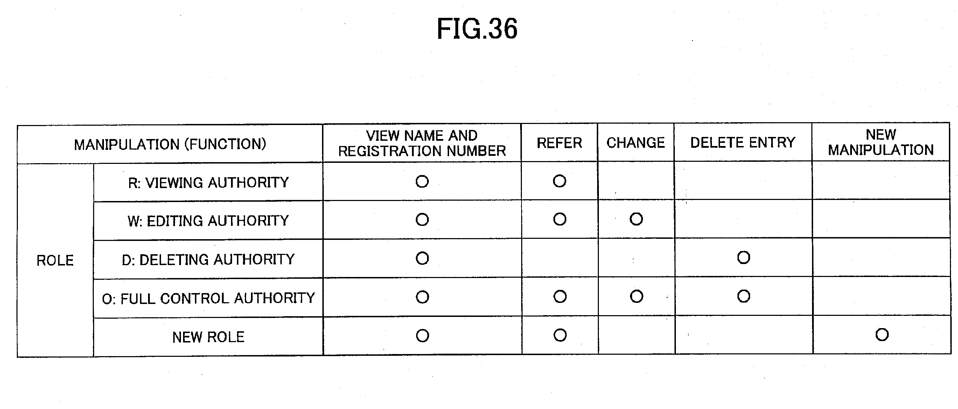

In the first embodiment, the owner group 1002 and the user group 1003 are separately set. However, it is possible to set owner authority to a user by using a policy shown in FIG. 36. FIG. 36 shows a table representing an exemplary policy allowed to set owner authority to a user.

In the policy shown in FIG. 36, in addition to the policy shown in FIG. 35, "view name and registration number" and "delete entry" operations are defined as a manipulation corresponding to the deleting authority "D". In addition, "view name and registration number", "refer", "change" and "delete entry" operations are defined as manipulations corresponding to full control authority "O". Also, new authority "new role" may be defined in the policy shown in FIG. 36.

The manipulation authority is composed of the viewing authority, the editing authority and the deleting authority. The full control authority includes the editing authority. For example, in the policy shown in FIG. 36, it is sufficient that the full control authority "O" is provided to only a user that sets owner authority. Such a user having the owner authority has authority equivalent to authority set in the above-mentioned owner group 1002.

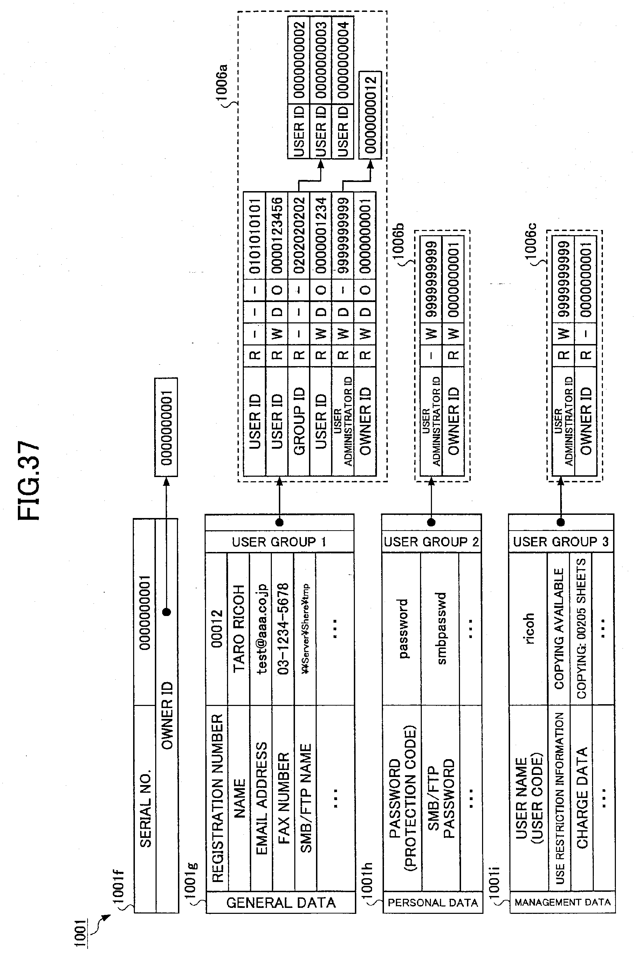

FIG. 37 shows an eighth exemplary data structure of an entry information element of a multifunctional product according to the first embodiment. The entry information element 1001 shown in FIG. 37 is the same as the entry information element 1001 shown in FIG. 4 except for a portion thereof, and the description thereof is omitted. Entry information portions 1001f through 1001i represent information on a user of the multifunctional product 1010. The entry information portions 1001f through 1001i are configured by classifying information items of the entry information element 1001 shown in FIG. 1 through FIG. 3.

The entry information portions 1001f includes a serial number and an owner ID. The entry information portion 1001g includes items such as a registration number, a name, an email address, a FAX number, an SMB/FTP name and a user list 1006a. The entry information portion 1001h includes items such as a password, an SMB/FTP password, and a user list 1006b. The entry information portion 1001d includes items such as a user name, use restriction information, charge data and a user list 1006c.

The user list 1006a includes users having manipulation authority on the entry information portion 1001g. A user registered in the user list 1006a can perform manipulations on the entry information portion 1001g depending on the manipulation authority on the entry information portion 1001g. Also, the user list 1006b includes users having manipulation authority on the entry information portion 1001h. A user registered in the user list 1006b can perform manipulations on the entry information portion 1001h depending on the manipulation authority on the entry information portion 1001h.

The user list 1006c includes users having manipulation authority on the entry information portion 1001i. A user registered in the user list 1006c can perform manipulations on the entry information portion 1001i depending on the manipulation authority on the entry information portion 1001i. Among users registered in the user lists 1006a through 1006c, a user having the full control authority has setting authority on the user lists 1006a through 1006c. In other words, the user having the full control authority has the owner authority.

In the entry information element 1001 shown in FIG. 37, users having the owner authority and users having manipulation authority are set for the individual entry information portions 1001g through 1001i. In other words, in the entry information element 1001, an access rule to restrict user's manipulation on the entry information element 1001 can be defined for each portion (each of the entry information portions 1001g through 1001i in FIG. 37) classified based on item types of the entry information element 1001. A method of setting owner authority for a user by using the policy as shown in FIG. 36 can be applied to an entry information element 1001 other than the above-mentioned entry information element 1001 shown in FIG. 6.

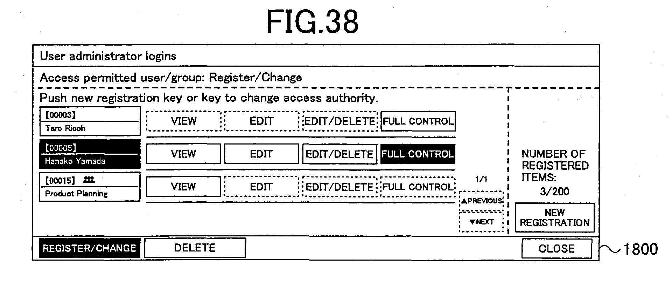

If the policy shown in FIG. 36 is used, the viewing authority, the editing authority, the editing/deleting authority or the full control authority can be set via a screen 1800 as shown in FIG. 38 for a user, a group composed of one or more users, or all users. FIG. 38 shows an exemplary screen to set the viewing authority, the editing authority, the deleting authority and the full control authority according to the first embodiment.

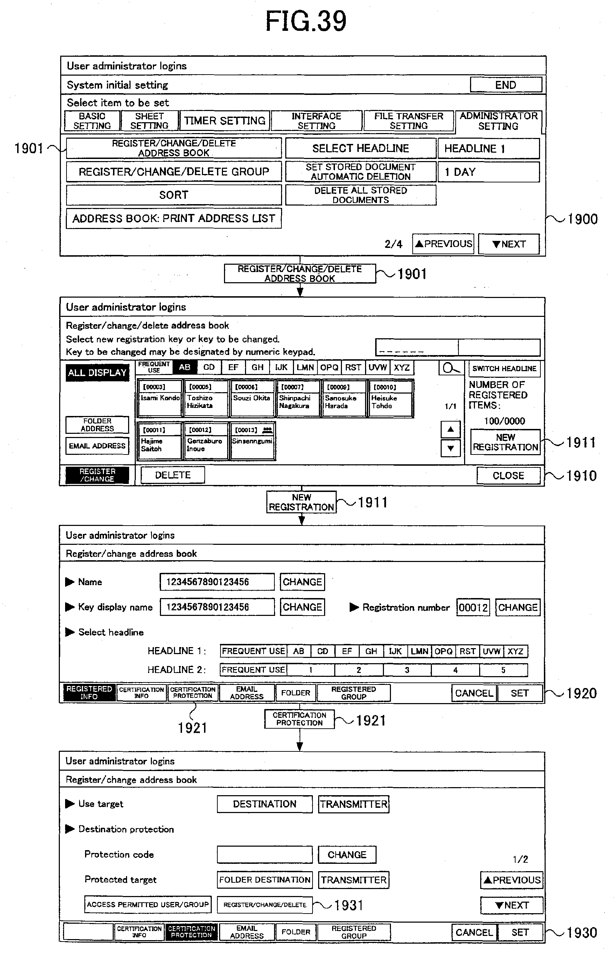

FIG. 39 through FIG. 43 show a series of exemplary screens displayed on the operation panel 1080. Now, it is supposed that the multifunctional product 1010 uses the above-mentioned screens 1100 through 1120 to authenticate a user and determines that the logging-in user is a user administrator. The multifunctional product 1010 moves to a screen 1900, as shown in FIG. 39, via the above-mentioned screens 1130 through 1150. When the user administrator pushes a "REGISTER/CHANGE/DELETE ADDRESS BOOK" button 1901 in the screen 1900, the multifunctional product 1010 displays a screen 1910 on the operation panel 1080.

When the user administrator pushes a "NEW REGISTRATION" button 1911 in the screen 1910, the multifunctional product 1010 displays a screen 1920 for registering/changing an address book on the operation panel 1080. The user administrator can use the screen 1920 to register a name and a registration number of a user to be newly registered. When the user administrator pushes a "CERTIFICATION PROTECTION" button 1921 in the screen 1920, the multifunctional product 1010 displays a screen 1930 for registering/changing certification protection information on the operation panel 1080.

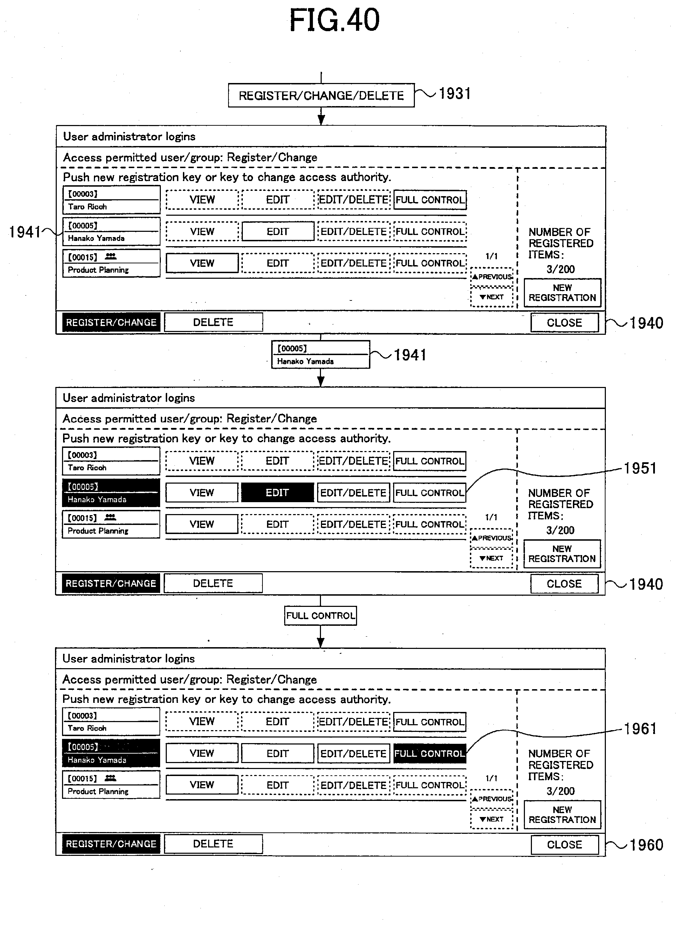

When the user administrator pushes a "REGISTER/CHANGE/DELETE" button 1931 in the screen 1930, the multifunctional product 1010 displays a screen 1940, as shown in FIG. 40, for setting viewing authority, editing authority, editing/deleting authority or full control authority for a user, a group composed of one or more users or all users on the operation panel 1080. In the screen 1940, a button to represent a registered user, a registered group or all users and a button to represent the viewing authority, the editing authority, the editing/deleting authority or the full control authority set for the registered user, the registered group or all users are displayed.

When the user administrator pushes a button 1941 representing the user "Hanako Yamada" in the screen 1940, the multifunctional product 1010 displays a screen 1950 for setting the viewing authority, the editing authority, the editing/deleting authority or the full control authority of the user "Hanako Yamada" on the operation panel 1080. In the illustrated screen 1950, the editing authority set for the user "Hanako Yamada" is highlighted. When the user administrator pushes a button 1951 to represent the full control authority in the screen 1950, the multifunctional product 1010 displays a screen 1960 having a highlighted button 1961 representing the full control authority of the user "Hanako Yamada" on the operation panel 1080. In other words, the user "Hanako Yamada" is provided with the owner authority.

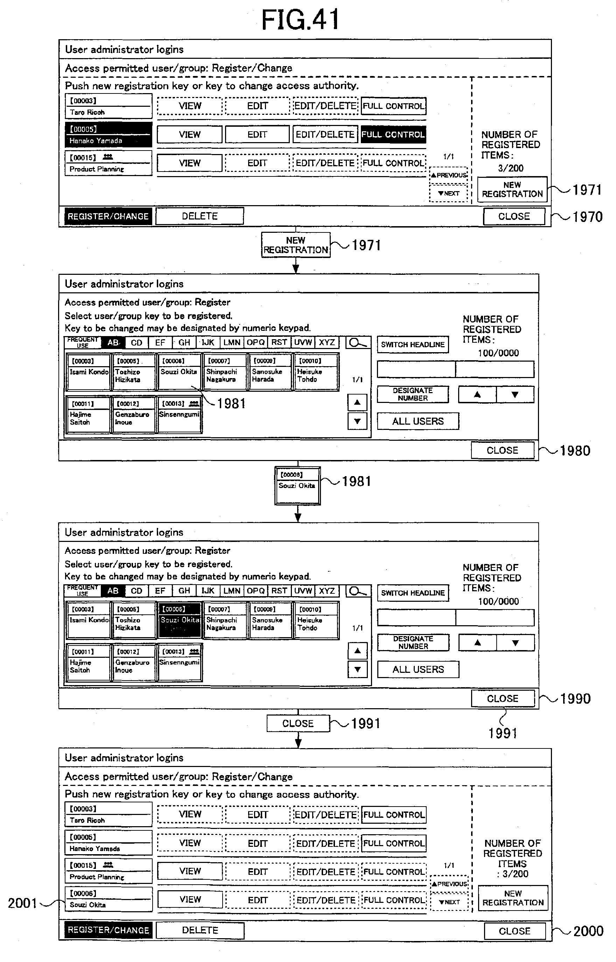

Next, a series of exemplary screens to newly register a user in the user lists 1006a through 1006c and set the viewing authority, the editing authority, the editing/deleting authority or the full control authority for the user are described. When the user administrator pushes a "NEW REGISTRATION" button 1971 in a screen 1970 as shown in FIG. 41, the multifunctional product 1010 displays a screen 1980 on the operation panel 1080. When the user administrator pushes a button 1981 representing a user "Souzi Okita" in the screen 1980, the multifunctional product 1010 displays a screen 1990 having a highlighted button 1981 on the operation panel 1080.

When the user administrator pushes a "CLOSE" button 1991 in the screen 1990, the multifunctional product 1010 displays a screen 2000 for setting the viewing authority, the editing authority, the editing/deleting authority or the full control authority for a user, a group composed of one or more users or all users on the operation panel 1080. In the screen 2000, a button 2001 representing the user "Souzi Okita" and a button representing the viewing authority provided to the user "Souzi Okita" are displayed. Also, buttons representing the editing authority, the editing/deleting authority and the full control authority are displayed in thinner color.

Next, a series of exemplary screens to newly register all users in the user lists 1006a through 1006c and set the viewing authority, the editing authority, the editing/deleting authority or the full control authority for all the users are described.

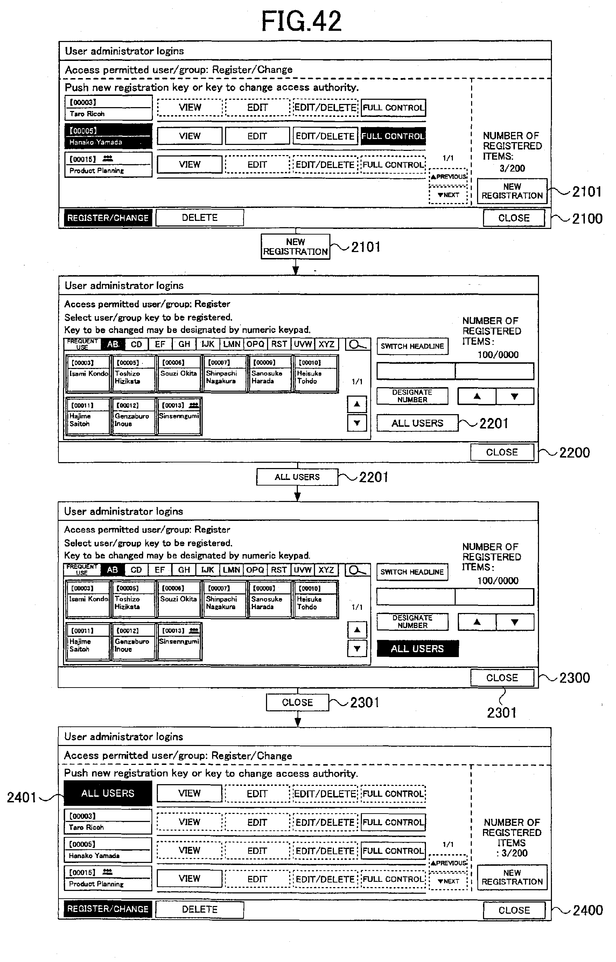

When the user administrator pushes a "NEW REGISTRATION" button 2101 in a screen 2100 as shown in FIG. 42, the multifunctional product 1010 displays a screen 2200 on the operation panel 1080. When the user administrator pushes a button 2201 representing all users in the screen 2200, the multifunctional product 1010 displays a screen 2300 having a highlighted button 2201 on the operation panel 1080.

When the user administrator pushes a "CLOSE" button 2301 in the screen 2300, the multifunctional product 1010 displays a screen 2400 for setting the viewing authority, the editing authority, the editing/deleting authority or the full control authority for all the users on the operation panel 1080. In the screen 2400, a button 2401 representing all the users and a button representing the viewing authority set for all the users are displayed. The other buttons representing the editing authority, the editing/deleting authority and the full control authority are displayed in thinner color.

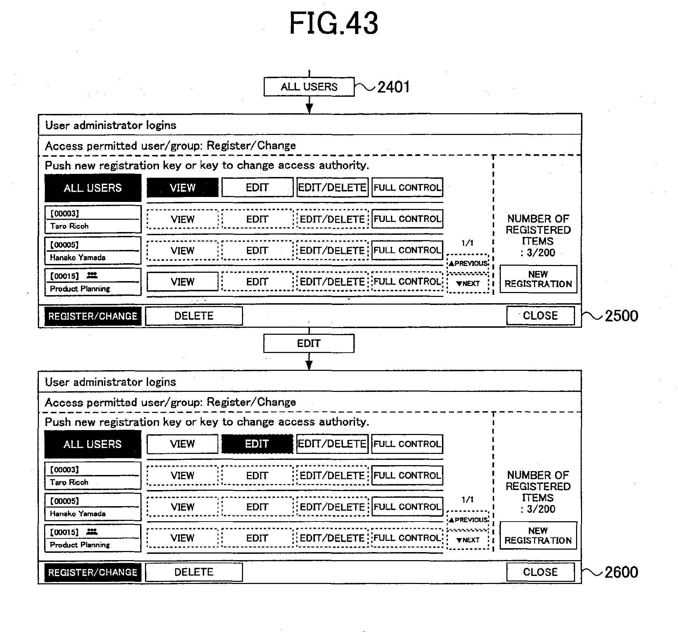

When the user administrator pushes the button 2401 representing all the users in the screen 2400, the multifunctional product 1010 displays a screen 2500, as shown in FIG. 43, for setting the viewing authority, the editing authority, the editing/deleting authority or the full control authority for all the users on the operation panel 1080. Here, the viewing authority set for all the users is highlighted in the screen 2500. When the user administrator pushes a button representing the editing authority in the screen 2500, the multifunctional product 1010 displays a screen 2600 on the operation panel 1080 in a status where the button representing the editing authority for all the users is highlighted. Since the editing authority is set for all the users in the screen 2600, the viewing authority of the group "Product Planning" becomes insignificant and is thinner colored.

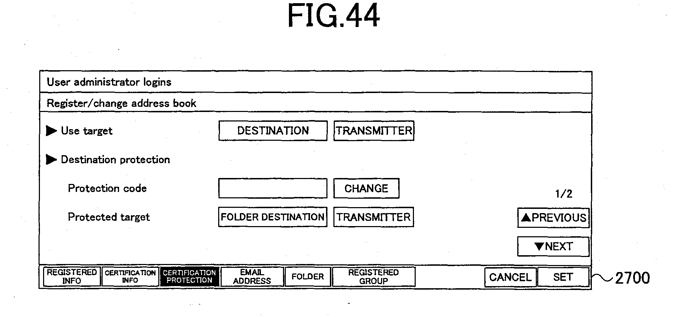

Here, the screen 1930 is an exemplary screen for a user having the owner authority. An exemplary screen for a user having no owner authority is illustrated in FIG. 44. FIG. 44 shows an exemplary screen for registering/changing certification protection information. In a screen shown in FIG. 44, the "REGISTER/CHANGE/DELETE" button 1931 is not included, and it is impossible to move to a screen for setting the viewing authority, the editing authority, the editing/deleting authority or the full control authority for a user, a group composed of one or more users or all users.

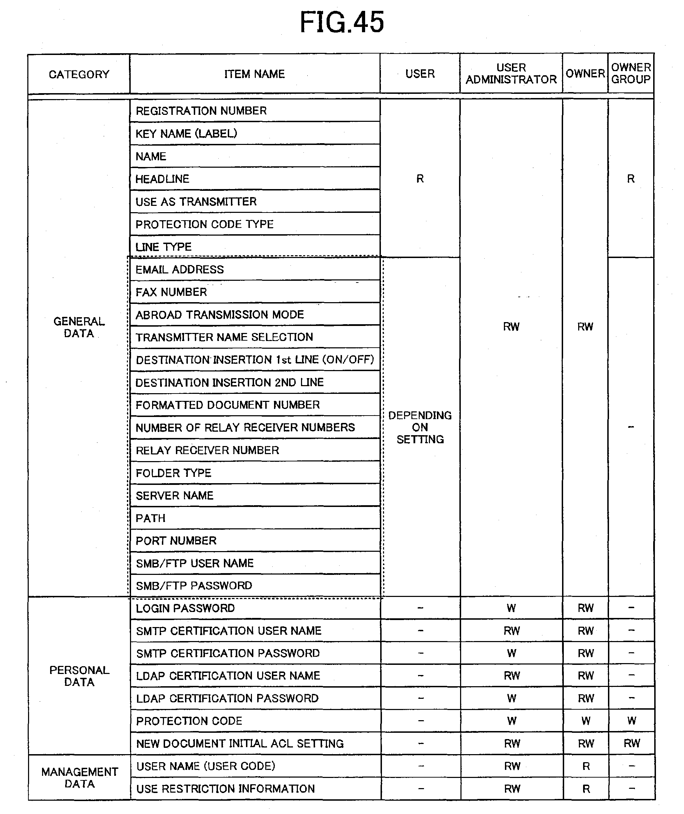

The above-mentioned entry information element 1001 uses access rules as illustrated in FIG. 45, for example. FIG. 45 shows an exemplary access rule to an entry information element according to the variation of the first embodiment. In the access rules shown in FIG. 45, viewing authority "R" and editing authority "W" over a portion of general data can be changed depending on setting. On the other hand, access rules to personal data or management data are fixed.

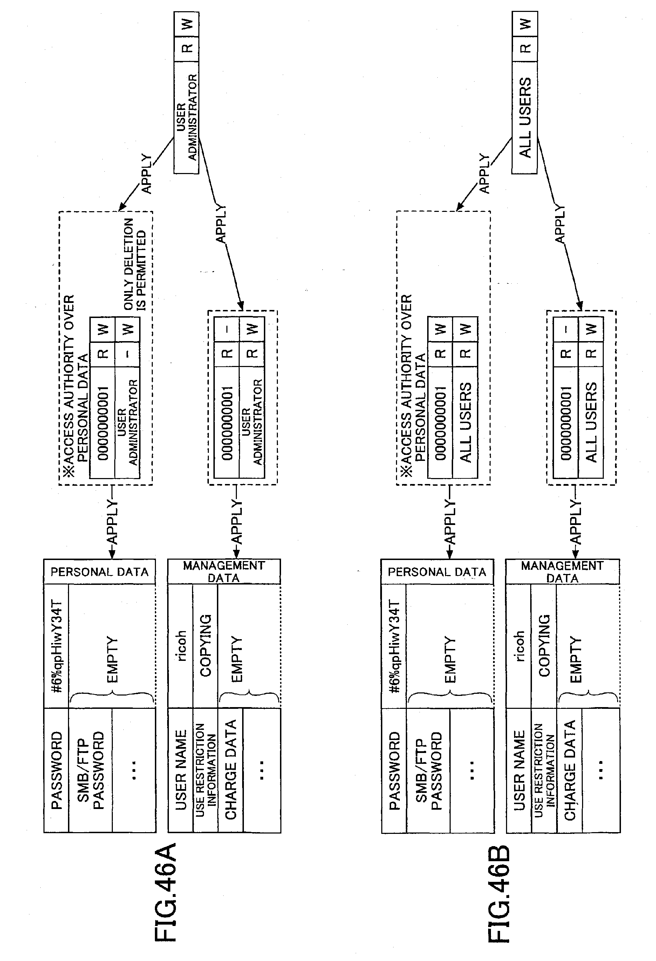

By applying an access control list (ACL) to personal data or management data, the viewing authority "R" and the editing authority "W" to the personal data or the management data may be changeable. In this case, the viewing authority "R" and the editing authority "W" to the personal data or the management data may be changed as illustrated in FIG. 46 depending on validity of a user administrator.

FIGS. 46A and 46B show exemplary manipulation authority on the personal data or the management data depending on validity of a user administrator. FIG. 46A show a case where a user administrator is valid, and the manipulation authority on the personal data or the management data is provided to a user administrator. On the other hand, FIG. 46B shows a case where a user administrator is not valid, and the manipulation authority on the personal data or the management data is provided to all users.

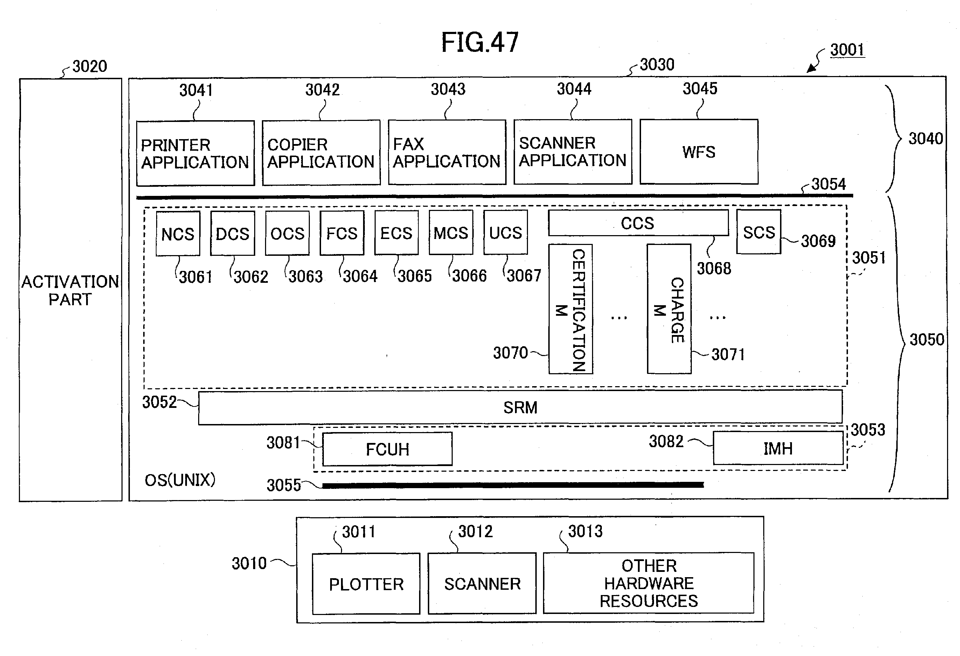

A description is given, with reference to FIG. 47 through FIG. 75, of a multifunctional product according to a second embodiment of the present invention.

FIG. 47 shows an exemplary functional structure of a multifunctional product according to the second embodiment.

Referring to FIG. 45, a multifunctional product 3001 includes hardware resources 3010, an activation part 3020 and a software set 3030. The hardware resources include a plotter 3011, a scanner 3012 and other hardware resources 3013 such as a facsimile. The software set 3030 includes an application set 3040 and a platform 3050 that are executed on an operating system (OS) such as UNIX (registered trademark). When the multifunctional product 3001 is powered ON, the activation part 3020 starts the application set 3040 and the platform 3050 in OS.

The application set 3040 includes various applications such as a printer application 3041, a copier application 3042, a FAX application 3043, a scanner application 3044 and a WEB service shared function (WSF) 3045. On the other hand, the platform 3050 includes a control service 3051, a system resource manager (SRM) 3052 and a handler layer 3053.

The control service 3051 includes one or more service modules such as a network control service (NCS) 3061, a delivery control service (DCS) 3062, an operation panel control service (OCS) 3063, a FAX control service (FCS) 3064, an engine control service (ECS) 3065, a memory control service (MCS) 3066, a user information control service (UCS) 3067, a certification control service (CCS) 3068 and a system control service (SCS) 3069. The platform 3050 is configured to have an application program interface (API) 3054.

CCS 3068 provides certification services to the applications 3040. Also, CCS 3068 includes one or more certification modules 3070 and charge modules 3071 (which are represented as "CERTIFICATION M" and "CHARGE M", respectively, in FIG. 47).

The handler layer 3053 includes a FAX control unit handler (FCUH) 3081 and an image memory handler (IMH) 3082. SRM 3052 and FCUH 3081 use an engine I/F 3055 to request processes for the hardware resources 3010. Details of the multifunctional product 3001 shown in FIG. 47 are disclosed, for example, in Japanese Laid-Open Patent Application No. 2002-084383. Next, an exemplary hardware configuration of the multifunctional product 3001 according to the present invention is described.

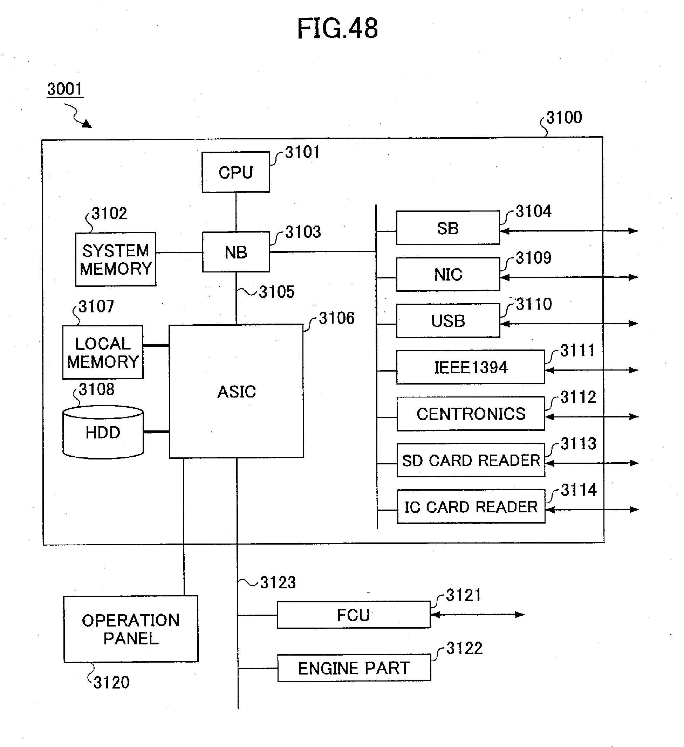

FIG. 48 shows an exemplary hardware configuration of a multifunctional product according to the second embodiment. The multifunctional product 3001 shown in FIG. 48 includes a controller 3100, an operation panel 3120, FCU 3121 and an engine part 3122.

The controller 3100 includes CPU 3101, a system memory 3102, NB 3103, SB 3104, an accelerated graphics port (AGP) 3105, ASIC 3106, a local memory 3107, HDD 3108, NIC 3109, a USB device 3110, an IEEE1394 device 3111, a centronics 3112, a SD card reader 3113 and an IC card reader 3114. Details of the multifunctional product 3001 shown in FIG. 48 are disclosed, for example, in Japanese Laid-Open Patent Application No. 2002-084383.

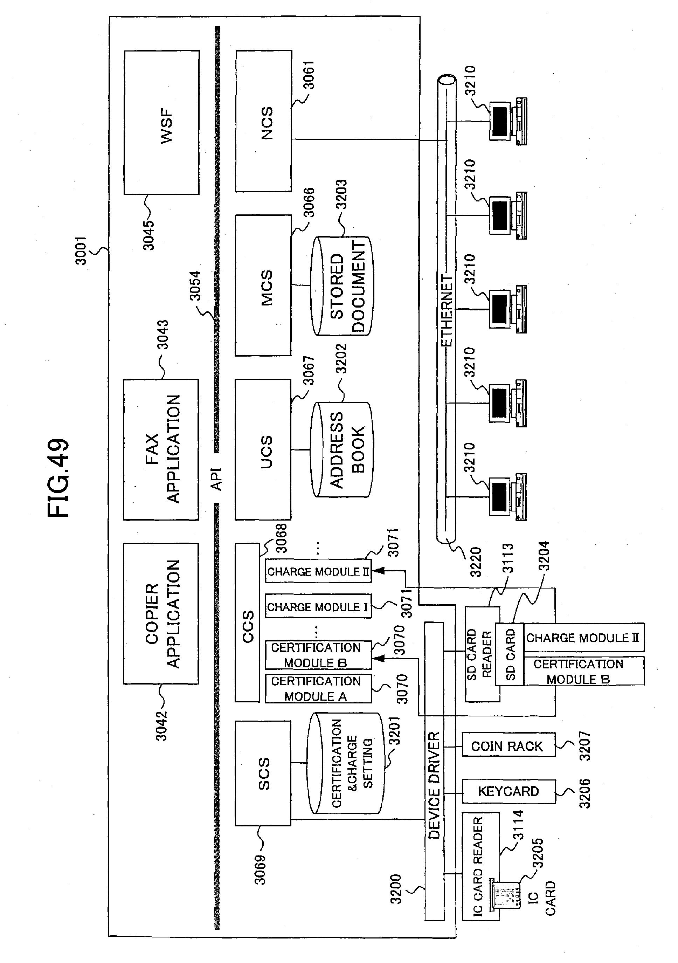

In the following, a certification function control method implemented by the multifunctional product 3001 is described with reference to drawings. FIG. 49 is a diagram for explaining an exemplary certification function control method according to the present invention. In FIG. 49, components of the multifunctional product 3001 unnecessary for the explanation are omitted.

The multifunctional product 3001 is connected to one or more computers 3210 via a network 3220 such as Ethernet (registered trademark). A user uses a computer 3210 to operate the multifunctional product 3001 remotely. Also, the multifunctional product 3001 is connected to a certification device and a charge device via a device driver 3200. In addition, the multifunctional product 3001 is connected to the SD card reader 3113 via the device driver 3200.

The IC card reader 3114, a keycard 3206 and a coin rack 3207 are embodiments of the certification device and the charge device. Here, the IC card reader 3114 has a structure such that the IC card 3205 can be inserted and removed. One or more certification modules 3070 and charge modules 3071 of CCS 3068 correspond to the certification device and the charge device, respectively, connected to the multifunctional product 3001.

The SD card reader 3113 has a structure such that the SD card 3204 can be inserted and removed. CCS 3068 includes a certification module 3070 and a charge module 3071 added from the SD card 3204. It is noted that one or more certification modules 3070 and charge modules 3071 of CCS 3068 may include one or more certification modules and charge modules therein.

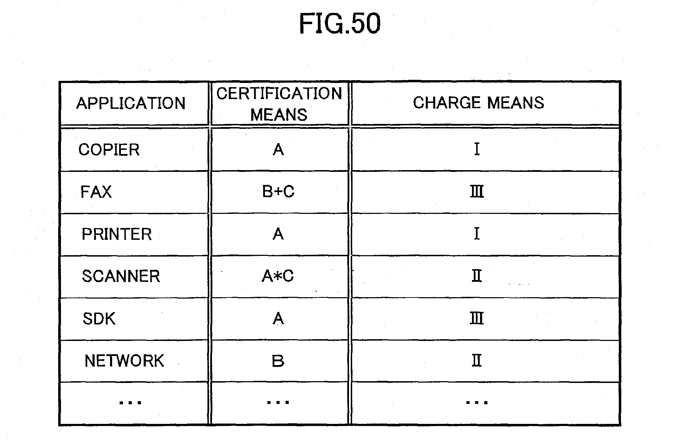

SCS 3069 manages the certification device and the charge device connected via the device driver 3200 and the certification module and the charge module 3071 of CCS 3068 with reference to a certification and charge setting table 3201 as shown in FIG. 50. FIG. 50 shows an exemplary certification and charge setting table according to the second embodiment.

The certification and charge setting table 3201 includes applications, certification means and charge means as data items. The certification means corresponds to the certification module 3070. The charge means corresponds to the charge module 3071. Thus, in the certification and charge setting table 3201, a certification module 3070 and a charge module 3071 can be set for each application.

For example, in the certification and charge setting table 3201 shown in FIG. 50, a certification module A is set as certification means of the copier application 3042, and a charge module I is set as charge means of the copier application 3042. Also, in the certification and charge setting table 3201 shown in FIG. 50, a certification module B or (+) C is set as certification means of the FAX application 3043, and a charge module III is set as charge means of the FAX application 3043. In addition, in the certification and charge setting table 3201, certification modules A and (*) C are set as certification means of the scanner application 3044, and a charge module II is set as charge means of the scanner application 3044.

In this manner, in the certification and charge setting table 3201, conjunction (AND) and disjunction (OR) of a plurality of certification modules 3070 can be set as certification means. Here, although not illustrated in the certification and charge setting table 3201 in FIG. 50, conjunction (AND) or disjunction (OR) of a plurality of charge modules 3071 can be set as charge means.

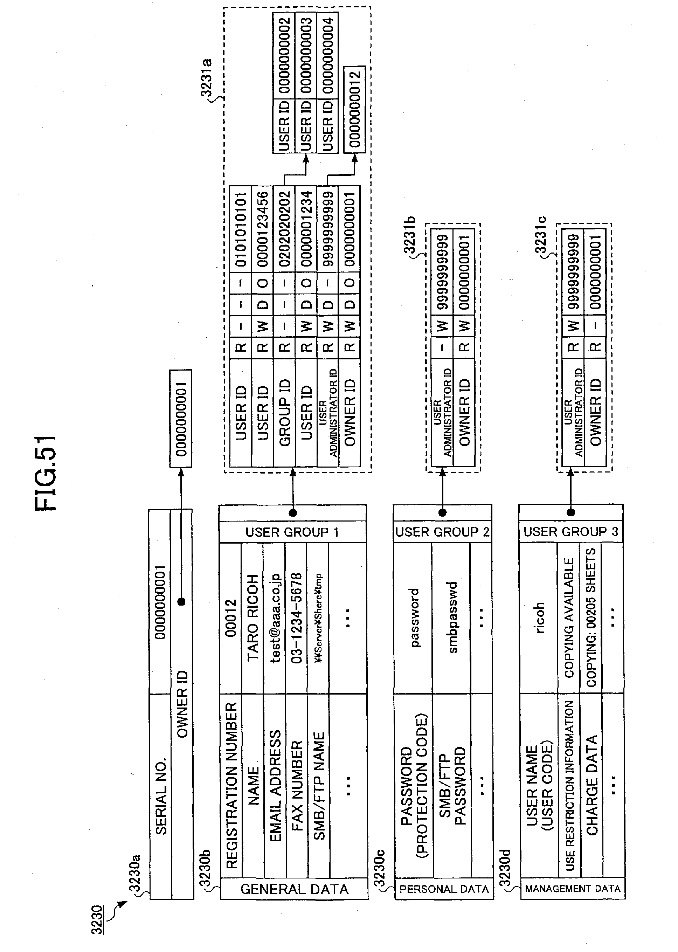

MCS 3066 manages a stored document database (DB) 3203. UCS 3067 manages an address book table 3202. The address book table 3202 has an entry information element on a single user as illustrated in FIG. 51. FIG. 51 shows an exemplary data structure of an entry information element of the multifunctional product 3001 according to the second embodiment.

An entry information element 3230 represents information on a user of the multifunctional product 3001. The entry information 3230 is classified into entry information portions 3230a through 3230d. The entry information portion 3230a includes a serial number and an owner ID as items. The entry information portion 3230b includes items such as a registration number, a name, an email address, a FAX number, an SMB/FTP name, and a user list 3231a. The entry information portion 3230c includes items such as a password, an SMB/FTP password and a user list 3231b. The entry information portion 3230d includes items such as a user name, user restriction information, charge data and a user list 2231c.

In the user list 3231a, a user having manipulation authority on the entry information portion 3230b is registered. In the user list 3231b, a user having manipulation authority on the entry information portion 3230c is registered. In the user list 3231c, a user having manipulation authority on the entry information portion 3230d is registered.

In the user lists 3231a through 3231c, viewing authority "R", editing authority "W", deleting authority "D" and owner authority "O" are set as the manipulation authority on the entry information portions 3230b through 3230d.

Also, in the use restriction information in the entry information 3230, for example, permission or denial of monochrome copying, permission of two-color copying, permission of full-color copying, permission of monochrome printing, permission of single-color printing, permission of two-color printing, permission of full-color printing, permission of FAX transmission, permission of scanner reading, permission of document box printing, permission of network access and permission of other operations are set.

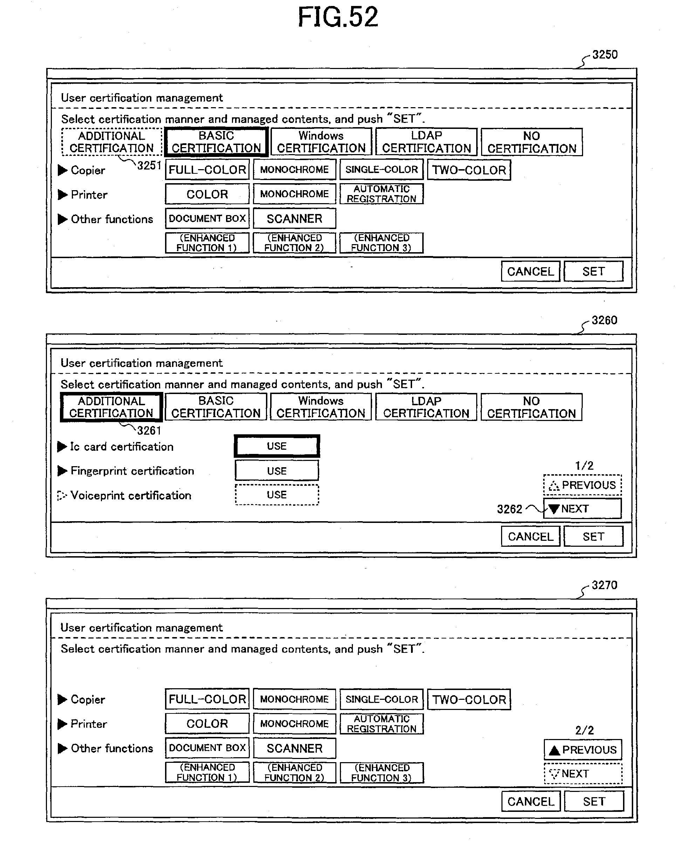

Next, an exemplary procedure of adding a certification module 3070 and a charge module 3071 from the SD card 3204 is described. For example, when receiving a request to display a user certification management screen for registering a certification module 3070 and a charge module 3071 from a user, the multifunctional product 3001 displays a user certification management screen 3250 or 3260 on the operation panel 3120. FIG. 52 shows an exemplary user certification management screen according to the second embodiment.

The user certification management screen 3250 corresponds to a case where the certification module 3070 and the charge module 3071 are not included in the SD card 3204. Thus, the user certification and management screen 3250 is displayed in a status where a (thinner colored) "ADDITIONAL CERTIFICATION" button 3251 to use the certification module 3070 and the charge module 3071 added from the SD card 3204 cannot be selected.

On the other hand, the user certification management screen 3260 corresponds to a case where the certification module 3070 and the charge module 3071 are included in the SD card 2204. When CCS 3068 detects a certification module 3070 and a charge module 3071 from a directory (for example, root/ccs/option) of the SD card 3204 at activation time, CCS 3068 adds the certification module 3070 and the charge module 3071 from the SD card 3204. Thus, the user certification and management screen 3260 is displayed in a status where an "ADDITIONAL CERTIFICATION" button 3261 to use the certification module 3070 and the charge module 3071 added from the SD card 2204 can be selected.

When a user selects the "ADDITIONAL CERTIFICATION" button 3261, a certification manner and a charge manner corresponding to the added certification module 3070 and the charge module 3071, respectively, from the SD card 3204 are displayed in the user certification management screen 3260. For example, IC card certification and fingerprint certification manners are displayed as embodiments of the certification manners in the user certification management screen 3260 in FIG. 52. In the user certification management screen 3260, a certification device and a charge device corresponding to the certification module 3070 and the charge module 3071 added from the SD card 3204 may be displayed. A user can use the user certification management screen 3260 to select a certification manner and a charge manner.

When the user pushes a "NEXT" button 3262, a user certification management screen 3270 is displayed in the operation panel 3120. In the user certification management screen 3270, various functions (management contents) to select a certification manner and a charge manner are displayed. The user can use the user certification management screen 3270 to select functions to designate a certification manner and a charge manner.

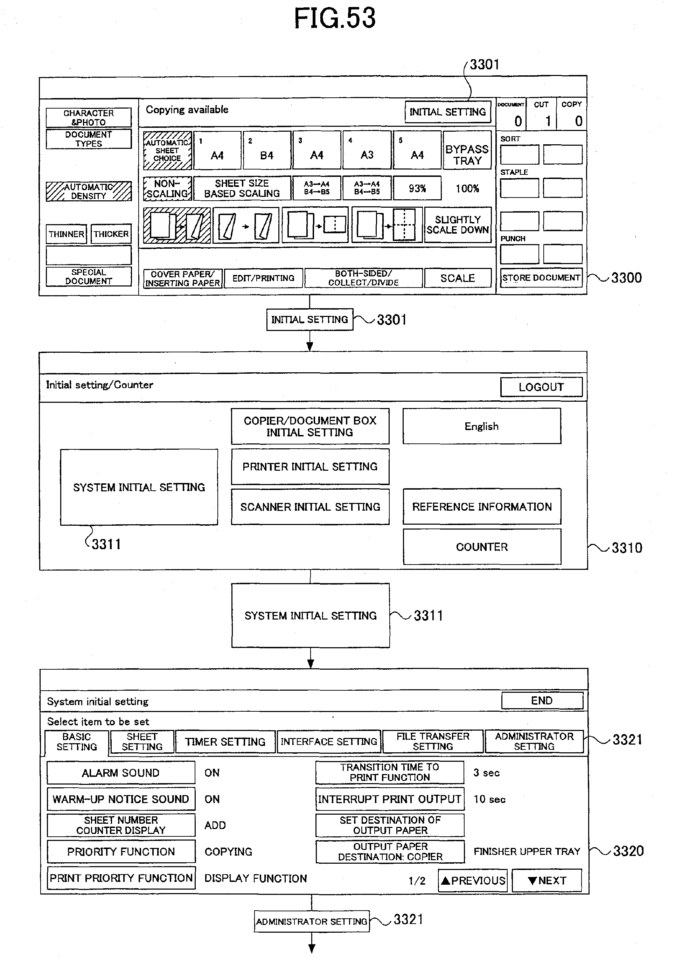

Next, an exemplary procedure of creating a certification and charge setting table 3201 shown in FIG. 50 is described. For example, after the multifunctional product 3001 starts the application set 3040 and the platform 3050, a copying screen 3300 as illustrated in FIG. 53 is displayed in the operation panel 3120.

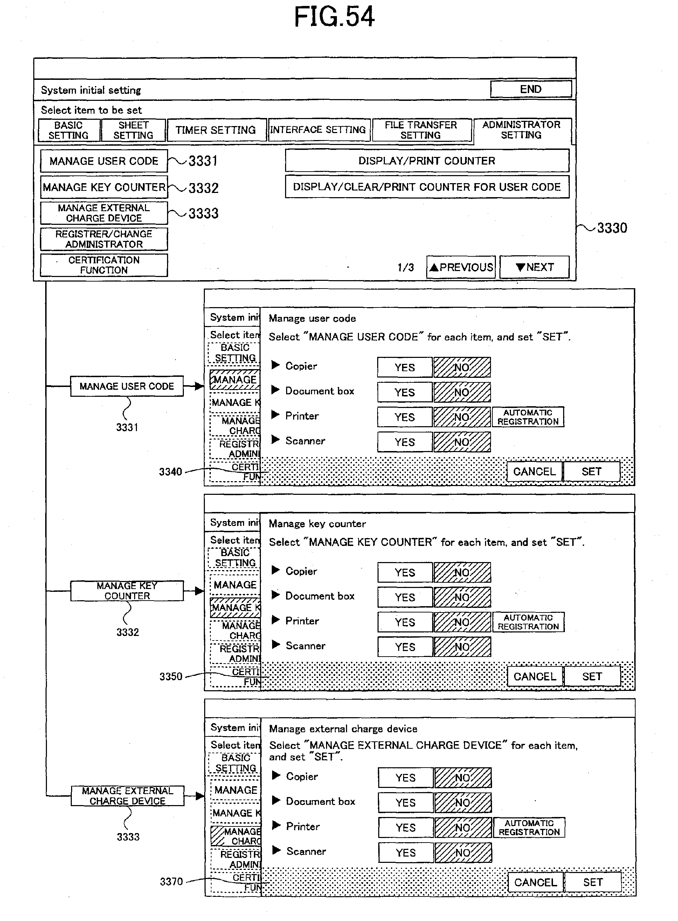

FIG. 53 and FIG. 54 show a series of exemplary screens displayed in the operation panel 3120. When a user pushes an "INITIAL SETTING" button 3301 in the screen 3300, the multifunctional product 3001 displays an initial setting screen 3310 on the operation panel 3120. When the user a "SYSTEM INITIAL SETTING" button 3311 in the screen 3310, the multifunctional product 3001 displays an initial system setting screen 3320 on the operation panel 3120.

When the user pushes an "ADMINISTRATOR SETTING" button 3321 in the screen 3320, the multifunctional product 3001 displays an administrator setting screen 3330 as illustrated in FIG. 54 on the operation panel 3120. The user can use screens 3340, 3350 and 3360, to which the user can move from the screen 3330, to create a certification and charge setting table 3201.

When the user pushes a "MANAGE USER CODE" button 3331 in the screen 3330, the multifunctional product 3001 displays a screen 3340 for setting user code management as certification means and charge means of the applications 3040 on the operation panel 3120. When the user pushes a "MANAGE KEY COUNTER" button 3332 in the screen 3330, the multifunctional product 3001 displays a screen 3350 for setting key counter management as certification means and charge means of the applications 3040 on the operation panel 3120. When the user pushes a "MANAGE EXTERNAL CHARGE DEVICE" button 3333 in the screen 3330, the multifunctional product 3001 displays a screen 3360 for setting external charge device management as certification means and charge means of the applications 3040 on the operation panel 3120.

If the user uses the screens 3340, 3350 and 3360 to select a plurality of certification means and charge means for one of the applications 3040, conjunction (AND) and disjunction (OR) can be set in the certification and charge setting table 3201 shown in FIG. 50.

In the above, the series of screens corresponding to the procedure of creating the certification and charge setting table 3201 displayed on the operation panel 3120 have been described. The screens 3300 through 3360 are displayed on the operation panel 3120 by OCS 3063. Here, SCS 3069 requests OCS 3063 to display the screens 3300 through 3360.

When one of the application set 3040, for which certification means and charge means are set in the certification and charge setting table 3201, is driven, a certification screen as described in detail below is displayed on the operation panel 3120. In the following, an example of starting the copier application 3042 is described.

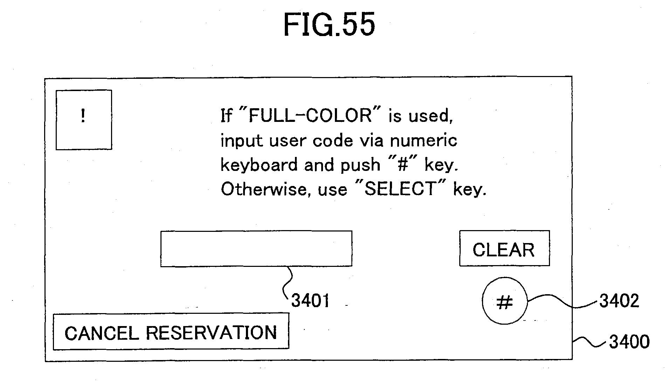

FIG. 55 shows an exemplary certification screen corresponding to a case where management via user codes is set as certification means and charge means of the copy application 3042. A certification screen 3400 shown in FIG. 55 includes an input space 3401 for inputting a user code and a message to prompt a user to input a user code. When the user inputs a user code in the input space 3401 and pushes "#" button 3402, the multifunctional product 3001 displays a copying screen 3300 on the operation panel 3120.

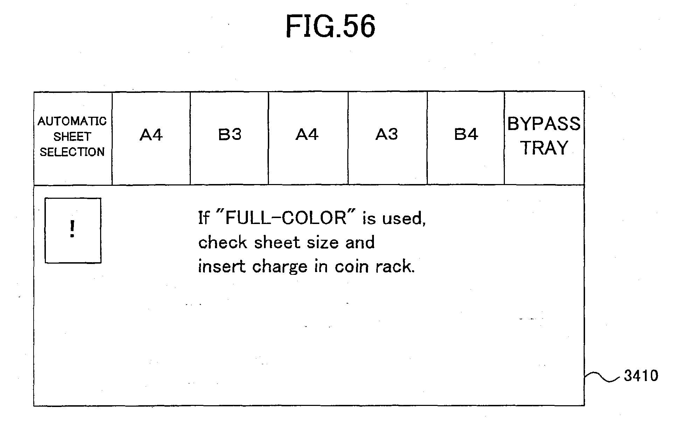

FIG. 56 shows an exemplary certification screen corresponding to a case where management via a coin rack is set as certification means and charge means of the copier application. A certification screen 3410 shown in FIG. 56 includes a message to prompt the user to supply money in the coin rack 3207. When the user supplies a specified mount of money in the coin rack 3207, the multifunctional product 3001 performs certification as described below. If the certification is successfully completed, the copying screen 3300 is displayed on the operation panel 3120 of the multifunctional product 3001.

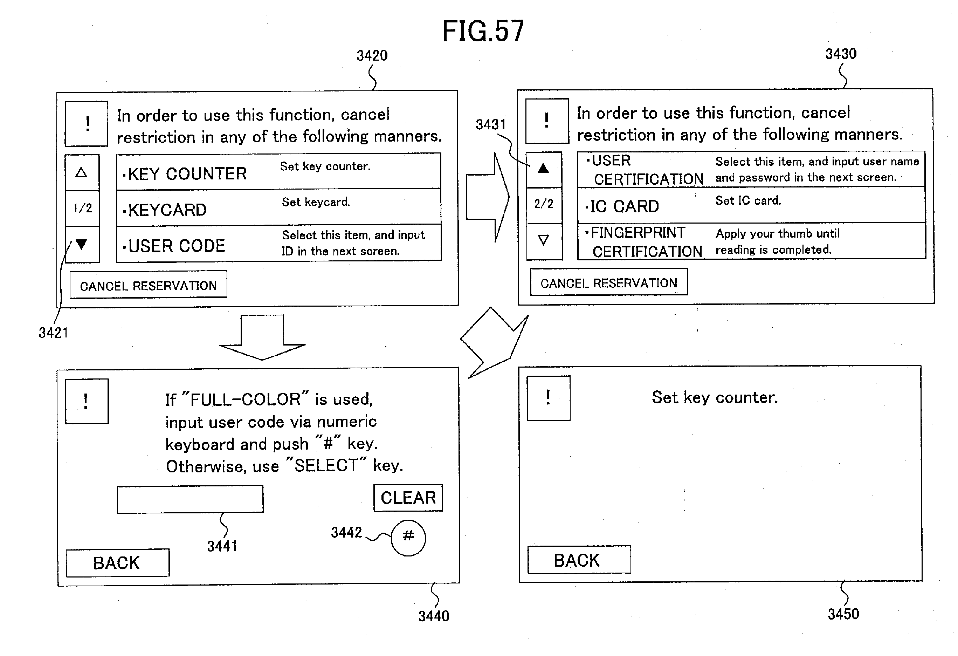

FIG. 57 shows an exemplary certification screen corresponding to a case where management using a plurality of means is set as certification means and charge means of the copier application. Screens 3420 and 3430 include buttons to select a key counter, a keycard, a user code, user certification, an IC card 3205 and fingerprint certification, provided in the certification and charge setting table 3201 as certification means and charge means of the copier application.

Here, when the user pushes a button 3421 during displaying of the screen 3420 on the operation panel 3120, the multifunctional product 3001 displays a screen 3430 on the operation panel 3120. On the other hand, when the user pushes a button 3431 during displaying of the screen 3430 on the operation panel 3120, the multifunctional product 3001 displays a screen 3420 on the operation panel 3120.

For example, when the user pushes a button to select a user code in the screen 3420, a certification screen 3440 corresponding to a case where management via a user code is set is displayed on the operation panel 3120 of the multifunctional product 3001. Also, when the user pushes a button to select a key counter in the screen 3420, a certification screen 3450 corresponding to a case where management via a key counter is set is displayed on the operation panel 3120 of the multifunctional product 3001.

When the certification is successfully completed as described above, the copying screen 3300 is displayed on the operation panel 3120 of the multifunctional product 3001. In the certification screen shown in FIG. 57, if certification corresponding to one of a plurality of means registered in the certification and charge setting table 3201 as certification means and charge means is successfully completed, the copying screen 3300 is displayed on the operation panel 3120. In this case, disjunction (OR) of the plurality of certification modules 3070 is set as certification means in the certification and charge setting table 3201.

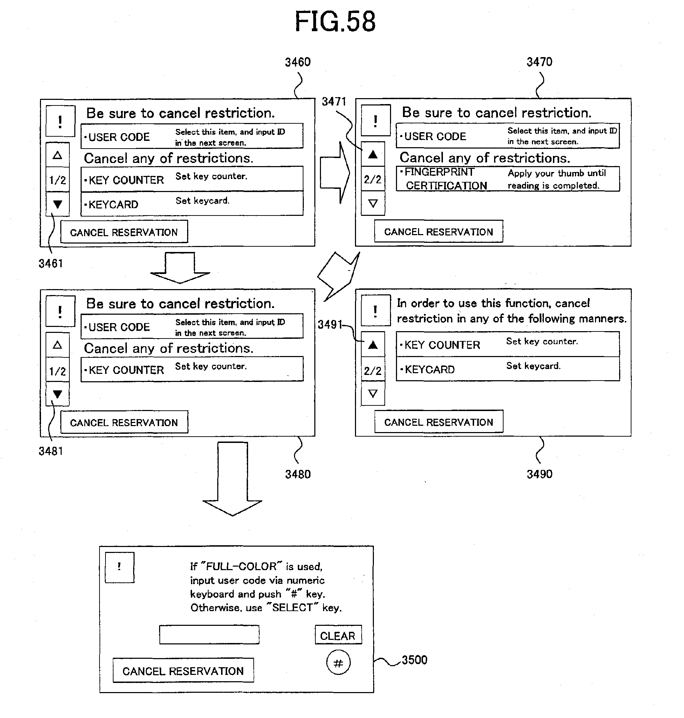

FIG. 58 shows an exemplary certification screen corresponding to a case where management using a plurality of means is set as certification means and charge means of the copier application. Screens 3460 and 3470 include buttons to select a user code, a key counter, a keycard and fingerprint certification provided in the certification and charge setting table 3201 as certification means and charge means of the copier application.

In the screens 3460 and 3470, if certification of the user is not successfully completed by using a user code and one of a key counter, a keycard and fingerprint certification, the copying screen 3300 cannot be displayed on the operation panel 3120.

Here, when the user pushes a button 3461 during displaying of the screen 3460 on the operation panel 3120, the multifunctional product 3001 displays the screen 3470 on the operation panel 3120. On the other hand, when the user pushes a button 3471 during displaying of the screen 3470 on the operation panel 3120, the multifunctional product 3001 displays the screen 3460 on the operation panel 3120.

For example, when the user pushes a button to select a keycard in the screen 3460, a certification screen (not illustrated) corresponding to a case where management via the keycard is set is displayed on the operation panel 3120 of the multifunctional product 3001. If the certification via the keycard is successfully completed, a screen 3480 having a button to select a user code or a key counter is displayed on the operation panel 3120 of the multifunctional product 3001.

When the user pushes a button to select a user code in the screen 3480, a certification screen 3500 corresponding to a case where management via the user code is set is displayed on the operation panel 3120 of the multifunctional product 3001. If the certification using the user code is successfully completed, the copying screen 3300 is displayed on the operation panel 3120 of the multifunctional product 3001.

Also, when the user pushes a button to select a user code in the screen 3460, a certification screen (not illustrated) corresponding to a case where management via the user code is set is displayed on the operation panel 3120 of the multifunctional product 3001. If the certification using the user code is successfully completed, a screen 3490 having a button to select a key counter or a keycard is displayed on the operation panel 3120 of the multifunctional product 3001.

When the user pushes the button to select a key counter or a keycard in the screen 3490, a certification screen (not illustrated) corresponding to a case where management via the key counter or the keycard is set is displayed on the operation panel 3120 of the multifunctional product 3001. If the certification using the key counter or the keycard is successfully completed, the copying screen 3300 is displayed on the operation panel 3120 of the multifunctional product 3001.

As mentioned above, if the certification using a user code and one of a key counter, a keycard and fingerprint certification is successfully completed, the copying screen 3300 is displayed on the operation panel 3120 of the multifunctional product 3001. In the certification screen shown in FIG. 58, if the certification using a predefined combination of a plurality of means registered in the certification and charge setting table 3201 as certification means and charge means is successfully completed, the copying screen 3300 is displayed on the operation panel 3120. In this case, conjunction (AND) of the plurality of certification modules 3070 is set as certification means in the certification and charge setting table 3201.

Next, an exemplary operation of the multifunctional product 3001 to which a certification module 3070 and a charge module 3071 are added depending on addition of certification means and charge means, focused on an operation of the certification module 3070 and the charge module 3071, is described.

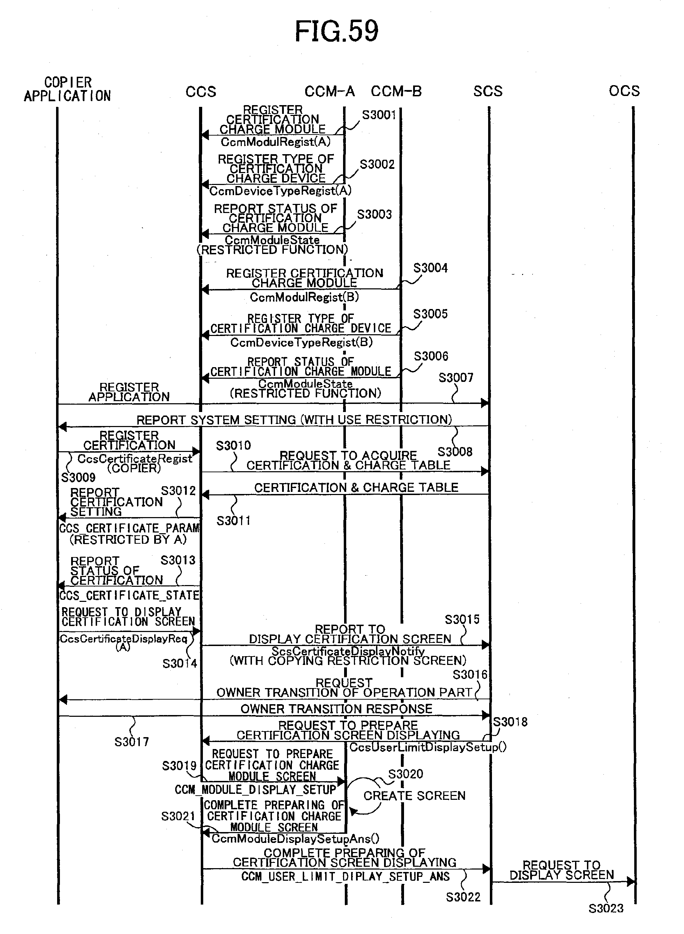

FIG. 59 is a sequence diagram of an exemplary operation of a certification module and a charge module according to the second embodiment. For example, when the application set 3040 and the platform 3050 are activated, the certification module 3070 and the charge module 3071 of the multifunctional product 3001 proceed to step S3001. In FIG. 59, the certification module 3070 and the charge module 3071 are represented as "CCM-A" and "CCM-B", respectively.

At step S3001, CCM-A registers the certification module 3070 or the charge module 3071 (hereinafter which are collectively referred to as certification charge modules) in CCS 3068. At step S3002, CCM-A registers the type of certification means or charge means corresponding to the certification charge modules (for example, coin rack 3207) as the type of certification and charge devices in CCS 3068. At step S3003, CCM-A reports the status of the certification charge modules to CCS 3068.

At step S3004, CCM-B registers certification charge modules in CCS 3068. At step S3005, CCM-B registers the type of certification means and charge means corresponding to the certification charge modules as the type of certification and charge devices in CCS 3068. At step S3006, CCM-B reports the status of the certification charge modules to CCS 3068. The operation of steps S3001 through S3003 and steps S3004 through S3006 is performed on all certification modules 3070 and charge modules 3071 of CCS 3068.

At step S3007, the copier application 3042 performs application registration on SCS 3069. At step S3008, SCS 3069 sends to the copier application 3042 a system setting report indicating that use restriction is provided with the copier application 3042. If the copier application 3042 has use restriction based on the system setting report at step S3008, the copier application 3042 performs certification registration on CCS 3068 at step S3009. At step S3010, CCS 3068 requests SCS 3069 to acquire the certification and charge setting table 3201. At step S3011, SCS 3069 supplies the certification and charge setting table 3201 to CCS 3068.

At step S3012, CCS 3068 identifies a certification charge module set as certification means or charge means of the copier application 3042 with reference to the certification and charge setting table 3201, and supplies contents thereof as a certification setting report to the copier application 3042. For example, in the certification and charge setting table 3201 shown in FIG. 50, CCS 3068 identifies the certification means A and the charge means I set as the certification means and the charge means of the copier application 3042, and supplies the contents thereof as a certification setting report to the copier application 3042.

At step S3013, CCS 3068 reports the certification status to the copier application 3042. Through the certification status report, the certification status (for example, the status where the use is restricted) of the certification charge module identified at step S3012 is reported.

For example, if the copying screen 3300 is displayed on the operation panel 3120, the copier application 3042 requests CCS 3068 to display a certification screen. At step S3015, CCS 3068 issues a certification screen display report corresponding to the certification means of the copier application 3042. For example, CCS 3068 issues a certification screen display report corresponding to the certification means A set as the certification means of the copier application 3042.

At step S3016, SCS 3069 issues an operation part owner transition request to the copier application 3042. At step S3017, the copier application 3042 issues an operation part owner transition response to SCS 3069. Through the operation of steps S3016 and S3017, an owner of the operation part of the multifunctional product 3001 is switched into the copier application 3042.

At step S3018, SCS 3069 issues a certification screen display preparing request to CCS 3068. At step S3019, CCS 3068 issues a certification charge module screen preparing request to the certification means of the copier application 3042. For example, CCS 3068 issues the certification charge module screen preparing request to CCM-A set as the certification means of the copier application 3042.

At step S3020, CCM-A set as the certification means of the copier application 3042 creates a screen for the certification charge module screen such as screens 3400 and 3410. At step S3021, CCM-A informs CCS 3068 that the certification charge module screen has been prepared.

At step S3022, CCS 3068 informs SCS 3069 that the displaying of the certification screen has been prepared. At step S3023, SCS 3069 displays the certification charge module screen on the operation panel 3120 by requesting OCS 3063 to display the certification charge module screen created at step S3020.

In the multifunctional product 3001, the certification module 3070 or the charge module 3071 manages the certification charge module screen, and SCS 3069 manages a screen to select the certification charge module screen (for example, the screens 3420 and 3430).

According to the sequence diagram shown in FIG. 59, the certification module 3070 creates the certification charge module screen displayed on the operation panel 3120. As a result, programs of SCS 3069 do not have to be modified in response to addition of the certification charge module. Also, the certification charge module performs registration on CCS 3068 as at steps S3001 through S3006 in the sequence diagram shown in FIG. 59. As a result, it is unnecessary to modify the programs of SCS 3069 in response to the addition of the certification charge module. In this manner, the multifunctional product 3001 according to the second embodiment makes it easier to add a new certification function and a new charge function.

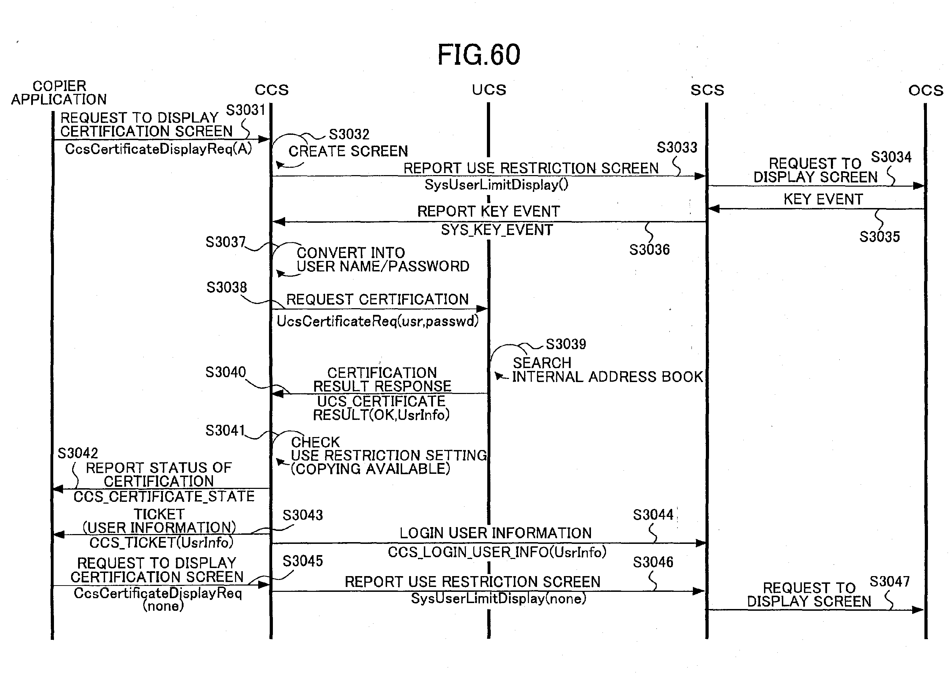

Next, an exemplary operation to cancel use restriction of the application set 3040 via certification screens is described. FIG. 60 is a sequence diagram of a first exemplary user restriction cancel operation of a multifunctional product according to the second embodiment. In the sequence diagram shown in FIG. 60, steps S3001 through S3013 in FIG. 59 prior to step S3031 are omitted.

At step S3031, the copier application 3042 requests CCS 3068 to display a certification screen. At step S3032, CCS 3068 causes the certification module 3070 to create a certification screen corresponding to certification means of the copier application 3042. At step S3033, CCS 3068 issues a use restriction screen report. At step S3034, SCS 3069 displays the certification screen on the operation panel 3120 by requesting OCS 3063 to display the certification screen created at step S3032.

In the following, an example of setting user certification as the certification means of the copier application 3042 is described. In response to the screen displaying request at step S3034, a certification screen for user certification is displayed on the operation panel 3120.

When a user inputs a user name and a password in the certification screen for the purpose of the user certification, OCS 3063 reports a key event to SCS 3069 at step S3035. At step S3036, SCS 3069 reports the key event to CCS 3068.

At step S3037, CCS 3068 converts the reported key event into the user name and the password. At step S3038, CCS 3068 requests UCS 3067 to authenticate the user name and the password. At step S3039, UCS 3067 compares the user name and the password supplied from CCS 3068 with contents in an address book table 3202.

At step S3040, UCS 3067 sends the certification result at step S3039 as a certification result response to CCS 3068. At step S3041, CCS 3068 checks use restriction set in the certification and charge setting table 3201.

In the following, an example of cancelling use restriction of the copier application 3042 based on the check result at step S3041 is described. At step S3042, CCS 3068 informs the copier application 3042 that the use restriction is to be cancelled based on the certification status report. At step S3043, CCS 3068 supplies to the copier application 3042 a ticket representing that the user has been authenticated.

This ticket includes an expiration date, acquisition date and time, an encryption key for encrypting the ticket, user information, and a digest message (DM) of the whole ticket. The user information includes a user name, a password, an entry ID, use restriction information, and local/remote operation identification information, for example.

The copier application 3042 having the ticket is allowed to use various services provided by individual processes. Also, the digest message of the whole ticket is used to detect falsification of the ticket.

At step S3044, CCS 3068 supplies login user information to SCS 3069. The login information rather than the ticket is supplied to SCS 3069, because the certification is required again by items of system initial setting.

When receiving the ticket, the copier application 3042 requests CCS 3068 to display a certification screen to delete a certification screen at step S3045. At step S3026, CCS 3068 requests SCS 3069 to display the certification screen to delete the certification screen.

At step S3047, SCS 3069 displays the copying screen 3300 on the operation panel 3120 by requesting OCS 3063 to display the copying screen 3300.

In other words, when the use restriction of the copier application 3042 is cancelled, the copying screen 3300 can be displayed on the operation panel 3120. As a result, the user can make use of function provided by the copier application 3042.

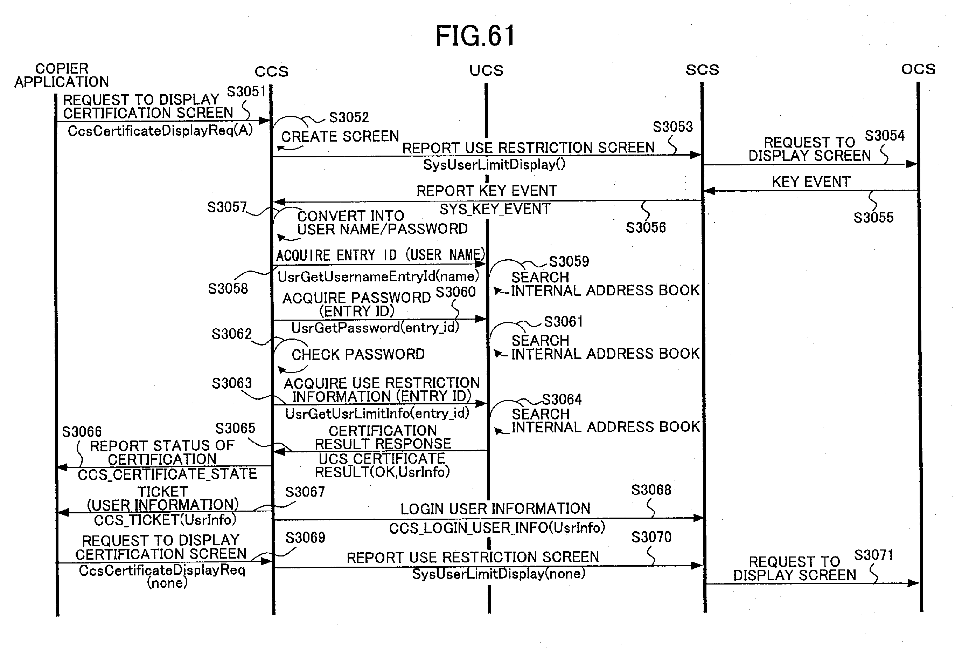

FIG. 61 is a sequence diagram of a second exemplary use restriction cancel operation of a multifunctional product according to the second embodiment. In the sequence diagram in FIG. 61, steps S3001 through S3013 in FIG. 59 prior to step S3051 are omitted as in FIG. 60. Also, steps S3051 through S3057 are similar to steps S3031 through S3037 in FIG. 60, and the description thereof is omitted.

At step S3058, CCS 3068 uses the user name converted at step S3057 to issue an entry ID acquisition request. At step S3059, UCS 3067 searches an address book table 3202 by using the user ID supplied from CCS 3068 as key information, and reads an entry ID corresponding to the user ID. CCS 3068 acquires the entry ID read from the address book table 2202 from UCS 3067.

At step S3060, CCS 3068 uses the entry ID acquired from UCS 3067 to issue a password acquisition request. At step S3061, UCS 3067 searches the address book table 3202 by using the entry ID supplied from CCS 3068 as key information, and reads a password corresponding to the entry ID. The read password is supplied from UCS 3067 to CCS 3068.

At step S3062, CCS 3068 performs certification by comparing the password converted at step S3057 with the password supplied from UCS 3067. If the certification is successfully completed, CCS 3068 uses the entry ID acquired from UCS 3067 to issue a restriction information acquisition request at step S3063.

At step S3064, UCS 3067 searches the address book table 3202 by using the entry ID supplied from CCS 3068 as key information, and reads restriction information corresponding to the entry ID.

At step S3065, UCS 3067 sends the restriction information read at step S3064 as a certification result response to CCS 3068. For example, based upon the certification result response at step S3065, the use restriction of the copier application 3042 is cancelled. Here, steps S3066 through S3071 in FIG. 61 are similar to steps S3042 through S3047 in FIG. 60, and the description thereof is omitted.

In this manner, if the user restriction of the copier application 3042 is cancelled, the copying screen 3300 is displayed on the operation panel 3120. As a result, the user can make use of functions provided by the copier application 3042.

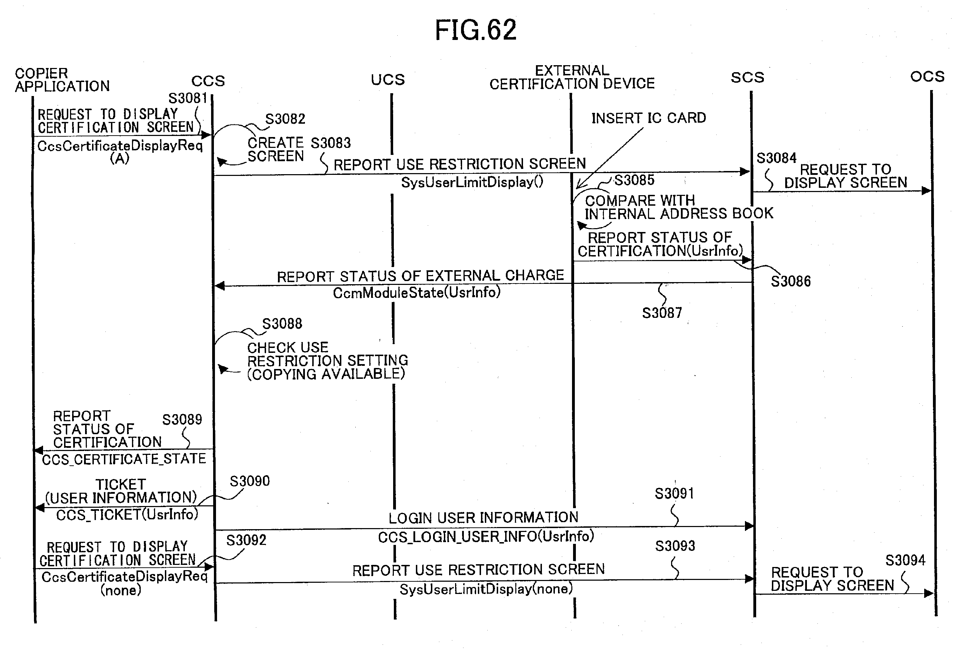

FIG. 62 is a sequence diagram of a third exemplary use restriction cancel operation of a multifunctional product according to the second embodiment. In the sequence diagram in FIG. 62, steps S3001 through S3013 prior to step S3081 are omitted as in FIG. 60. Also, steps S3081 through S3083 in FIG. 62 are similar to steps S3031 through S3033 in FIG. 60, and the description thereof is omitted.

At step S3084, SCS 3069 displays a certification screen on the operation panel 3120 by requesting OCS 3063 to display the certification screen created at step S3082.

In the following, an example of using the IC card 3205 as the certification means of the copier application 3042 is described. In response to the screen displaying request at step S3084, a certification screen for IC card certification is displayed. When the user inserts the IC card 3205 in the card reader 3204, the card reader 3204, which is an embodiment of an external certification device, performs certification by comparing information recorded in the IC card 3205 with information recorded in an address book of the card reader 3204.

At step S3086, the card reader 3204 sends the certification result at step S3085 as a certification status report to SCS 3069. At step S3087, SCS 3069 sends an external charge status report to CCS 3068 based on the certification status report received at step S3086. Here, steps S3088 through S3094 in FIG. 62 are similar to steps S3041 through S3047 in FIG. 60, and the description thereof is omitted.

In this manner, if the use restriction of the copier application 3042 is cancelled, the copying screen is displayed on the operation panel 3120. As a result, the user can make use of functions provided by the copier application 3042.

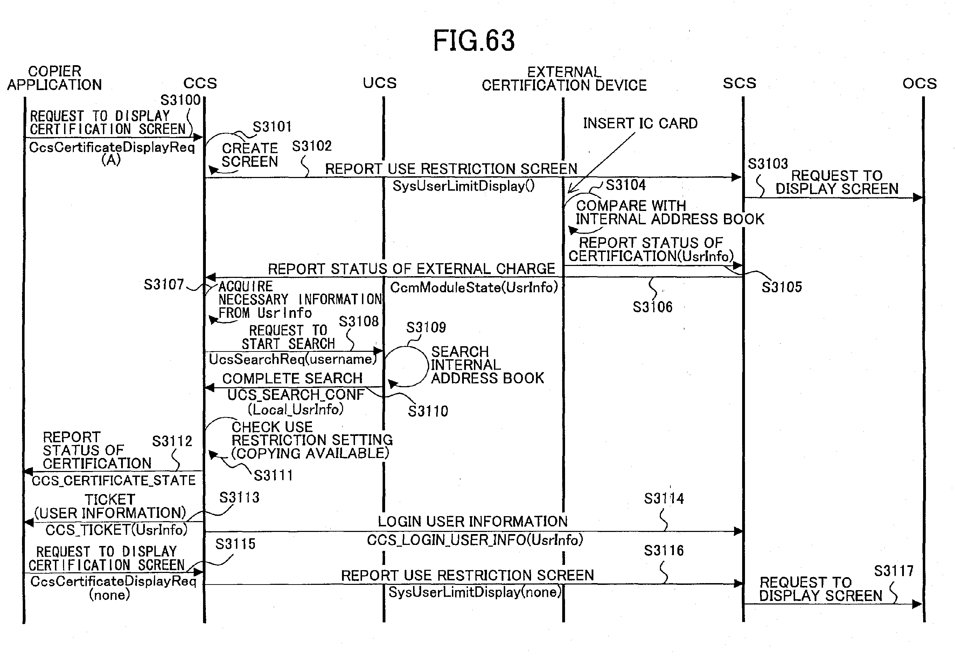

FIG. 63 is a sequence diagram of a fourth exemplary use restriction cancel operation of a multifunctional product according to the second embodiment. In the sequence diagram in FIG. 63, steps S3001 through S3013 prior to step S3100 are omitted as in FIG. 60. Also, steps S3100 through S3106 are similar to steps S3081 through S3087, and the description thereof is omitted.

At step S3107, CCS 3068 acquires information required to search the address book table 3202 from the external charge status report received from SCS 3069 at step S3106. At step S3108, CCS 3068 requests UCS 3067 to start the searching.

At step S3109, UCS 3067 searches the address book table 3202 by using information supplied together with the search start request from CCS 3068 as key information, and reads user information corresponding to the information. UCS 3067 sends the read user information as a search completion notice to CCS 3068.

At step S3111, CCS 3068 checks use restriction set in the certification and charge setting table 3201 based on the search completion notice received at step S3110. Here, steps S3112 through S3117 in FIG. 63 are similar to steps S3089 through S3094 in FIG. 62, and the description thereof is omitted.

In this manner, if the use restriction of the copier application 3042 is cancelled, the copying screen 3300 is displayed on the operation panel 3120. As a result, the user can make use of functions provided by the copier application 3042.

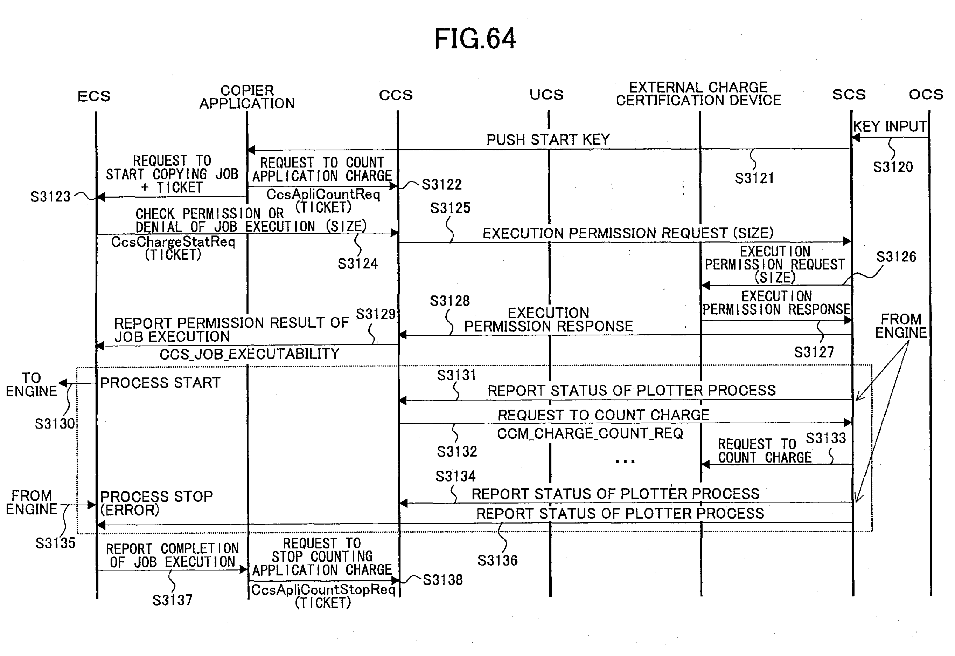

Next, exemplary charge operations after the copying screen 3300 is displayed on the operation panel 3120 of the multifunctional product 3001 are described. FIG. 64 is a sequence diagram of a first exemplary charge operation of a multifunctional product according to the second embodiment.

At step S3120, OCS 3063 informs SCS 3069 that a user has supplied a start key. At step S3121, SCS 3069 informs the copy application 3042 that the start key has been pushed. In response to receipt of the notice, the copy application 3042 requests CCS 3068 to count charge for the application.

At step S3123, the copier application 3042 issues a copying job start request together with a ticket to ECS 3065. At step S3124, ECS 3065 asks CCS 3068 whether the job involved in a sheet size can be executed. At step S3125, CCS 3068 asks SCS 3069 whether the job involved in the sheet size can be executed.

At step S3126, SCS 3069 issues an executability (permission or denial of job execution) request including the sheet size to an external charge certification device such as the coin rack 3307. At step S3127, the external charge certification device determines whether the job can be executed based on the sheet size and remaining deposit, and sends an executability response corresponding to the determination result to SCS 3069.

At step S3128, SCS 3069 sends the executability response received at step S3127 to CCS 3068. At step S3129, based on the executability response received at step S3128, CCS 3068 sends a job executability result notice to ECS 3065.

If the job executability result notice indicates that the job can be executed, ECS 3065 reports process start to the engine part 3122 at step S3130. At step S3131, CCS 3068 receives the status of a plotter process from the engine part 3122.

At step S3132, based on the status of the plotter process received from SCS 3069, CCS 3068 requests SCS 3069 to count charge. At step S3133, SCS 3069 issues a charge counting request to the external charge certification device set in the certification and charge setting table 3201 as the charge means of the copy application 3042. In other words, the charge counting operation is performed in the external charge certification device.

At step S3134, the plotter process status is supplied from the engine part 3122 to CCS 3068. At step S3136, the plotter process status is supplied from the engine part 3122 to ECS 3065. At step S2315, a process end is supplied from the engine part 3122 to ECS 3065.

In response to receipt of the process end, ECS 3065 informs the copier application 3042 that the job has been executed at step S3137. At step S3138, the copy application 3042 requests CCS 3068 to stop counting the application charge.

According to the charge operation in FIG. 64, even if copying charge is variable depending on sheet sizes, it is possible to execute a job by checking executability of the job including a sheet size. Specifically, if the current deposit can cover the copying charge corresponding to the sheet size, the job is executed.

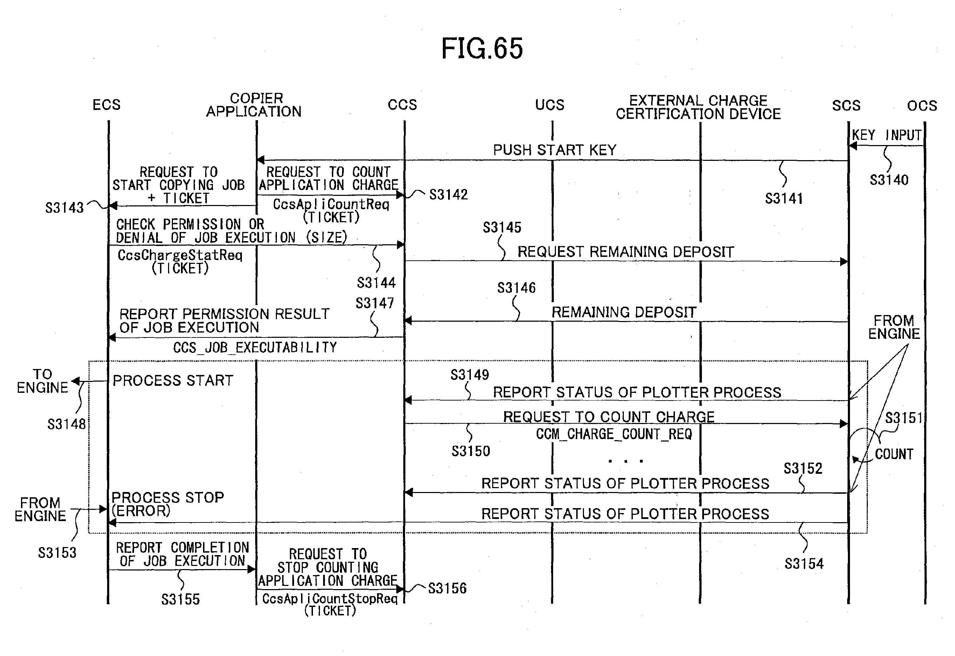

FIG. 65 is a sequence diagram of a second exemplary charge operation of a multifunctional product according to the second embodiment. In the sequence diagram in FIG. 65, steps S3140 through S3144 are similar to steps S3120 through S3124 in FIG. 64, and the description thereof is omitted.

At step S3145, CCS 3068 requests SCS 3069 current remaining deposit. At step S3146, SCS reports the remaining deposit to CCS 3068. Based upon the reported remaining deposit, CCS 3068 determines whether a job can be executed.

At step S3147, based on the determination result, CCS 3068 reports the job executability result to ECS 3065. Here, steps S3148 through S3150 are similar to steps S3130 through S3132 in FIG. 64, and the description thereof is omitted.

At step S3151, in response to the charge counting request at step S3150, SCS 3069 counts charge. In other words, SCS 3069 rather than the external charge certification device performs the charge counting operation. Here, steps S3152 through S3156 are similar to steps S3134 through S3138 in FIG. 64, and the description thereof is omitted. According to the charge operation in FIG. 65, it is checked whether a job can be executed, and if current deposit sufficiently remains, the job is allowed to be executed.

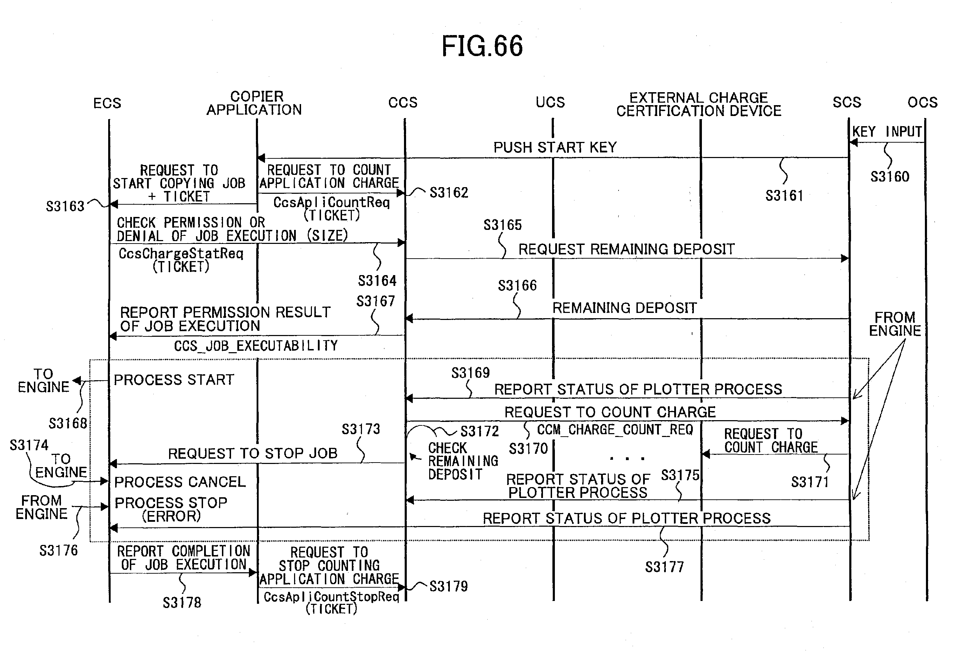

FIG. 66 is a sequence diagram of a third exemplary charge operation of a multifunctional product according to the second embodiment. In the sequence diagram in FIG. 66, steps S3160 through S3170 are similar to steps S3140 through S3150 in FIG. 65, and the description thereof is omitted.

At step S3171, SCS 3069 requests an external charge certification device, which is set in the certification and charge setting table 3201 as the charge means of the copy application 3042, to count charge. In other words, the charge counting operation is performed in the external charge certification device.

At step S3172, based on current remaining deposit reported by SCS 3069 at step S3166, CCS 3068 checks the remaining deposit. If the remaining deposit is 0, CCS 3068 requests ECS 3065 to stop the job at step S3173. At step S3174, in response to the job stop request, ECS 3065 instructs the engine part 3122 to cancel the process. Here, steps S3175 through S3179 are similar to steps S3153 through S3156 in FIG. 65, and the description thereof is omitted. According to the charge operation in FIG. 66, CCS checks current remaining deposit, and if the deposit is used up, CCS 3068 can stop the job.

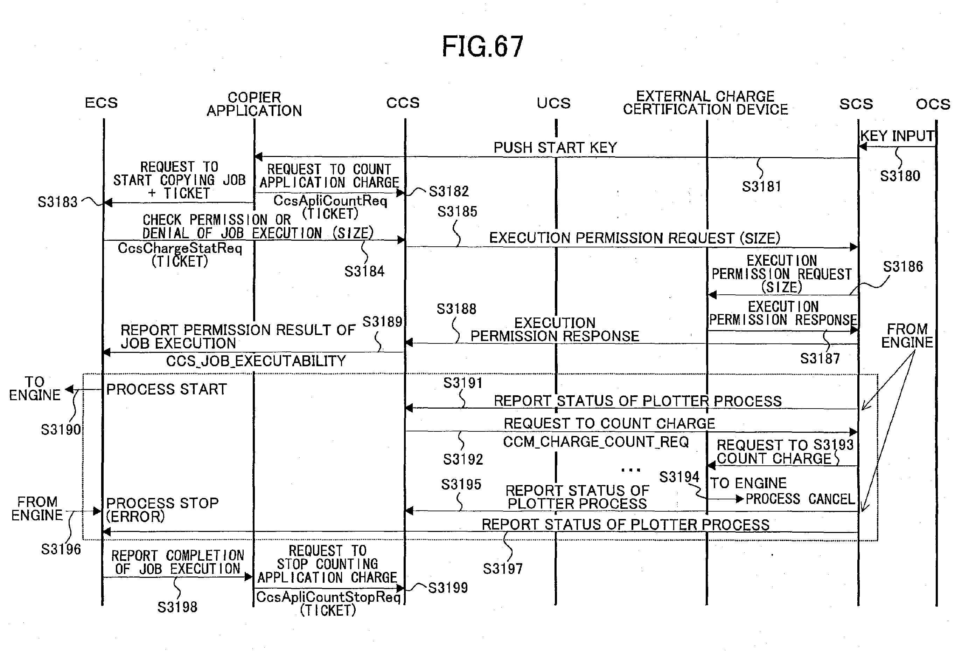

FIG. 67 is a sequence diagram of a fourth exemplary charge operation of a multifunctional product according to the second embodiment. In the sequence diagram in FIG. 67, steps S3180 through S3193 are similar to steps S3120 through S3133 in FIG. 64, and the description thereof is omitted.

At step S3194, if the remaining deposit is 0, the external charge certification device instructs the engine part 3122 to cancel the process. In other words, the external charge certification device stops the process of the engine part 3122. Here, steps S3195 through S3199 are similar to steps S3134 through S3138 in FIG. 64, and the description thereof is omitted. According to the charge operation in FIG. 67, the external charge certification device checks current remaining deposit, and when the deposit is used up, the external charge certification device can stop the job.

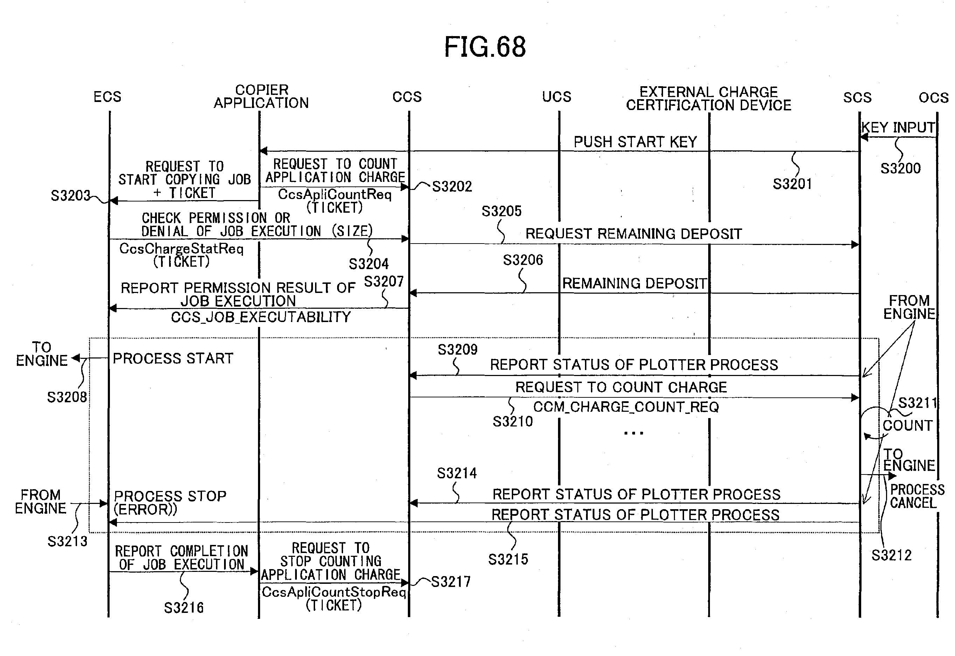

FIG. 68 is a sequence diagram of a fifth exemplary charge operation of a multifunctional product according to the second embodiment. In the sequence diagram in FIG. 68, steps S3200 through S3211 are similar to steps S3140 through S3151 in FIG. 65, and the description thereof is omitted.

At step S3212, if the current remaining deposit is 0, SCS 3069 instructs the engine part 3122 to cancel the process. In other words, SCS 3069 stops the process of the engine part 3122. At step S3213, the engine part 3122 informs ECS 3065 that the process has been stopped.

At step S3214, the engine part 3122 reports a plotter process status to CCS 3068. At step S3215, the engine part 3122 reports the plotter process status to ECS 3065. Here, steps S3216 and S3217 are similar to steps S3155 through S3156 in FIG. 65, and the description thereof is omitted. According to the charge operation in FIG. 68, when the deposit is used up, SCS 3069 can stop the job.

Although the cases where the use restriction of the application set 3040 is cancelled have been described with reference to FIG. 60 through FIG. 63, the case where the use restriction cannot be cancelled has to be considered. Next, examples where the use restriction of the application set 3040 cannot be cancelled are described.

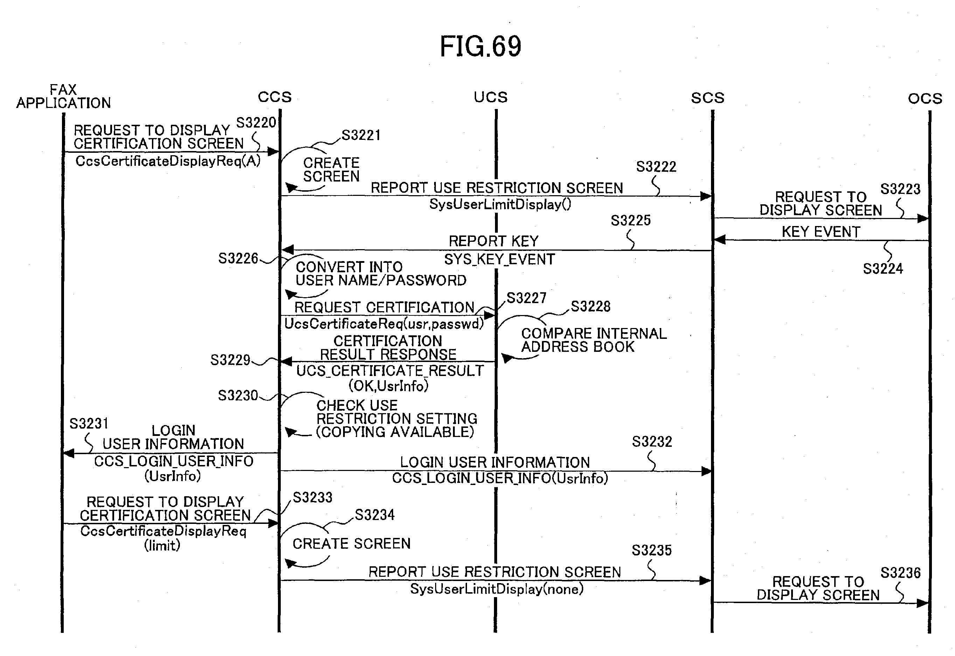

FIG. 69 is a sequence diagram of an exemplary use restriction cancel operation for the case where use restriction is not cancelled. In the sequence diagram in FIG. 69, steps S3001 through S3013 in FIG. 59 prior to step S3220 are omitted as in the sequence diagram in FIG. 60.

At step S3220, the FAX application 3043 requests CCS 3068 to display a certification screen. At step S3221, CCS 3068 instructs the certification module 3070 to create a certification screen corresponding to the certification means of the FAX application 3043. At step S3222, CCS 3068 sends a use restriction screen. At step S3223, SCS 3069 displays the certification screen on the operation panel 3120 by requesting OCS 3063 to display the certification screen created at step S3221.

In the following, a case where user certification is set as the certification means of the FAX application 3043 is described. In response to the screen displaying request at step S3223, a certification screen to authenticate the user is displayed on the operation panel 3120. Here, steps S3224 through S3229 are similar to steps S3035 through S3040 in FIG. 60, and the description thereof is omitted.

At step S3230, CCS 3068 checks use restriction set in the certification and charge setting table 3201. In the following, a case where the use restriction of the FAX application 3043 is not cancelled based on the check result at step S3230 is described. At step S3231, CCS 3068 determines that the use restriction is not cancelled based on the check result at step S3230, and sends login user information to the FAX application 3043. At step S3232, CCS 3068 sends the login user information to SCS 3069.

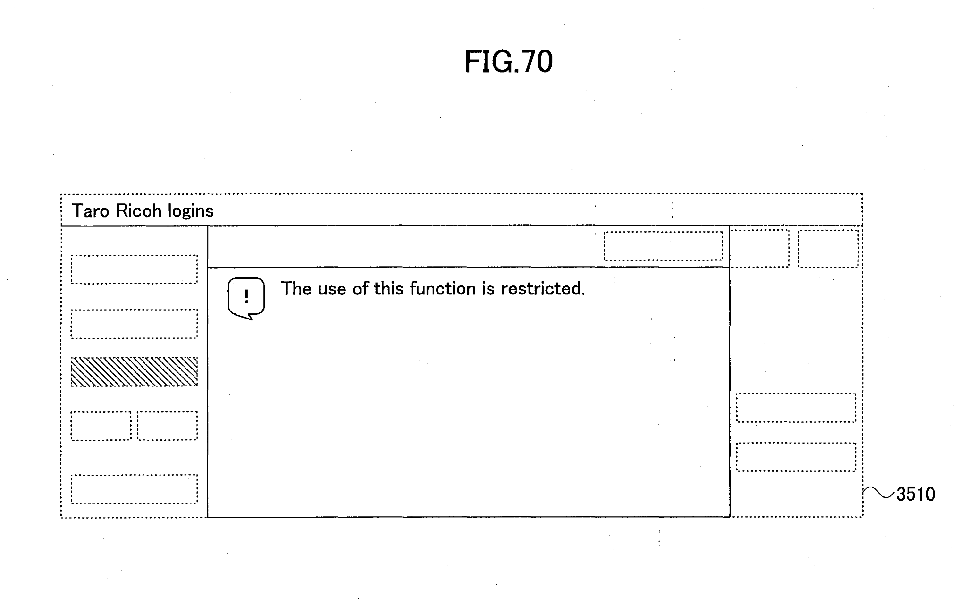

In response to receipt of the login user information, the FAX application 3043 issues a certification screen display request to display a use restriction screen 3510, as illustrated in FIG. 70, on the operation panel 3120 to CCS 3068 at step S3233. FIG. 70 shows an exemplary use restriction screen. The illustrated user restriction screen includes a message indicating that the use of a function is restricted. At step S3234, CCS 3068 creates the use restriction screen 3510.

At step S3235, CCS 3068 sends issues a use restriction screen notice to SCS 3069. At step S3236, SCS 3069 displays the use restriction screen 3510 on the operation panel 3120 by requesting OCS 3063 to display the use restriction screen 3510.

In other words, if the use restriction of the FAX application 3043 is not cancelled, the use restriction screen 3510 is displayed on the operation panel 3120, and the user cannot make use of functions provided by the FAX application 3043.

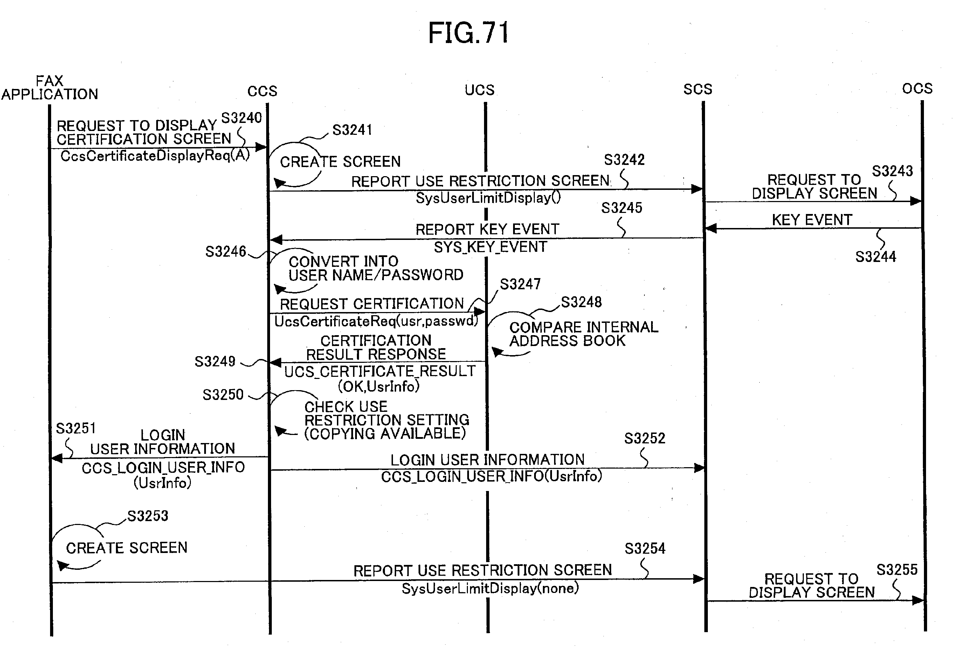

FIG. 71 is a sequence diagram of another exemplary use restriction canceling operation for the case where use restriction is not cancelled. In the sequence diagram in FIG. 71, steps S3001 through S3013 in FIG. 59 prior to step S3240 are omitted. Also, steps S3240 through S3252 in FIG. 71 are similar to steps S3220 through S3232 in FIG. 69, and the description thereof is omitted.

In response to receipt of login user information, the FAX application 3043 creates the use restriction screen 3510, as illustrated in FIG. 70, at step S3253. At step S3254, the FAX application 3043 issues a use restriction screen notice to SCS 3069. At step S3255, SCS 3069 displays the use restriction screen 3510 on the operation panel 3130 by requesting OCS 3063 to display the use restriction screen 3510.

In other words, if the use restriction of the FAX application 3043 is not cancelled, the use restriction screen 3510 is displayed on the operation panel 3120, and the user cannot make use of functions provided by the FAX application 3043. It is noted that the FAX application 3043 creates the use restriction screen 3510 in accordance with the sequence diagram in FIG. 71.

Although some of the application set 3040 that use an operation part such as the operation panel 3120 of the multifunctional product 3001 are used to describe the above operations with respect to FIG. 60 through FIG. 63, another application 3040 remotely operated by a computer 3210 connected via the network 3220 may be used.

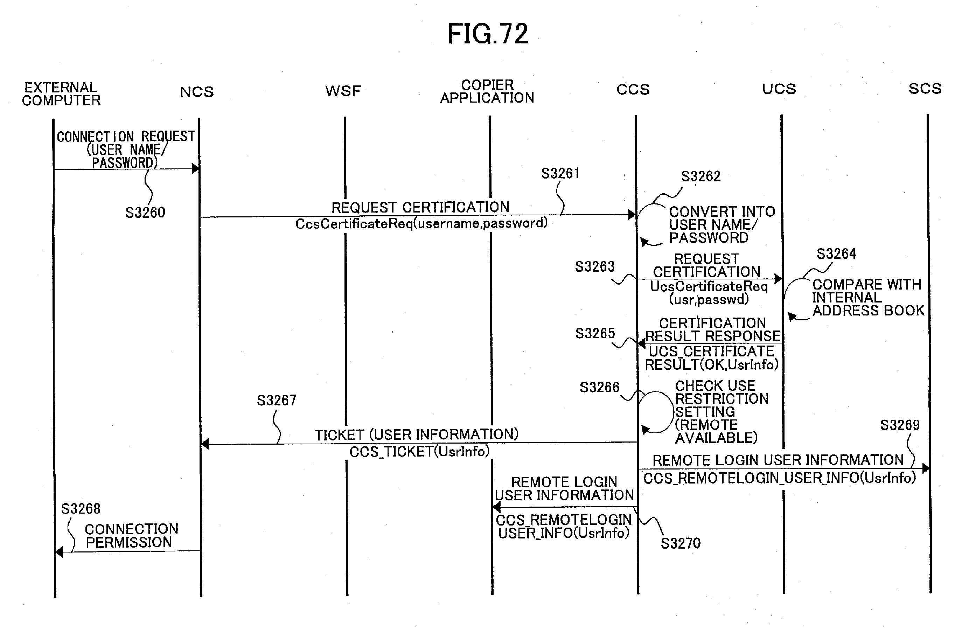

FIG. 72 is a sequence diagram of another exemplary use restriction cancel operation through remote manipulation according to the second embodiment. In FIG. 72, certification is performed at a network protocol level.

At step S3260, an external computer 3210 issues a connection request to NCS 3061. This connection request includes a user name and a password. At step S3261, NCS 3061 requests CCS 3068 to authenticate a user by providing the user name and the password as an argument. At step S3262, CCS 3068 converts the certification request into the user name and the password.

At step S3263, CCS 3068 requests UCS 3067 to authenticate the user name and the password. At step S3264, UCS 3067 authenticates the user name and password supplied from CCS 3068 by comparing the user name and password with those in the address book table 3202.

At step S3265, UCS 3067 reports the certification result at step S3264 as a certification result response to CCS 3068. At step S3266, CCS 3068 checks use restriction set in the certification and charge setting table.

In the following, a case where the use restriction is cancelled based on the check result at step S3266 is described. At step S3267, CCS 3068 supplies to NCS 3061 a ticket representing that the certification is successfully completed. Here, different tickets may be used for an application 3040 that uses the operation part, such as the operation panel 3120, of the multifunctional product 3001 and an application 3040 remotely manipulated from the computer 3210 connected via the network 3220.

At step S3268, NCS 3061 reports a connection permission for the connection request at step S3260 to the external computer 3210. At step S3269, CCS 3068 supplies login user information to SCS 3069. Since the user has to be authenticated again depending on items of the initial system setting, the user login information rather than the ticket is supplied to SCS 3069. Also, CCS 3068 supplies the user login information to the copier application 3042 at step S3270. According to the sequence diagram in FIG. 72, the user can cancel use restriction through remote manipulation.

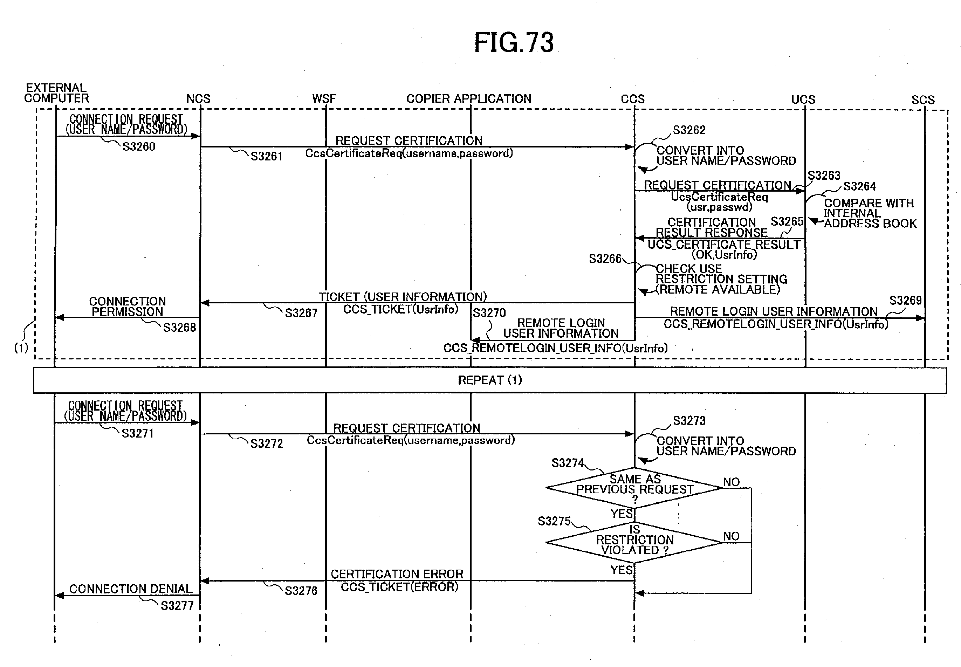

It is noted that measures against DoS (Denial of Service) attack is available in accordance with the sequence diagram in FIG. 72. FIG. 73 is a sequence diagram of an exemplary use restriction cancel operation through remote manipulation wherein measures against DoS attack are devised.

In the sequence diagram in FIG. 73, a user name and a password converted from a certification request are used. It is determined whether the certification request is received from the same user that issued the previous certification request, and if the certification request from the same user violates predefined restriction (for example, the number of access times or access time), the user is not authenticated.

For example, after the user repeats steps S3260 through S3270 via an external computer 3210, the external computer 3210 issues a connection request to NCS 3061 at step S3271. At step S3272, NCS 3061 requests CCS 3068 to authenticate the user by delivering a user name and a password as an argument. At step S3273, CCS 3068 converts the certification request into the user name and the password.

At step S3274, CCS 3068 uses the user name and the password converted at step S3273 to determine whether the certification request is from the same user that issued the previous certification request. If CCS 3068 determines that the certification request is from the same user (S3274: YES), CCS 3068 further determines whether the certification request from the user violates predefined restriction.

If CCS 3068 determines that the certification request from the user violates the predefined restriction (S3275: YES), CCS 3068 informs NCS 3061 that the certification fails at step S3276. At step S3277, NCS 3061 informs the external computer 3210 that the connection request at step S3271 is denied.

On the other hand, if CCS 3068 that the certification request is not from the same user (S3274: NO) or if the certification request from the same user does not violate the predefined restriction (S3275: NO), CCS 3068 performs operations corresponding to steps S3263 through S3270. According to the sequence diagram in FIG. 73, measures against DoS attack can be devised in the use restriction cancel operation through remote manipulation.

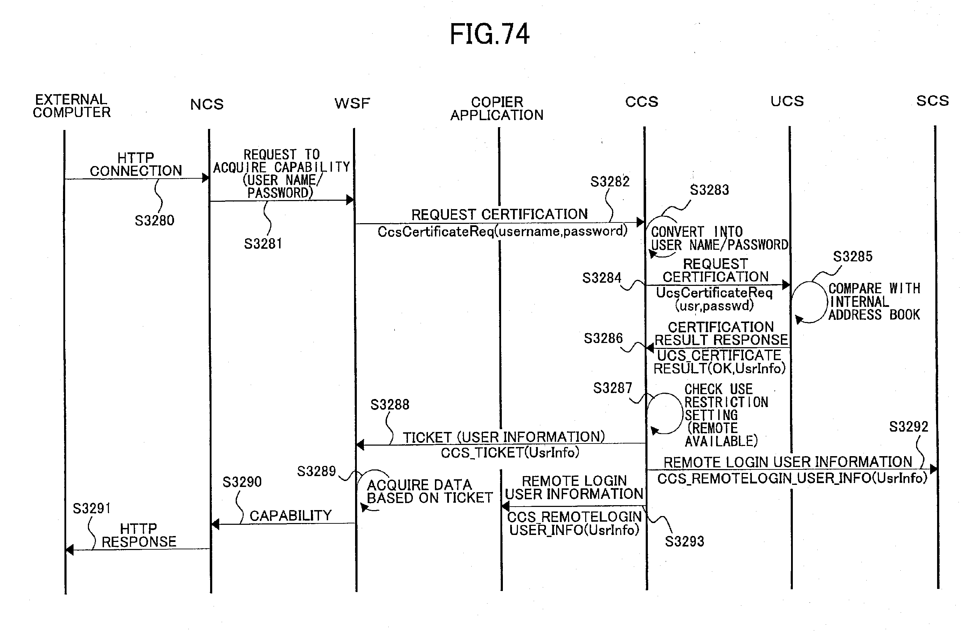

FIG. 74 is a sequence diagram of another exemplary use restriction canceling operation through remote manipulation according to the second embodiment. In FIG. 74, certification is performed at an application level to control a network protocol.

At step S3280, an external computer 3210 is connected to NCS 3061 in http. NCS 3061 is provided with a user name and a password from the external computer 3210. At step S3281, NCS 3061 requests WSF 3045 to acquire capability. This capability request includes the user name and the password.

At step S3282, WSF 3045 requests CCS 3068 to authenticate the user by delivering the user name and the password as an argument. Here, steps S3283 through S3287 are similar to steps S3262 through S3266 in FIG. 72, and the description thereof is omitted.

At step S3288, CCS 3068 supplies to WSF 3045 a ticket representing that the certification is successfully completed. Here, different tickets may be provided to an application 3040 that uses the operation part, such as the operation panel 3130, of the multifunctional product 3001 and an application 3040 remotely operated from a computer 3210 connected via the network 3220.

At step S3289, WSF 3045 uses the ticket to acquire data. At step S3290, WSF 3045 supplies the data acquired at step S3289 as capability to NCS 3061. At step S3291, NCS 3061 supplies the acquired capability as n http response to the external computer 3210.

At step S3292, CCS 3068 supplies login user information to SCS 3069. Since the user has to be authenticated again depending on items of the initial system setting, the user login information rather than the ticket is supplied to SCS 3069. At step S3293, CCS 3068 supplies the user login information to the copier application 3042. According to the sequence diagram in FIG. 74, the user can cancel use restriction through remote manipulation.

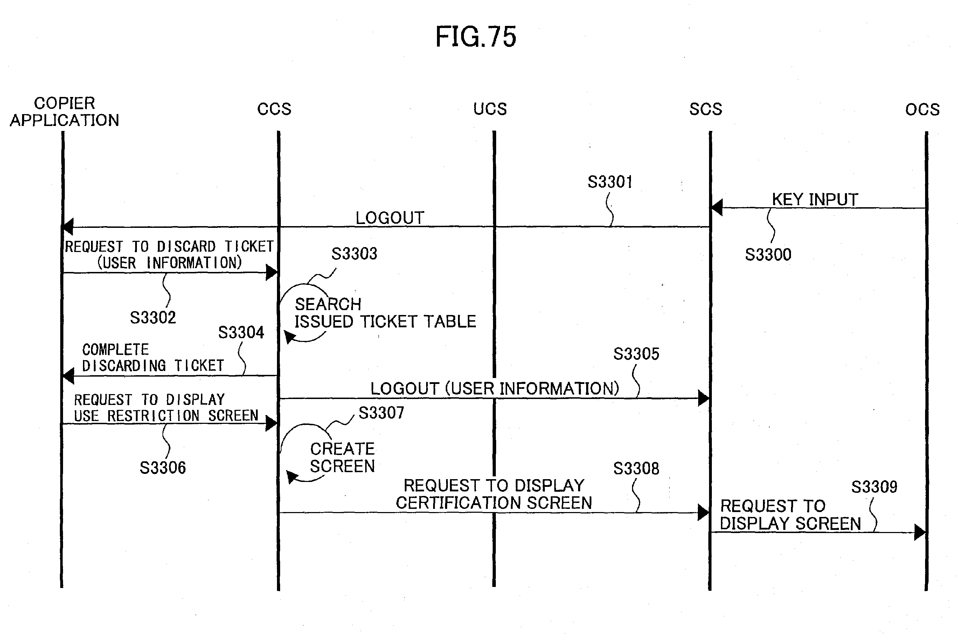

Next, an exemplary logout operation is described. FIG. 75 is a sequence diagram of an exemplary logout operation of a multifunctional product according to the second embodiment. For example, when a user inputs a logout key, OCS 3063 reports the input key information to SCS 3069.

At step S3301, SCS 3069 determines that a logout request has been provided based on the key information reported from OCS 3063, and reports the logout request to the copy application 3042. At step S3302, the copy application 3042 requests CCS 3068 to discard a ticket.

At step S3303, CCS 3068 searches an issued ticket table and discards the corresponding ticket. At step S3304, CCS 3068 informs the copier application 3042 that the ticket has been discarded.

At step S3306, the copier application 3042 issues to CCS 3068 a use restriction screen display request to display a certification screen on the operation panel 3120. At step S3307, CCS 3068 creates the certification screen. At step S3308, CCS 3068 issues a certification screen displaying request to display the certification screen to SCS 3069.

At step S3309, SCS 3069 displays the certification screen on the operation panel 3120 by requesting OCS 3063 to display the certification screen. According to the sequence diagram in FIG. 75, when a user logs out, the multifunctional product 3001 can discard a ticket.

The present invention is not limited to the specifically disclosed embodiments, and variations and modifications may be made without departing from the scope of the present invention.

The present application is based on Japanese Patent Priority Applications No. 2003-145408 filed May 22, 2003, No. 2003-152325 filed May 29, 2003, No. 2004-140134 filed May 10, 2004 and No. 2004-140135 filed May 10, 2004, the entire contents of which are hereby incorporated by reference.

## Claims

1. An information processing apparatus (1010, 3001), **characterized by**:
a restriction part restricting an operation available to a user on the information processing apparatus based on a status of the user; and
a setting part setting the status of the user.

2. The information processing apparatus (1010) as claimed in claim 1, wherein the information processing apparatus manages one or more entry information elements (1001) and imposes a restriction on user's manipulation on an entry information element,
the setting part includes a first registration function registering manipulation authority to allow a manipulation on an entry information element and setting authority to allow setting of the manipulation authority in association with the entry information element and one or more users, and
the restriction part includes a first restriction function restricting a manipulation of the users on the entry information element in accordance with the manipulation authority.

3. The information processing apparatus according to either claim 1 or claim 2, wherein the restriction part further includes a second restriction function restricting a manipulation of the users on the setting authority in accordance with the setting authority.

4. The information processing apparatus as claimed in claim 2 or 3, wherein the manipulation authority indicates permission or denial of at least one of a viewing manipulation, an editing manipulation and a deleting manipulation on the entry information element.

5. The information processing apparatus as claimed in any of claims 2 to 4, wherein the setting authority is manipulation authority to allow all manipulations on the entry information element.

6. The information processing apparatus as claimed in claim 5, wherein at least one of the manipulation authority and the setting authority is registered in association with at least one item constituting the entry information element.

7. The information processing apparatus as claimed in any of claims 2 to 6, wherein the manipulation authority is definable based on a table indicative of permission or denial of various manipulations on the entry information element.

8. The information processing apparatus as claimed in claim 5 or 6, wherein at least one of the manipulation authority and the setting authority is registered in association with one user, a group including one or more users, or all users.

9. The information processing apparatus as claimed in any one of claims 2 to 8, wherein the setting part includes a second registration function registering first group information (1003) indicative of one or more users having the manipulation authority and second group information (1002) indicative of one or more users having the setting authority in association with the entry information element.

10. The information processing apparatus as claimed in claim 9, wherein the restriction part further includes a third restriction function restricting a manipulation of the users on the first group information in accordance with the second group information.

11. The information processing apparatus as claimed in claim 9 or 10, wherein the restriction part further includes a fourth restriction function restricting a manipulation of the users on the second group information in accordance with the second group information.

12. The information processing apparatus as claimed in any of claims 9 to 11, wherein the first group information indicates permission or denial of a viewing manipulation and an editing manipulation on the entry information element for each user.

13. The information processing apparatus as claimed in any of claims 9 to 12, wherein the second group information indicates one or more users allowed to perform a user adding manipulation and a user deleting manipulation on the first group information.

14. The information processing apparatus as claimed in either claim 12 or claim 13, wherein the second group information indicates one or more users allowed to register permission or denial of a viewing manipulation and an editing manipulation on the entry information element in the first group information for each user.

15. The information processing apparatus as claimed in any one of claims 9 to 14, wherein the first group information includes a group comprising one or more users allowed to perform a manipulation on the entry information element.

16. The information processing apparatus as claimed in claim 15, wherein the first group information includes permission or denial of a viewing manipulation and an editing manipulation on the entry information element for each group or each user constituting the group.

17. The information processing apparatus as claimed in claim 16, wherein the viewing manipulation and the editing manipulation are permitted based on the permission or denial of the viewing manipulation and the editing manipulation granted to the group and the permission or denial of the viewing manipulation and the editing manipulation granted to the user.

18. The information processing apparatus as claimed in any one of claims 9 to 17, wherein the first group information is registered in association with an item group of the entry information element, and the second group information is registered in association with the entry information element.

19. The information processing apparatus as claimed in any one of claims 9 to 18, wherein the first group information is registered in association with an item of the entry information element, and the second group information is registered in association with the entry information element.

20. The information processing apparatus as claimed in any one of claims 9 to 19, wherein the first group information is registered in association with a manipulation on the entry information element, and,the second group information is registered in association with the entry information element.

21. The information processing apparatus (3001) as claimed in claim 1, wherein the information processing apparatus allows a user to cancel use restriction on a program and the user to use the program,
the setting part includes a setting function associating one or more programs (3041, 3042, 3043, 3044, 3045) having use restriction with one or more certification unit (3070) to cancel the use restriction of the programs, and
the restriction part includes a use function, when a user cancels use restriction of a program by using a certification unit associated with the program, allowing the user to use the program.

22. The information processing apparatus as claimed in claim 21, wherein the setting function associates the program with an internal or external certification unit.

23. The information processing apparatus as claimed in either claim 21 or claim 22, wherein the setting function associates the program with one or more certification units.

24. The information processing apparatus as claimed in claim 23, wherein when the program is associated with two or more certification units, the use function cancels the use restriction on the program if one of the certification units successfully authenticates the user.

25. The information processing apparatus as claimed in either claim 23 or claim 24, wherein when the program is associated with two or more certification units, the use function cancels the use restriction on the program if all the certification units successfully authenticate the user.

26. The information processing apparatus as claimed in any of claims 21 to 25, further including:
including:
a management function receiving a registration request from the certification unit and managing the certification unit.

27. The information processing apparatus as claimed in any of claims 21 to 26, wherein the use function causes the certification unit associated with the program to create a screen to cancel the use restriction on the program and a display unit to display the created screen.

28. The information processing apparatus as claimed in any of claims 21 to 27, wherein the certification unit uses any of information to identify a user, a recording medium having the information, and a component to prove use authority over the program to cancel the use restriction on the program.

29. The information processing apparatus as claimed in any one of claims 21 to 28, wherein the setting function associates the one or more programs having the use restriction with one or more certification units to cancel the use restriction of the program and one or more charge units (3071) to manage charge information corresponding to use of the program.

30. The information processing apparatus as claimed in claim 29, wherein the setting function associates a program with internal or external certification unit and charge unit.

31. The information processing apparatus as claimed in either claim 29 or claim 30, wherein the setting function associates each program with one or more certification units and charge units.

32. The information processing apparatus as claimed in claim 31, wherein when the program is associated with two or more certification units, the use function cancels the use restriction of the program if one of the certification units authenticates the user successfully.

33. The information processing apparatus as claimed in either claim 31 or claim 32, wherein when the program is associated with two or more certification units, the use function cancels the use restriction of the program if all the certification units authenticate the user successfully.

34. The information processing apparatus as claimed in any of claims 29 to 33, further including:
including:
a management function receiving a registration request from the certification unit and the charge unit and managing the certification unit and the charge unit.

35. The information processing apparatus as claimed in any of claims 29 to 34, wherein the certification unit uses any of information to identify a user, a recording medium having the information, and a component to prove use authority over the program to cancel the use restriction on the program.

36. The information processing apparatus as claimed in any of claims 29 to 35, wherein the charge unit manages the charge information by subtracting charge corresponding to an amount of use of the program from a deposit of the user or recording the amount of use of the program.

37. The information processing apparatus as claimed in any of claims 21 to 36, wherein the setting function associates internal or external certification unit and charge unit with a function of the program.

38. The information processing apparatus as claimed in any of claims 1 to 37, wherein the information processing apparatus is an image processing apparatus.

39. A method of managing entry information for an information processing apparatus (1010) that manages one or more entry information elements (1001) and restricts a manipulation of one or more users on the entry information elements, the method **characterized by** steps of:
registering manipulation authority to allow a manipulation on an entry information element and setting authority to allow setting of the manipulation authority in association with the entry information element and one or more users; and
restricting a manipulation of the users on the entry information element in accordance with the manipulation authority.

40. A method of controlling a certification function for an information processing apparatus (3001) that allows a user to cancel use restriction on a program and the user to use the program, the method **characterized by** steps of:
associating one or more programs (3041, 3042, 3043, 3044, 3045) having use restriction with one or more certification unit (3070) to cancel the use restriction of the programs; and
allowing, when a user cancels use restriction of a program by using a certification unit associated with the program, the user to use the program.

41. The method as claimed in claim 40, wherein the association step includes associating the one or more programs having the use restriction with one or more certification units to cancel the use restriction of the program and one or more charge units (3071) to manage charge information corresponding to use of the program.

42. The method as claimed in claim 40 or 41, wherein the association set includes associating internal or external certification unit and charge unit with a function of the program.

43. A computer program comprising program code means that, when executed on a computer system, instructs an image processing apparatus to carry out the steps according to any one of claims 40 to 42.

44. A computer readable storage medium having recorded thereon program code means that, when executed on a computer system, instructs an image processing apparatus to carry out the steps according to any one of claims 40 to 42.
